Europäisches Patentamt

European Patent Office

Office européen des brevets

(19)

(11) **EP 1 533 953 A1**

(12) **EUROPEAN PATENT APPLICATION**
published in accordance with Art. 158(3) EPC

(43) Date of publication:
25.05.2005 Bulletin 2005/21

(51) Int Cl.⁷: **H04L 12/56**

(21) Application number: 03764191.7

(22) Date of filing: 14.07.2003

(86) International application number:
**PCT/JP2003/008918**

(87) International publication number:
**WO 2004/008699 (22.01.2004 Gazette 2004/04)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 12.07.2002 JP 2002204673
20.08.2002 JP 2002239465
19.02.2003 JP 2003041179

(71) Applicant: **NEC Corporation**
**Minato-ku, Tokyo 108-8001 (JP)**

(72) Inventors:
• **UMAYABASHI, Masaki**
**Tokyo 108-8001 (JP)**

• **TAKAGI, Kazuo**
**Tokyo 108-8001 (JP)**
• **HIDAKA, Youichi**
**Tokyo 108-8001 (JP)**
• **ENOMOTO, Nobuyuki**
**Tokyo 108-8001 (JP)**
• **IWATA, Atsushi**
**Tokyo 108-8001 (JP)**
• **SHIBUTANI, Makoto**
**Tokyo 108-8001 (JP)**

(74) Representative: **VOSSIUS & PARTNER**
**Siebertstrasse 4**
**81675 München (DE)**

(54) **FRAME TRANSFER METHOD AND NODE AND FRAME TRANSFER PROGRAM FOR USE ON NETWORK**

(57)    In frame transfer in a network for transferring an Ethernet(R) frame sent from a source on the network to a predetermined destination, to an applied Ethernet (R) frame, an expansion tag containing information about forwarding to an egress edge node to a host as a destination is added to make an expansion frame, and each node on the network relays the data frame based on the forwarding information of the added expansion tag to transfer the frame to the egress edge node.

FIG.23

EP 1 533 953 A1

**Description**

Field of the Invention

The present invention relates to a frame transfer method and a node in a network for transferring a data frame sent from a source on the network to a predetermined destination and, more particularly, to a frame transfer method and a node which realize reduction in the amount of memory required for an FDB of a node, as well as realizing high-speed switching.

Description of the Related Art

With the increase in data system traffic whose representative is IP, conventional communication service providers (hereinafter referred to as carrier) which provide transmission services mainly for voice are demanded to more efficiently transmit data at low costs. Ethernet(R) technique is one of transmission means which satisfy these demands and whose application has been expanded from LAN to public networks.

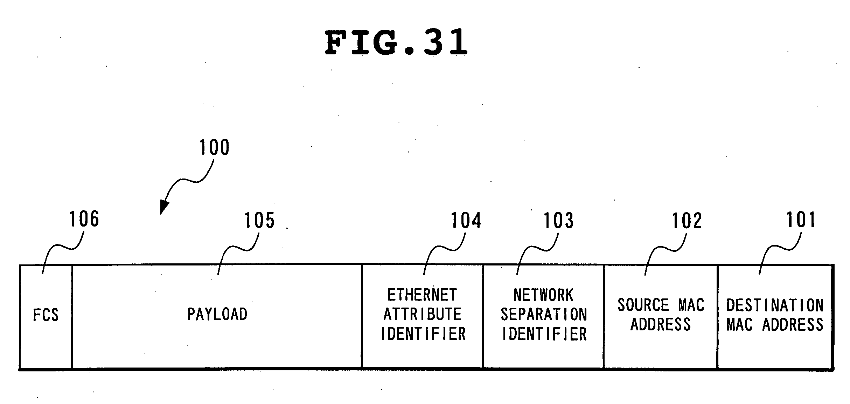

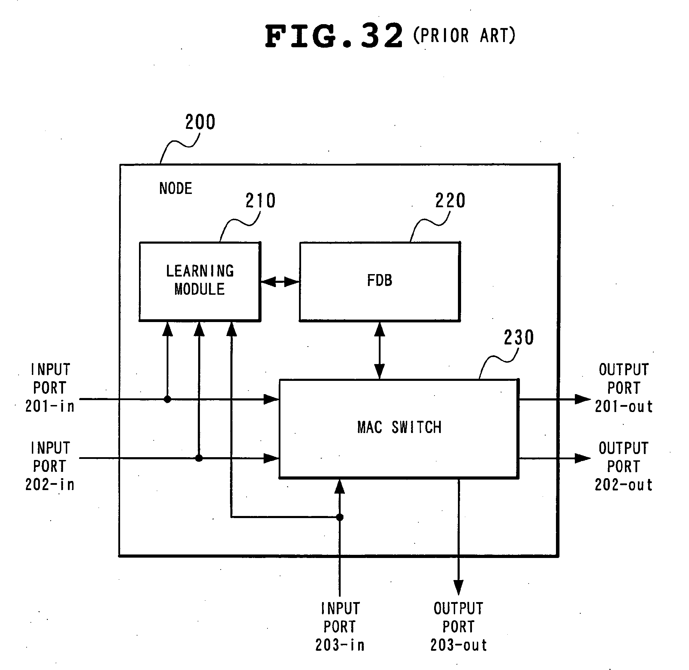

With reference to Figs. 31 and 32, description will be made of an Ethernet(R) frame conformed to IEEE802.1q and a frame transmission method conformed to IEEE802.1d.

Fig. 31 shows a structure of an Ethernet(R) frame. An Ethernet(R) frame 100 is formed of a destination MAC address 101, a source MAC address 102, a network separation identifier 103, an Ethernet(R) attribute identifier 104, a payload 105 and a Frame Check Sequence (FCS) 106. Stored in the destination MAC address 101 and the source MAC address 102 are a destination MAC address and a source MAC address of the Ethernet(R) frame 100. The source/destination MAC addresses are addresses inherent to a hardware interface which are made of 48 bits independent of geographical factors and network structure factors. Stored in the network separation identifier 103 is a VLAN-tag (Virtual LAN-tag) for logically separating a network.

Stored in the Ethernet(R) attribute identifier 104 is a type indicating an attribute of data stored in the payload or information indicating a frame length of the Ethernet(R) frame 100. The network separation identifier 103 is omitted in some cases. In the following description, frames including these Ethernet(R) frames will be referred to as the Ethernet(R) frame 100 unless described otherwise.

Fig. 32 shows a node 200 for switching the Ethernet(R) frame 100 illustrated in Fig. 31. The node 200 is formed of a learning module 210, a filtering data base (hereinafter referred to as FDB) 220 and a MAC switch (packet switch) 230. An input port 201-in and an output port 201-out, an input port 202-in and an output port 202-out, and an input port 203-in and an output port 203-out are each assumed to be one pair of bidirectional ports.

After being snooped by the learning module 210, the Ethernet(R) frame 100 from the input ports 201-in, 202-in and 203-in is transferred to the MAC switch 230. The learning module 210 learns MAC address information stored in the source MAC address 102 of the input Ethernet(R) frame 100, network separation information stored in the network separation identifier 103 and the output ports 201-out, 202-out and 203-out which are bidirectional pairs with the input ports 201-in, 202-in and 203-in and registers these information correlated with each other in the FDB 220.

The MAC switch 203 obtains output port information related to MAC address information of the destination MAC address 101 of the input Ethernet(R) frame 100 or related to the MAC address information of the destination MAC address 101 and network separation information of the network separation identifier 103 and transfers the frame to a port corresponding to the obtained output port information.

By thus transferring to an appropriate output port by the node 200 by using the destination MAC address 101, the source MAC address 102 and the network separation identifier 103 of the Ethernet(R) frame 100, the Ethernet(R) frame 100 will be transferred to a desired destination terminal.

As described in the foregoing, a node of an existing Ethernet(R) determines an output port of an input Ethernet(R) frame based on destination MAC address information represented by 48 bits. Since a MAC address is an address inherent to a hardware interface and unrelated to geological factors/network structure factors, the FDB requires an entry for every host to increase the amount of memory of the FDB.

In addition, when determining an output port, search by 48-bit complete matching is required, which limits a switching speed.

An object of the present invention is to provide a frame transfer method and a node which enable drastic reduction in the amount of memory required for an FDB of the node in a network.

Another object of the present invention is to provide a frame transfer method and a node which enable higher-speed forwarding by simplifying/speeding up search than by forwarding destination search by conventional complete matching of a destination MAC address.

A further object of the present invention is to provide a frame transfer method and a node which realize frame transfer without deteriorating affinity and connectability with an existing node.

## SUMMARY OF THE INVENTION

According to the first aspect of the invention, a frame transfer method in a network for transferring a data frame sent from a source on the network to a predetermined destination, comprising the steps of

adding, to applied the data frame, an expansion tag containing information about forwarding to an egress edge node to the destination to make an expansion frame, and relaying the data frame based on the forwarding information of the added expansion tag to transfer the frame to the egress node by each node on the network.

According to the second aspect of the invention, a frame transfer method in a network for transferring a data frame sent from a source on the network to a predetermined destination, comprising the steps of

adding, to applied the data frame, an expansion tag containing information about forwarding to an egress edge node to the destination and information about customers to which the source and the destination belong to make an expansion frame, and

relaying the data frame based on the forwarding information of the added expansion tag to transfer the frame to the egress node by each node on the network.

According to another aspect of the invention, a frame transfer method in a network for transferring a data frame sent from a source on the network to a predetermined destination, comprising the steps of

when applied the data frame is a frame to be broadcast, adding, to the data frame, an expansion tag containing information about forwarding of an ingress node having received the frame to make an expansion frame, and relaying the data frame based on the forwarding information of the added expansion tag to transfer the frame to each node on the network by each node on the network.

In the preferred construction, the frame to be broadcast is set to be a frame whose output destination node is unknown.

In another preferred construction, at an ingress node of the source of the data frame on the network, the expansion tag is generated based on network information of the data frame and generated the expansion tag is added to make the expansion frame.

In another preferred construction, at the egress node on the network, the expansion tag is deleted from the expansion frame to make the data frame and the data frame is transferred to the transfer destination.

In another preferred construction, the data frame is an Ethernet(R) frame.

In another preferred construction, a VLAN tag of the Ethernet(R) frame is replaced by the expansion tag to make the expansion frame.

In another preferred construction, the expansion tag is inserted immediately after a source MAC address of the Ethernet(R) frame to make the expansion frame.

In another preferred construction, when the Ethernet(R) frame fails to have the VLAN tag, the expansion tag is added between a source MAC address and Ethernet(R) attribute information to make the expansion frame.

In another preferred construction, the forwarding information is identification information composed of identifier information of the egress node or label information for reaching the egress node.

In another preferred construction, the forwarding information is identification information composed of identifier information of the egress node or label information for reaching the egress node and additionally identifier information of the ingress node.

In another preferred construction, the forwarding information is identification information composed of identifier information of the ingress node.

According to another aspect of the invention, a frame transfer method in a network for transferring a data frame sent from a source on the network to a predetermined destination, comprising the steps of

applying a data frame with a VLAN tag added onto the network by an ingress node of the source, and broadcast-transferring the data frame along a broadcast path based on information stored in the VLAN tag to transfer the frame to the egress node by each node on the network.

In the preferred construction, a range of tag values added to the data frame is divided into a range of a value for use as forwarding information of the expansion tag and a range of a value for use as the VLAN.

In another preferred construction, when a value of a tag added to the data frame is within the range of a value for use as the expansion tag, transfer is conducted based on the forwarding information of the expansion tag and when the value is within the range of a value for use as the VLAN tag, broadcast-transfer is conducted based on the information of the VLAN tag.

In another preferred construction, the range of a value for the VLAN tag is further divided into a plurality of ranges to set a broadcast path for each of the plurality of ranges.

In another preferred construction, a length of the expansion tag is 32 bits and a length of a storage region of the expansion tag is an integral multiple of 32 bits.

In another preferred construction, the ingress node in the network has a table which makes an address of the transfer destination and identification information of the egress node correspond with each other and a table which makes identification information of the egress node and output port information correspond with each other,

a core node in the network has a table which makes identification information of the egress node and output port information correspond with each other, and the egress node has a table which makes an address of the transfer destination and output port information correspond with each other and a table which makes identification information of the egress node and output port information correspond with each other.

In another preferred construction, the ingress node in the network has a table which makes an address of the transfer destination and identification information of the egress node correspond with each other, a table which makes identification information of the egress node and output port information correspond with each other, and a table which makes identification information of the ingress node and one or a plurality of output port information correspond with each other,

a core node in the network has a table which makes identification information of the egress node and output port information correspond with each other and a table which makes identification information of the ingress node and one or a plurality of output port information correspond with each other, and the egress node has a table which makes an address of the transfer destination and output port information correspond with each other, a table which makes identification information of the egress node and output port information correspond with each other and a table which makes identification information of the ingress node and one or a plurality of output port information correspond with each other.

In another preferred construction, identification information of the ingress node is an existing VLAN tag value or a group identifier obtained by grouping a part of existing VLAN tags or a group identifier obtained by grouping all the existing VLAN tags.

In another preferred construction, the ingress node in the network has a table which makes an address of the transfer destination, identification information of the egress node and customer information of the transfer destination correspond with each other and a table which makes identification information of the egress node and output port information correspond with each other,

a core node in the network has a table which makes identification information of the egress node and output port information correspond with each other, and the egress node has a table which makes customer information of the transfer destination and output port information correspond with each other and a table which makes identification information of the egress node and output port information correspond with each other.

According to another aspect of the invention, a network in which a plurality of nodes are connected with each other by a link, wherein

a part of nodes in physical connection of the network are grouped into domains to make a higher-stage hierarchical network for the physical connection, a part of domains in the hierarchical network are grouped into higher-order domains to make a higher-stage hierarchical network for the hierarchical network, and structure of the hierarchical network has an arbitrary number of hierarchies.

In the preferred construction, located at a boundary between the domains is a link.

In another preferred construction, located at a boundary between the domains is a node.

In another preferred construction, located at a boundary between the domains are a link and a node together.

According to another aspect of the invention, a frame transfer method in a network for transferring a data frame sent from a source on the network to a predetermined destination, comprising the steps of

grouping a part of nodes in physical connection of the network into domains to make a higher-stage hierarchical network for the physical connection, and grouping a part of domains in the hierarchical network into higher-order domains to make a higher-stage hierarchical network for the hierarchical network, thereby forming the hierarchical network into a hierarchical network having an arbitrary number of hierarchies, and adding, to applied the data frame, an expansion tag containing information about forwarding to an egress edge node to the destination to make an expansion frame, and relaying the data frame based on the forwarding information of the added expansion tag to transfer the frame to the egress node by each node on the network.

In the preferred construction, in an ingress node of a source of the data frame on the hierarchical network, the forwarding information includes identifier information of the egress node and identifier information of a domain in each hierarchy to which the egress node belongs, or additionally identifier information of the ingress node and identifier information of a domain in each hierarchy to which the ingress node belongs, and the forwarding information is stored in a plurality of expansion tags to make an expansion frame by adding the plurality of expansion tags.

In another preferred construction, in each node on the hierarchical network, the data frame is relayed based on the forwarding information stored in an expansion tag at the top of the plurality of expansion tags added.

In another preferred construction, in each node on the hierarchical network, when a connection destination of an output port determined based on the top expansion tag is in a different domain, after deleting the top expansion tag, the data frame is relayed to the determined output port.

In another preferred construction, in the egress node on the hierarchical network, after deleting the expansion tag from the expansion frame to make the data frame, the data frame is transferred to the transfer destination.

In another preferred construction, the ingress node in the hierarchical network has a table which makes an address of the transfer destination, identification information of the egress node and identification information of each domain to which the egress node belongs correspond with each other, and a table which makes identification information of the egress node, identification information of a domain in each hierarchy to which the egress node belongs and output port information correspond with each other, a core node in the hierarchical network has a table which makes identification information of the egress node, identification information of a domain in each hierarchy to which the egress node belongs and output port information correspond with each other, and the egress node of the hierarchical network has a table which makes address information of the transfer destination and output port information correspond with each other, and a table which makes identification information of the egress node, identification information of a domain in each hierarchy to which the egress node belongs and output port information correspond with each other.

In another preferred construction, the core node in the hierarchical network, when a connection destination node of an output port is in a different domain, additionally has a special flag as output port information.

In another preferred construction, each the node in the hierarchical network additionally has a special flag as output port information for node identification information of each node itself or for domain identification information of a domain to which the node itself belongs.

In another preferred construction, the expansion tag is formed of an expansion tag identification region and an information storage region, and stored in the expansion tag identification region is at least one of:

1) a forwarding tag indication bit indicating whether in the expansion tag storage region there exists an expansion tag other than a forwarding information tag in which transfer information of a frame with an expansion tag is stored,
2) a region end point indication bit indicative of an expansion tag accommodated at the end of the expansion tag storage region,
3) a reservation bit prepared for future expansion of functions,
4) a VLAN tag/expansion tag indication bit for expressing an expansion tag,
5) a tag type display region for displaying a kind of expansion tag, and
6) TTL (Time to Live) for counting the number of hops of the frame with an expansion tag,
    or additionally a frame control information storage region in which a check code for checking an error of the expansion tag is stored.

In another preferred construction, the expansion tag is formed of an expansion tag identification region and an information storage region, and stored in the expansion tag identification region is at least one of:

1) a forwarding tag indication bit indicating whether in the expansion tag storage region there exists an expansion tag other than a forwarding information tag in which transfer information of a frame with an expansion tag is stored,
2) a region end point indication bit indicative of an expansion tag accommodated at the end of the expansion tag storage region, and
5) a tag type display region for displaying a kind of expansion tag.

In another preferred construction, the expansion tag is formed of an expansion tag identification region and an information storage region, the expansion tag identification region is located in the first half of the expansion tag and has a length of 16 bits, the information storage region is located in the first half of the expansion tag and has a length of 16 bits, and stored in the expansion tag identification region are:

1) a forwarding tag indication bit indicating whether in the expansion tag storage region there exists an expansion tag other than a forwarding information tag in which transfer information of a frame with an expansion tag is stored,
2) a region end point indication bit indicative of an expansion tag accommodated at the end of the expansion tag storage region,
3) a reservation bit prepared for future expansion of functions,
4) a VLAN tag/expansion tag indication bit whose value expressing an expansion tag is fixed to 1,
5) a 4- bit tag type display region for displaying a kind of expansion tag, and
6) 8-bit TTL (Time to Live) for counting the number of hops of the frame with an expansion tag,
    the VLAN tag/expansion tag indication bit being stored at a position of the second to fourth bits from the top of the expansion tag identification region.

In another preferred construction, the expansion tag is formed of an expansion tag identification region and an information storage region, the expansion tag identification region is located in the first half of the expansion tag and has a length of 16 bits, the information storage region is located in the first half of the expansion tag and has a length of 16 bits, and stored in the expansion tag identification region are:

1) a forwarding tag indication bit indicating whether in the expansion tag storage region there exists an expansion tag other than a forwarding information tag in which transfer information of a frame with an expansion tag is stored,

2) a region end point indication bit indicative of an expansion tag accommodated at the end of the expansion tag storage region,

3) a reservation bit prepared for future expansion of functions,

4) a VLAN tag/expansion tag indication bit whose value expressing an expansion tag is fixed to 1,

5) a 3-bit tag type display region for displaying a kind of expansion tag, and

6) 8-bit TTL (Time to Live) for counting the number of hops of the frame with an expansion tag,
    the VLAN tag/expansion tag indication bit being stored at a position of the second to fifth bits from the top of the expansion tag identification region.

In another preferred construction, when including the forwarding information, the expansion tag is formed of an expansion tag identification region and an information storage region, and stored in the information storage region are an address type region for storing a kind of forwarding information tag in which transfer information of a frame is stored and an address region for storing transfer information of a frame.

In another preferred construction, the expansion tag selectively includes
    protection information including failure information at the time of occurrence of a failure and protection path information for recovering from a failure, quality information including a packet loss rate, frame arrival time into the network and bandwidth control information, frame control information including a time to live of a frame in the network and information about error detection, security information including information for ensuring reliability of a frame and secrecy at the time of setting up the network or at the time of changing a network structure, and user expansion information including information arbitrarily defined by a user.

In another preferred construction, the expansion tag selectively includes
    forwarding information for transferring a frame to an egress edge node to a destination, broadcast forwarding information for transferring a frame to be broadcast to all the nodes on the network, customer separation information for discriminating customers to which a destination and a source of a frame belong, OAM & P information for operating and managing the network, the protection information, the quality information, the frame control information, the security information and the user expansion information.

In another preferred construction, the expansion tag includes the forwarding information, the broadcast forwarding information, the customer separation information and the OAM&P information.

In another preferred construction, the expansion tag is formed of an expansion tag identification region and an information storage region, stored in the expansion tag identification region is 0x8100 which is a value of TPID prescribed by IEEE802.1Q or 0x9100 not prescribed or other value, and the information storage region is formed of a priority region prescribed by IEEE802.1Q, a CFI region and an expansion tag information storage region for storing information of the expansion tag.

In another preferred construction, the expansion tag is formed of an expansion tag identification region and an information storage region, the expansion tag identification region is located in the first half of the expansion tag and has a length of 16 bits and the information storage region is located in the latter half of the expansion tag and has a length of 16 bits, stored in the expansion tag identification region is 0x8100 which is a value of TPID prescribed by IEEE802.1Q or 0x9100 not prescribed or other value, and the information storage region is formed of a priority region prescribed by IEEE802.1Q, a CFI region and an expansion tag information storage region for storing information of the expansion tag.

In another preferred construction, in the priority region of the information storage region, priority prescribed by IEEE802.1p is assigned to a part of priority values and to the remaining priority values, identification information of the expansion tag is assigned.

In another preferred construction, in the priority region of the information storage region, priority prescribed by IEEE802.1p is assigned to four priority values and to the remaining four priority values, identification information of the expansion tag is assigned.

In another preferred construction, in the priority region of the information storage region, priority prescribed by IEEE802.1p is assigned to the priority values of 111, 101, 011 and 010 and to the priority values of 001, 000, 110 and 100, identification information of the expansion tag is assigned.

In another preferred construction, among the priority values of the information storage region, 001 is information for discriminating the forwarding tag, 000 is information for discriminating the broadcast forwarding tag, 110 is information for discriminating a customer separation tag, and 100 is information for discriminating an OAM&P tag.

According to another aspect of the invention, a node in a network for transferring a data frame sent from a source on the network to a predetermined destination, comprising
    frame processing element which adds, to applied the data frame, an expansion tag containing information about forwarding to an egress edge node to the destination to make an expansion frame, and switch element which receives

6

the expansion frame to transfer the frame to a path to the egress node based on the forwarding information of the expansion tag.

According to another aspect of the invention, a node in a network for transferring a data frame sent from a source on the network to a predetermined destination, comprising

frame processing element which adds, to the data frame, an expansion tag containing information about forwarding of an ingress node which has received the frame to make an expansion frame, when applied the data frame is a frame to be broadcast, and switch element which receives the expansion frame to transfer the frame to a path to each node on the network based on the forwarding information of the expansion tag.

According to another aspect of the invention, a node in a network for transferring a data frame sent from a source on the network to a predetermined destination, comprising

frame processing element which adds, to applied the data frame, an expansion tag containing information about forwarding to an egress edge node to the destination and customer information of the destination to make an expansion frame, and switch element which receives the expansion frame to transfer the frame to a path to the egress node based on the forwarding information of the expansion tag.

According to another aspect of the invention, a node in a network for transferring a data frame sent from a source on the network to a predetermined destination, comprising

frame processing element which adds, to applied the data frame, a plurality of expansion tags containing information about forwarding to an egress edge node to the destination to make an expansion frame, and switch element which receives the expansion frame to transfer the frame to a path to the egress node based on the forwarding information of the expansion tag located at the top.

According to another aspect of the invention, a node in a network for transferring a data frame sent from a source on the network to a predetermined destination, comprising

when applied the data frame is a frame to be broadcast, adding a plurality of expansion tags containing information about forwarding of an ingress node having received the frame to make an expansion frame, and switch element which receives the expansion frame to transfer the frame to a path to each node on the network based on the forwarding information of the expansion tag located at the top.

According to another aspect of the invention, a node in a network for transferring a data frame sent from a source on the network to a predetermined destination, comprising

frame processing element which adds, to applied the data frame, a plurality of expansion tags containing information about forwarding to an egress edge node to the destination to make an expansion frame, and switch element which receives the expansion frame to transfer the frame to a path to the egress node based on the forwarding information of the expansion tag located at the top and when the forwarding information of the top expansion tag indicates that a node at the next hop belongs to a different domain, transfer the frame to a path to a deletion circuit.

According to another aspect of the invention, a node in a network for transferring a data frame sent from a source on the network to a predetermined destination, comprising

frame processing element which adds, to applied the data frame, a plurality of expansion tags containing information about forwarding to an egress edge node to the destination to make an expansion frame, and switch element which receives the expansion frame to transfer the frame to a path to the egress node based on the forwarding information of the expansion tag located at the top and when the forwarding information of the top expansion tag coincides with identification information of the node itself or of a domain to which the node itself belongs, transfer the frame to a path to a deletion circuit.

According to another aspect of the invention, a node in a network for transferring a data frame sent from a source on the network to a predetermined destination, comprising

switch element which receives an expansion frame with an expansion tag including information about forwarding to an egress edge node to the destination added to applied.the data frame to transfer the frame to a path to the egress node based on the forwarding information of the expansion tag.

According to another aspect of the invention, a node in a network for transferring a data frame sent from a source on the network to a predetermined destination, comprising

switch element which receives an expansion frame with an expansion tag including forwarding information of an ingress edge node which has received the frame added to applied the data frame to transfer the frame to a path to each node on the network based on the forwarding information of the expansion tag.

According to another aspect of the invention, a node in a network for transferring a data frame sent from a source on the network to a predetermined destination, comprising

switch element which receives applied the data frame to transfer the frame to a path to each node on the network based on information of a VLAN tag of the data frame.

According to another aspect of the invention, a node in a network for transferring a data frame sent from a source on the network to a predetermined destination, comprising

switch element which, when receiving an expansion frame with an expansion tag including forwarding information of an ingress edge node which has received the frame added to applied the data frame, transfers the frame to a path to each node on the network based on the forwarding information of the expansion tag and when receiving a data frame with the VLAN tag added, transfers the frame to a path to each node on the network based on information of a VLAN tag of the data frame.

According to another aspect of the invention, a node in a network for transferring a data frame sent from a source on the network to a predetermined destination, comprising

switch element which receives an expansion frame with an expansion tag including information about forwarding to an egress edge node to the destination and customer information of the destination added to applied the data frame to transfer the frame to a path to the egress node based on the forwarding information of the expansion tag.

According to another aspect of the invention, a node in a network for transferring a data frame sent from a source on the network to a predetermined destination, comprising

switch element which receives an expansion frame with a plurality of expansion tags including information about forwarding to an egress edge node to the destination added to applied the data frame to transfer the frame to a path to the egress node based on the forwarding information of the expansion tag located at the top.

According to another aspect of the invention, a node in a network for transferring a data frame sent from a source on the network to a predetermined destination, comprising

switch element which receives an expansion frame with a plurality of expansion tags including forwarding information of an ingress edge node which has received the frame added to applied the data frame to transfer the frame to a path to each node on the network based on the forwarding information of the expansion tag located at the top.

According to another aspect of the invention, a node in a network for transferring a data frame sent from a source on the network to a predetermined destination, comprising

switch element which receives an expansion frame with a plurality of expansion tags including information about forwarding to an egress edge node to the destination added to applied the data frame to transfer the frame to a path to the egress node based on the forwarding information of the expansion tag located at the top and when the forwarding information of the top expansion tag indicates that a node at the next hop belongs to a different domain, transfer the frame to a path to a deletion circuit.

According to another aspect of the invention, a node in a network for transferring a data frame sent from a source on the network to a predetermined destination, comprising

switch element which receives an expansion frame with a plurality of expansion tags including information about forwarding to an egress edge node to the destination added to applied the data frame to transfer the frame to a path to the egress node based on the forwarding information of the expansion tag located at the top and when the forwarding information of the top expansion tag coincides with identification information of the node itself or of a domain to which the node itself belongs, transfer the frame to a path to a deletion circuit.

In the preferred construction, the frame processing element including, a frame attribute detector for extracting frame attribute information of applied the data frame to an input port of the node, an expansion tag generator for generating the expansion tag based on the frame attribute information, and a frame converter for adding generated the expansion tag to applied the data frame to convert the frame into an expansion frame.

In another preferred construction, the expansion tag generator includes

a correspondence information table in which information about correspondence between frame attribute information generated by the frame attribute detector and network information, and an expansion tag generation unit for, after reading network information corresponding to the frame attribute information from the correspondence information table based on the frame attribute information, generating an expansion tag based on the network information.

In another preferred construction, the frame converter, when a data frame applied to an input port of the node is an Ethernet(R) frame, inserts the expansion tag after the destination MAC address.

In another preferred construction, the frame converter includes

an expansion tag separation unit for, when the data frame is an Ethernet(R) frame, separating the expansion tag from the expansion frame transferred from the frame switch, and an FCS calculation unit for recalculating an FCS of the Ethernet(R) frame transferred from the expansion tag separation unit to rewrite the FCS.

In another preferred construction, the node further comprises an expansion tag deletion circuit for deleting the expansion tag included in the frame with an expansion tag to output the frame as a data frame.

In another preferred construction, the expansion tag deletion circuit includes

an expansion tag separation unit for separating the expansion tag from the expansion frame, and an FCS calculation unit for recalculating an FCS of the Ethernet(R) frame transferred from the expansion tag separation unit to rewrite the FCS.

In another preferred construction, the switch element including, a frame forwarding unit for receiving an expansion frame transferred from the frame processing element to obtain output port information based on network information stored in an expansion tag in the expansion frame, and a packet switch unit for receiving an expansion frame and the output port information transferred from the frame forwarding unit to output the frame with an expansion tag to a port as set forth in the output port information.

In another preferred construction, the frame forwarding unit includes

an expansion tag information table indicative of correspondence between forwarding information in an expansion tag of the expansion frame received and output port information of the packet switch, and a forwarding path search unit for extracting forwarding information from an expansion tag of the expansion frame received and referring to the expansion tag information table to obtain output port information from the forwarding information.

In another preferred construction, the forwarding information is identification information composed of identifier information of the egress node or label information for reaching the egress node.

In another preferred construction, the forwarding information is identification information composed of identifier information of the egress node or label information for reaching the egress node and additionally identifier information of the ingress node.

In another preferred construction, the forwarding information is identification information composed of identifier information of the ingress node.

In another preferred construction, the forwarding information is identification information composed of identifier information of the egress node and identifier information of a domain in each hierarchy to which the node belongs or label information for reaching the egress node.

In another preferred construction, the ingress node in the network has a table which makes an address of the transfer destination and identification information of the egress node correspond with each other and a table which makes identification information of the egress node and output port information correspond with each other, a core node in the network has a table which makes identification information of the egress node and output port information correspond with each other, and the egress node has a table which makes an address of the transfer destination and output port information correspond with each other and a table which makes identification information of the egress node and output port information correspond with each other.

In another preferred construction, the ingress node in the network has a table which makes an address of the transfer destination and identification information of the egress node correspond with each other, a table which makes identification information of the egress node and output port information correspond with each other, and a table which makes identification information of the ingress node and one or a plurality of output port information correspond with each other, a core node in the network has a table which makes identification information of the egress node and output port information correspond with each other and a table which makes identification information of the ingress node and one or a plurality of output port information correspond with each other, and the egress node has a table which makes an address of the transfer destination and output port information correspond with each other, a table which makes identification information of the egress node and output port information correspond with each other and a table which makes identification information of the ingress node and one or a plurality of output port information correspond with each other.

In another preferred construction, identification information of the ingress node is an existing VLAN tag value or a group identifier obtained by grouping a part of existing VLAN tags or a group identifier obtained by grouping all the existing VLAN tags.

In another preferred construction, the ingress node in the network has a table which makes an address of the transfer destination, identification information of the egress node and customer information of the transfer destination correspond with each other and a table which makes identification information of the egress node and output port information correspond with each other, a core node in the network has a table which makes identification information of the egress node and output port information correspond with each other, and the egress node has a table which makes customer information of the transfer destination and output port information correspond with each other and a table which makes identification information of the egress node and output port information correspond with each other.

In another preferred construction, the ingress node in the network has a table which makes an address of the transfer destination, identification information of the egress node and identification information of a domain in each hierarchy to which the node belongs correspond with each other, and a table which makes identification information of the egress node, identification information of a domain in each hierarchy to which the node belongs and output port information correspond with each other,

a core node in the network has a table which makes identification information of the egress node, identification information of a domain in each hierarchy to which the node belongs and output port information correspond with each other, and the egress node has a table which makes an address of the transfer destination and output port information correspond with each other, and a table which makes identification information of the egress node, identification information of a domain in each hierarchy to which the node belongs and output port information correspond with each other.

According to another aspect of the invention, in a network for transferring a data frame sent from a source on the network to a predetermined destination, a frame transfer program executed on a node in the network for controlling transfer of the data frame, comprising the functions of

adding, to applied the data frame, an expansion tag containing information about forwarding to an egress edge node to the destination to make an expansion frame, and receiving the expansion frame to transfer the frame to a path to the egress node based on the forwarding information of the expansion tag.

According to another aspect of the invention, in a network for transferring a data frame sent from a source on the network to a predetermined destination, a frame transfer program executed on a node in the network for controlling transfer of the data frame, comprising the functions of

when applied the data frame is a frame to be broadcast, adding an expansion tag containing information about forwarding of an ingress node having received the frame to make an expansion frame, and receiving the expansion frame to transfer the frame to a path to each node on the network based on the forwarding information of the expansion tag.

According to another aspect of the invention, in a network for transferring a data frame sent from a source on the network to a predetermined destination, a frame transfer program executed on a node in the network for controlling transfer of the data frame, comprising the functions of

adding, to applied the data frame, an expansion tag containing information about forwarding to an egress edge node to the destination and customer information of the destination to make an expansion frame, and receiving the expansion frame to transfer the frame to a path to the egress node based on the forwarding information of the expansion tag.

According to another aspect of the invention, In a network for transferring a data frame sent from a source on the network to a predetermined destination, a frame transfer program executed on a node in the network for controlling transfer of the data frame, comprising the functions of

adding, to applied the data frame, a plurality of expansion tags containing information about forwarding to an egress edge node to the destination to make an expansion frame, and receiving the expansion frame to transfer the frame to a path to the egress node based on the forwarding information of the expansion tag located at the top.

According to another aspect of the invention, in a network for transferring a data frame sent from a source on the network to a predetermined destination, a frame transfer program executed on a node in the network for controlling transfer of the data frame, comprising the functions of

when applied the data frame is a frame to be broadcast, adding a plurality of expansion tags containing information about forwarding of an ingress node having received the frame to make an expansion frame, and receiving the expansion frame to transfer the frame to a path to each node on the network based on the forwarding information of the expansion tag located at the top.

According to another aspect of the invention, in a network for transferring a data frame sent from a source on the network to a predetermined destination, a frame transfer program executed on a node in the network for controlling transfer of the data frame, comprising the functions of

adding, to applied the data frame, a plurality of expansion tags containing information about forwarding to an egress edge node to the destination to make an expansion frame, receiving the expansion frame to transfer the frame to a path to the egress node based on the forwarding information of the expansion tag located at the top, and when the forwarding information of the top expansion tag indicates that a node at the next hop belongs to a different domain, transferring the frame to a path to a deletion circuit.

According to another aspect of the invention, in a network for transferring a data frame sent from a source on the network to a predetermined destination, a frame transfer program executed on a node of the network for controlling transfer of the data frame, comprising the functions of

adding, to applied the data frame, a plurality of expansion tags containing information about forwarding to an egress edge node to the destination to make an expansion frame, receiving the expansion frame to transfer the frame to a path to the egress node based on the forwarding information of the expansion tag located at the top, and when the forwarding information of the top expansion tag coincides with identification information of the node itself or of a domain to which the node itself belongs, transferring the frame to a path to a deletion circuit.

According to another aspect of the invention, in a network for transferring a data frame sent from a source on the network to a predetermined destination, a frame transfer program executed on a node in the network for controlling transfer of the data frame, comprising the function of

receiving an expansion frame with an expansion tag including information about forwarding to an egress edge node to the destination added to applied the data frame to transfer the frame to a path to the egress node based on the forwarding information of the expansion tag.

According to another aspect of the invention, in a network for transferring a data frame sent from a source on the network to a predetermined destination, a frame transfer program executed on a node in the network for controlling transfer of the data frame, comprising the function of

receiving an expansion frame with an expansion tag including forwarding information of an ingress edge node which has received the frame added to applied the data frame to transfer the frame to a path to each node on the network based on the forwarding information of the expansion tag.

According to another aspect of the invention, in a network for transferring a data frame sent from a source on the network to a predetermined destination, a frame transfer program executed on a node in the network for controlling transfer of the data frame, comprising the function of

transferring the frame to a path to each node on the network based on information of a VLAN tag added to applied the data frame.

According to another aspect of the invention, in a network for transferring a data frame sent from a source on the network to a predetermined destination, a frame transfer program executed on a node in the network for controlling transfer of the data frame, comprising the function of

when receiving an expansion frame with an expansion tag including forwarding information of an ingress edge node which has received the frame added to applied the data frame, executing processing of transferring the frame to a path to each node on the network based on the forwarding information of the expansion tag and when receiving a data frame with the VLAN tag added, transferring the frame to a path to each node on the network based on information of the VLAN tag added to the data frame.

According to another aspect of the invention, in a network for transferring a data frame sent from a source on the network to a predetermined destination, a frame transfer program executed on a node in the network for controlling transfer of the data frame, comprising the function of

receiving an expansion frame with an expansion tag including information about forwarding to an egress edge node to the destination and customer information of the destination added to applied the data frame to transfer the frame to a path to the egress node based on the forwarding information of the expansion tag.

According to another aspect of the invention, in a network for transferring a data frame sent from a source on the network to a predetermined destination, a frame transfer program executed on a node in the network for controlling transfer of the data frame, comprising the function of

receiving an expansion frame with a plurality of expansion tags including information about forwarding to an egress edge node to the destination added to applied the data frame to transfer the frame to a path to the egress node based on the forwarding information of the expansion tag located at the top.

According to another aspect of the invention, in a network for transferring a data frame sent from a source on the network to a predetermined destination, a frame transfer program executed on a node in the network for controlling transfer of the data frame, comprising the function of

receiving an expansion frame with a plurality of expansion tags including forwarding information of an ingress edge node which has received the frame added to applied the data frame to transfer the frame to a path to each node on the network based on the forwarding information of the expansion tag located at the top.

According to another aspect of the invention, in a network for transferring a data frame sent from a source on the network to a predetermined destination, a frame transfer program executed on a node in the network for controlling transfer of the data frame, comprising the function of

receiving an expansion frame with a plurality of expansion tags including information about forwarding to an egress edge node to the destination added to applied the data frame to transfer the frame to a path to the egress node based on the forwarding information of the expansion tag located at the top and when the forwarding information of the top expansion tag indicates that a node at the next hop belongs to a different domain, transfer the frame to a path to a deletion circuit.

According to another aspect of the invention, in a network for transferring a data frame sent from a source on the network to a predetermined destination, a frame transfer program executed on a node in the network for controlling transfer of the data frame, comprising the function of

receiving an expansion frame with a plurality of expansion tags including information about forwarding to an egress edge node to the destination added to applied the data frame to transfer the frame to a path to the egress node based on the forwarding information of the expansion tag located at the top and when the forwarding information of the top expansion tag coincides with identification information of the node itself or of a domain to which the node itself belongs, transfer the frame to a path to a deletion circuit.

Other objects, features and advantages of the present invention will become clear from the detailed description given herebelow.

BRIEF DESCRIPTION OF THE DRAWINGS

Fig. 1 is a diagram showing an example of a structure of an Ethernet(R) frame with a conventional VLAN tag;
Fig. 2 is a diagram showing an example of a structure of an Ethernet(R) frame with an expansion tag according to the present invention;
Fig. 3 is a diagram showing another example of a structure of an Ethernet(R) frame with an expansion tag according to the present invention;

Fig. 4 is a diagram showing an example of arrangement of an expansion tag storage region of the present invention;

Fig. 5 is a diagram showing an example of arrangement of an expansion tag storage region of the present invention;

Fig. 6 is a diagram showing an example of arrangement of an expansion tag of the present invention;

Fig. 7 is a diagram showing an example of arrangement of an expansion tag identification region of the present invention;

Fig. 8 is a diagram showing an example of arrangement of a conventional VLAN tag;

Fig. 9 is a diagram showing an example of arrangement of an expansion tag information region of the present invention;

Fig. 10 is a diagram showing a structure of a node which generates and transfers an Ethernet(R) frame with an expansion tag according to a first mode of implementation of the present invention;

Fig. 11 is a diagram showing a structure of a node which generates and transfers an Ethernet(R) frame with an expansion tag according to a second mode of implementation of the present invention;

Fig. 12 is a diagram showing a structure of an expansion tag generation circuit according to the present invention;

Fig. 13 is a diagram showing arrangement of a frame attribute information/network information correspondence table according to the present invention;

Fig. 14 is a diagram showing a structure of an expansion tag deletion circuit according to the present invention;

Fig. 15 is a diagram showing a structure of an expansion tag processing circuit according to the present invention;

Fig. 16 is a diagram showing arrangement of an expansion tag information table according to the present invention;

Fig. 17 is a diagram showing a structure of an expansion tag frame switch according to the present invention;

Fig. 18 is a diagram showing a structure of an expansion tag forwarding unit of the present invention;

Fig. 19 is a diagram showing a structure of an expansion tag path search unit of the present invention;

Fig. 20 is a diagram showing a structure of another expansion tag forwarding unit of the present invention;

Fig. 21 is a diagram showing arrangement of a forward/network information table according to the present invention;

Fig. 22 is a diagram for use in explaining a conventional forwarding method;

Fig. 23 is a diagram for use in explaining a forwarding method according to the present invention;

Fig. 24 is a diagram showing arrangement of an Ethernet(R) frame with an expansion tag according to the present invention;

Fig. 25 is a diagram showing arrangement of the Ethernet(R) frame with an expansion tag according to the present invention;

Fig. 26 is a diagram showing arrangement of another Ethernet(R) frame with an expansion tag according to the present invention;

Fig. 27 is a diagram showing arrangement of a further Ethernet(R) frame with an expansion tag according to the present invention;

Fig. 28 is a diagram showing arrangement of an expansion tag of the present invention;

Fig. 29 is a diagram showing arrangement of an expansion tag information region of the present invention;

Fig. 30 is a diagram showing arrangement of another expansion tag information region of the present invention;

Fig. 31 is a diagram showing a structure of a standard Ethernet(R) frame according to a conventional technique;

Fig. 32 is a diagram showing a structure of a node which conducts conventional Ethernet(R) frame transfer;

Fig. 33 is a flow chart for use in explaining the contents of forwarding processing according to the present invention at an ingress edge node of a network;

Fig. 34 is a flow chart for use in explaining the contents of forwarding processing according to the present invention at a core node of the network;

Fig. 35 is a flow chart for use in explaining the contents of forwarding processing according to the present invention at an egress edge node of the network;

Fig. 36 is a diagram for use in explaining a forwarding method when using a customer separation tag of the present invention;

Fig. 37 is a flow chart of the ingress edge node in the forwarding method using the customer separation tag of the present invention;

Fig. 38 is a flow chart of the egress edge node in the forwarding method using the customer separation tag of the present invention;

Fig. 39 is a diagram showing a hierarchical network of the present invention;

Fig. 40 is a diagram showing another hierarchical network of the present invention;

Fig. 41 is a diagram showing a frame format in the hierarchical network of the present invention;

Fig. 42 is a diagram showing arrangement of a forwarding tag in the hierarchical network of the present invention;

Fig. 43 is a diagram for use in explaining a forwarding method in the hierarchical network of the present invention;

Fig. 44 is a diagram for use in explaining a forwarding method in other hierarchical network of the present invention;

Fig. 45 is a flow chart related to forwarding processing of an ingress edge node in the hierarchical network of the present invention;

Fig. 46 is a flow chart related to forwarding processing of a core node in the hierarchical network of the present invention;

Fig. 47 is a flow chart related to forwarding processing of an egress edge node in the hierarchical network of the present invention;

Fig. 48 is a diagram showing a structure of a node in the hierarchical network of the present invention;

Fig. 49 is a diagram showing a frame format in a hierarchical network having three or more hierarchies according to the present invention;

Fig. 50 is a diagram showing a format of another expansion tag according to the present invention.

Fig. 51 is a diagram showing a conventional broadcast transfer method;

Fig. 52 is a diagram showing a broadcast transfer method according to the present invention;

Fig. 53 is a flow chart related to broadcast transfer processing of an ingress edge node according to the present invention;

Fig. 54 is a flow chart related to broadcast transfer processing of a core node according to the present invention;

Fig. 55 is a flow chart related to broadcast transfer processing of an egress edge node according to the present invention; and

Fig. 56 is a diagram showing a frame transfer method executed when an Ethernet(R) frame with an expansion tag according to the present invention and an Ethernet(R) frame with an ordinary VLAN tag exist together.

DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

In the following, modes of implementation according to the present invention will be described in detail with reference to the drawings.

(Arrangement of First Frame with Expansion Tag)

Description will be made of a first frame format for use in a frame transmission method according to the present invention.

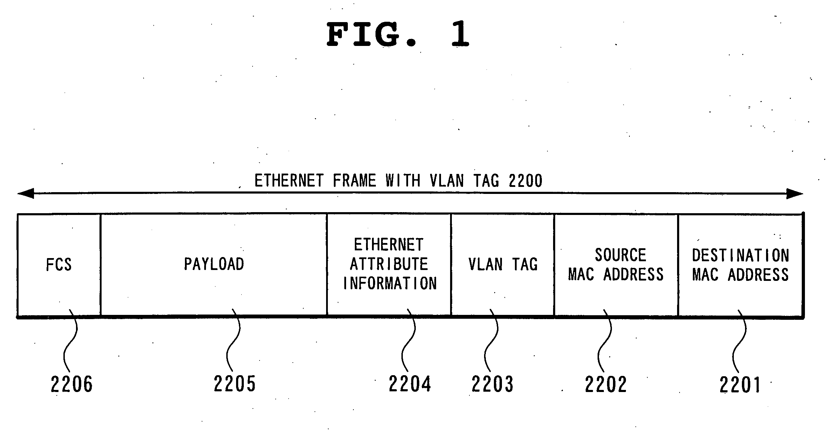

Fig. 1 shows a format of an Ethernet(R) frame with a VLAN tag prescribed by IEEE 802.1Q. An Ethernet(R) frame with a VLAN tag 2200 is formed of a destination MAC address 2201, a source MAC address 2202, a VLAN tag 2203, an Ethernet(R) attribute information 2204, a payload 2205 and an FCS 2206.

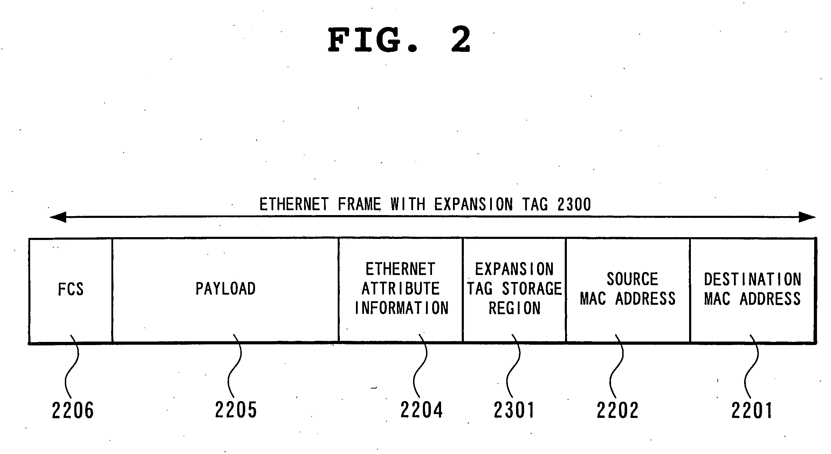

On the other hand, Fig. 2 shows a format of an Ethernet(R) frame with an expansion tag of the present invention. An Ethernet(R) frame with an expansion tag 2300 is formed of the destination MAC address 2201, the source MAC address 2202, an expansion tag storage region 2301, the Ethernet(R) attribute information 2204, the payload 2205 and the FCS 2206, in which the VLAN tag 2203 of the existing Ethernet(R) frame with a VLAN tag 2200 is replaced by the expansion tag storage region 2301.

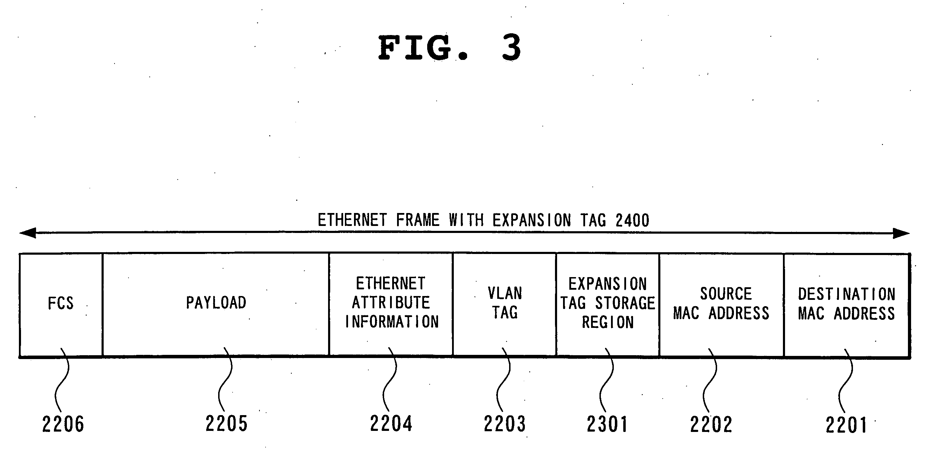

As shown in Fig. 3, there also exists an Ethernet(R) frame with an expansion tag 2400 having another arrangement, which is formed of the destination MAC address 2201, the source MAC address 2202, the expansion tag storage region 2301, the VLAN tag 2203, the Ethernet(R) attribute information 2204, the payload 2205 and the FCS 2206 and in which the expansion tag storage region 2301 is inserted after the source MAC address 2202.

The expansion tag storage region 2301 is capable of storing one or a plurality of expansion tags. Size of the expansion tag is 4-byte, which is the same size as that of the VLAN tag 2203. Expansion tags at the highest stage of the Ethernet(R) frames with an expansion tag 2300 and 2400 and the VLAN tag of the Ethernet(R) frame with a VLAN tag 2200 are stored in the same size at the same position and discrimination thereof is made by changing a value stored in higher-order two bytes of each tag (whose details will be described later).

This arrangement makes the Ethernet(R) frames with an expansion tag 2300 and 2400 have compatibility with the Ethernet(R) frame with a VLAN tag 2200 to enable both an existing node and an expansion-tag-compatible node to process either frame.

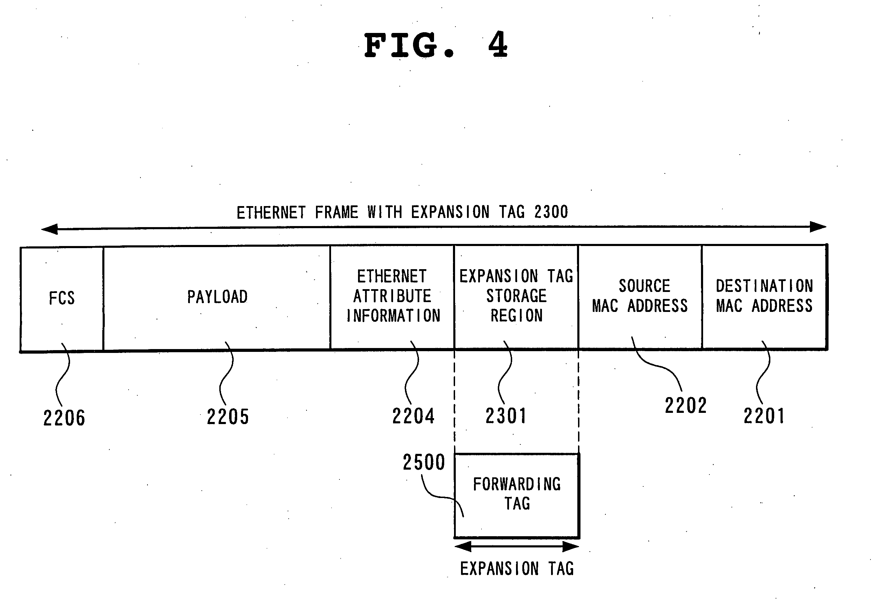

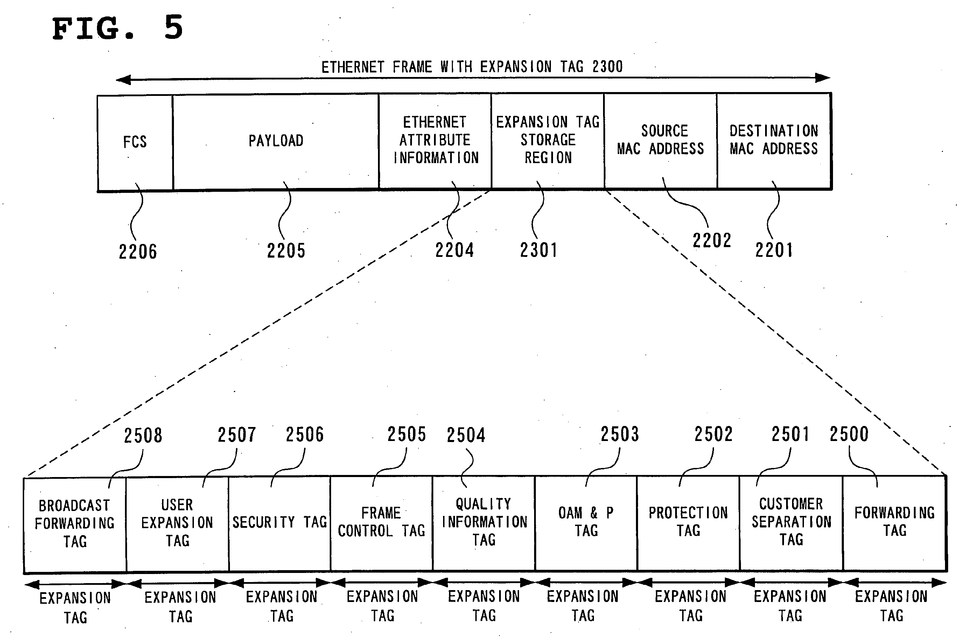

Figs. 4 and 5 show the expansion tag storage region 2301. In the storage example shown in Fig. 4, one expansion tag 2500 is stored, while in the storage example shown in Fig. 5, nine expansion tags 2500 to 2508 are stored. In addition, in the storage example shown in Fig. 4, the forwarding tag 2500 is stored.

Stored in the forwarding tag 2500 are an identifier of a destination node and a label to a destination (e.g. MPLS label). In addition to the forwarding tag 2500 in which an identifier of a destination node is stored, there is a case where an identifier of a source node is stored. Each node determines a frame transfer destination with reference to the forwarding tag. The forwarding tag 2500 is stored in the Ethernet(R) frames with an expansion tag 2300 and 2400 without fail (there is an exception as will be described later in which the tag is not stored). In the storage example illustrated in Fig. 5, other expansion tags than the forwarding tag 2500 are also stored.

As kinds of expansion tags, stored are a customer separation tag 2501, a protection tag 2502, an OAM&P tag 2503, a quality information tag 2504, a frame control tag 2505, a security tag 2506, a user expansion tag 2507 and a broadcast forwarding tag 2508.

In the customer separation tag 2501, an identifier for separating information for each customer accommodated in each node 900 is stored. Regarded as the same customers are customers to which the same VLAN belongs, customers accommodated in a specific port of two or more nodes 900, and two or more hosts connected to a node in a network. To these customers, a separation identifier is assigned and in a frame from each customer, the separation identifier is stored in the customer separation tag 2501. Identifying a customer by the customer separation tag 2501 enables provision of additional service on a customer basis (e.g. preferential control for a specific customer). In addition, the customer separation tags 2501 can be stacked in the plural. In this case, the number of separable customers can be drastically increased. When the customer separation tags 2501 are stacked, as the customer separation tag 2501 at the final stage of the stack, use a special customer separation tag indicative of being the final stage.

Stored in the protection tag 2502 are failure information at the time of occurrence of a failure and protection path information for recovering from a failure. Stored in the OAM&P tag 2503 is operation/management information.

Stored in the quality information tag 2504 is quality information such as delay, jitter, a packet loss rate, a time stamp indicative of time of frame inflow into a network and bandwidth control information. When a time stamp value is stored in the quality information tag 2504, the node 900 having received a frame is allowed to calculate a network delay (time of stay in network) of the frame from the current time and the time stamp value. In a case where a guaranteed performance of a network delay is fixed, preferential processing can be conducted so as to realize the guaranteed performance. In a case where such bandwidth control information as a requested bandwidth, the volume of accumulated data and a traffic class is stored in the quality information tag 2504, bandwidth control can be executed in order to ensure a requested bandwidth taking the volume of accumulated data and a traffic class of the flow and traffic conditions of other flow into consideration.

Stored in the frame control tag 2505 is information such as a hop counter (TTL: Time To Live) for limiting frame's time to live in a network and CRC for detecting an error. When a TTL is stored, a TTL value is decremented at each node passed through and when TTL attains zero, the frame is abandoned. This prevents the frame from continuously circulating even when a loop route is obtained. On the other hand, in a case where a CRC is stored, with a CRC operation result of the expansion tag storage region 2301 at an ingress node stored, executing CRC operation again at an egress node to compare with a stored value enables an error of the expansion tag storage region 2301 to be detected.

Stored in the security tag 2506 is information for ensuring frame reliability and secrecy at the time of setting up a network and at the time of changing a network structure. Among examples how the security tag 2506 is used are as follows. With a security identifier for each customer set in advance at a customer communicating in a network, the identifier is held by each node to which the customer is connected. At the time of frame transfer, by always storing the set security identifier in the security tag 2506, each customer is allowed to prevent frame transmission and reception to and from a malicious customer who alters information of the customer separation tag 2501. Also at the time of setting up the network or changing the network structure, set a common security identifier through negotiation between nodes. At the time of transferring a frame between the nodes in question, always storing the set security identifier in the security tag 2506 prevents connection of a malicious node to the network.

Stored in the user expansion tag 2507 is arbitrary information uniquely defined by a user. By uniquely defining a format and storage information of the tag and defining the processing contents by a user, the user is allowed to expand functions on his own to enhance flexibility of the network.

Stored in the broadcast forwarding tag 2508 is an identifier of a source node. In a case where the broadcast forwarding tag 2508 is stored in the Ethernet(R) frames with an expansion tag 2300 and 2400, the forwarding tag 2500 needs not to be stored. Broadcast transfer method using the broadcast forwarding tag 2508 will be described later.

Other expansion tags 2501 to 2507 than the forwarding tag 2500 are stored as required. The forwarding tag 2500 is stored at the top of the expansion tag storage region 2301 and the other expansion tags 2501 to 2507 are stored following the tag 2500. Anywhere in the rear of the forwarding tag 2500, they may be at a fixed position determined in advance or at an arbitrary position. The broadcast forwarding tag 2508 is stored at the position of the forwarding tag 2500 (top of the expansion tag storage region 2301).

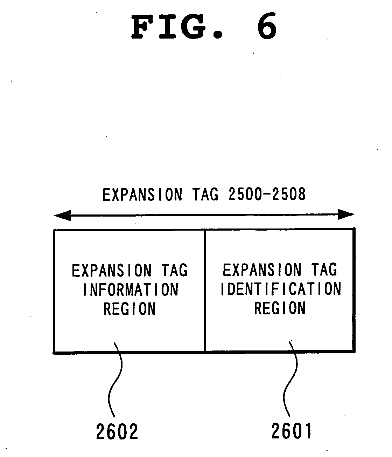

Fig. 6 shows arrangement of the expansion tags 2500 to 2508. The expansion tags 2500 to 2508 are each formed of an expansion tag identification region 2601 and an expansion tag information region 2602. Stored in the expansion tag identification region 2601 is information about a kind of expansion tags 2500 to 2508 and the like (regarding the customer separation tag 2502, kind information indicative of a customer separation tag at the final stage of a stack is set separately) and stored in the expansion tag information region 2602 is information according to a kind of each of the expansion tags 2500 to 2508 (forwarding information, customer separation information, protection information, OAM&P information, quality information, frame control information, security information, user expansion information, region information and broadcast forwarding information).

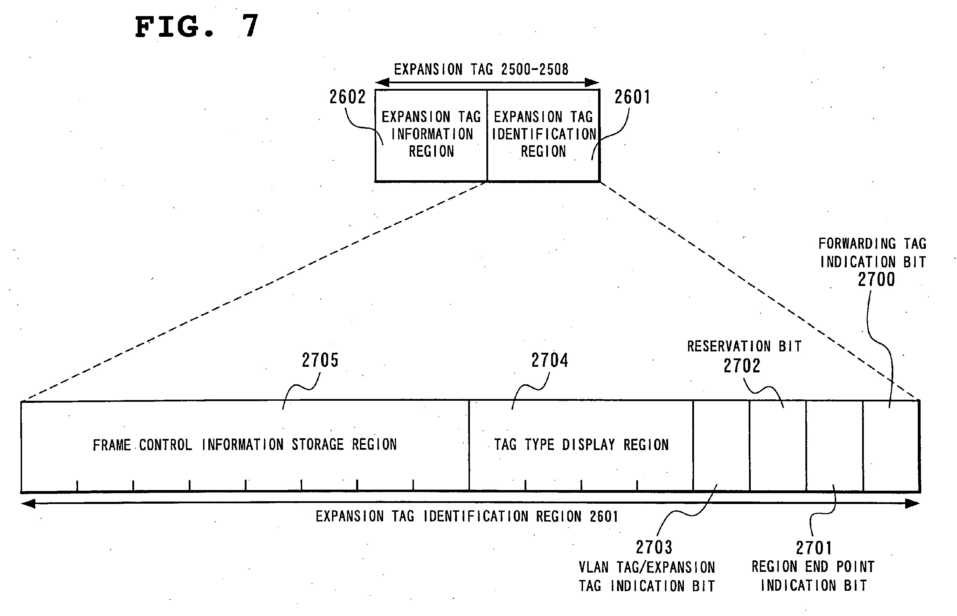

Fig. 7 shows arrangement of the expansion tag identification region 2601. The expansion tag identification region 2601 is formed of a forwarding tag indication bit 2700, a region end point indication bit 2701, a reservation bit 2702, a VLAN tag/expansion tag identification bit 2703, a tag type display region 2704 and a frame control information storage region 2705.

The forwarding tag indication bit 2700 is a bit indicative of whether an expansion tag in question is a forwarding tag or not. Recognizing that the tag in question is a forwarding tag based on the bit leads to high-speed forwarding by hardware processing.

The region end point indication bit 2701 is a bit indicating that the tag in question is a final expansion tag in the expansion tag storage region 2301. Even when an arbitrary number of expansion tags are stacked in the expansion tag storage region 2301, this bit enables identification of a final expansion tag.

The reservation bit 2702 is a reservation bit for the future. The VLAN tag/expansion tag identification bit 2703 is a bit for identifying a tag stored in this region being an expansion tag and when the tag is an expansion tag, the bit is set to be 1.

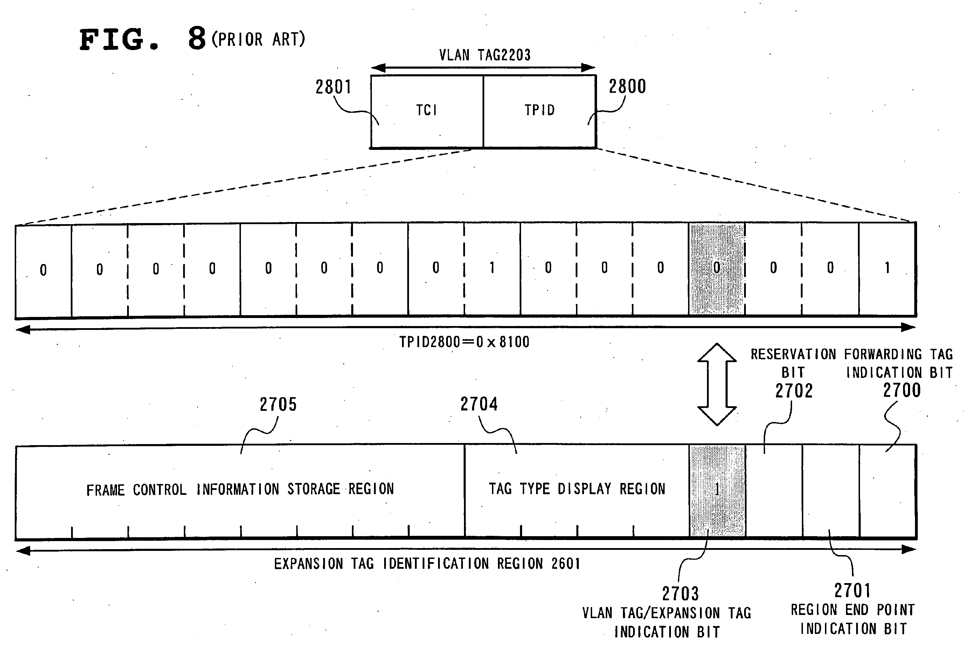

The reason why the VALN tag/expansion tag identification bit 2703 enables identification of an expansion tag and a VLAN tag will be described with reference to Fig. 8. Fig. 8 shows arrangement of the VLAN tag 2203 which is formed of a TPID 2800 equivalent to the expansion tag identification region 2601 and a TCI 2801 equivalent to the expansion tag information region 2602.

Since the TPID 2800 is prescribed to be 0x8100 in IEEE802.1q, a fourth bit from the top of the TPID 2800 will be 0 in the VLAN tag 2203. On the other hand, since in the expansion tags 2500 to 2508, the VLAN tag/expansion tag identification bit 2703 is set to be 1, identification of being an expansion tag is possible. The tag type display region 2704 in Fig. 7 is a region for indicating a kind of expansion tag. An identifier indicative of a kind of expansion tag is assigned to each of the expansion tags 2500 to 2508 illustrated in Fig. 5. In a case where a plurality of the same expansion tags are stored in succession, an identifier indicative of its end point may be assigned to each tag. Such a case has an advantage that the same expansion tag can be recognized at a high speed.

The frame control information storage region 2705 is a region for storing frame control information, in which TTL is stored. In a case where TTL is stored in the frame control information storage region, a TTL value is decremented every time the frame passes through a node and when the TTL attains zero, the frame will be abandoned. This prevents a frame from continuing with circulation even when a loop path is obtained. Order of the respective components 2700 to 2705 of the expansion tag identification region 2601 is not limited to the example shown in Fig. 5. Among the components 2700 to 2705, although the VLAN tag/expansion tag identification bit 2703 should be stored at the second to fourth bits from the top (second to fifth bits from the top in a case where the tag type display region 2704 has 3 bits), the other components 2700, 2701, 2702, 2704 and 2705 may be arbitrary situated.

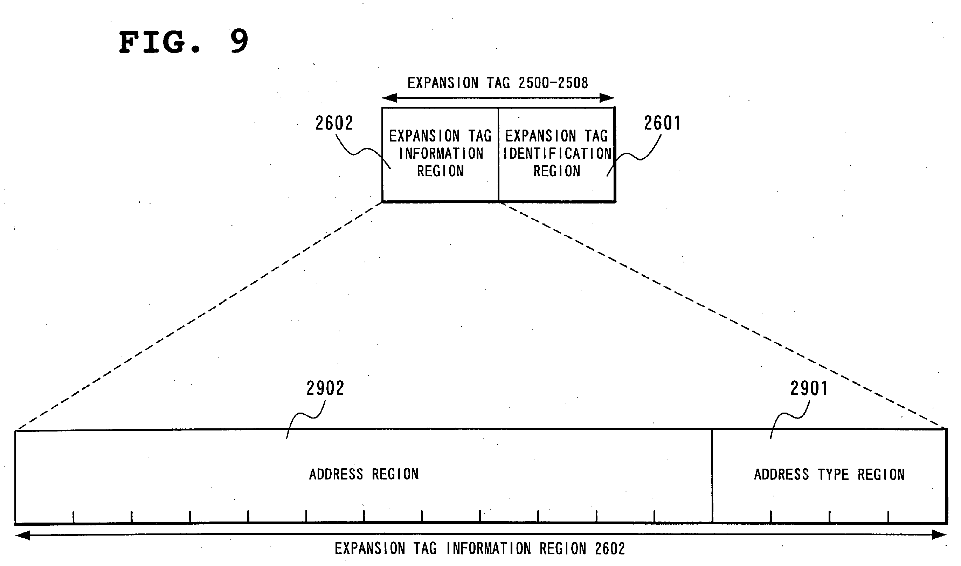

Fig. 9 shows arrangement of the expansion tag information region 2602 of the forwarding tag 2500 or the broadcast forwarding tag 2508. The expansion tag information region 2602 is formed of an address type region 2901 and an address region 2902. Stored in the address type region 2901 is a type of destination address in a case of the forwarding tag 2500 and a type of source address in a case of the broadcast forwarding tag 2508. This is used for identifying a type of address when the network is layered. Stored in the address region 2902 is a destination address in a case of the forwarding tag 2500 and a source address in a case of the broadcast forwarding tag 2508. In a case where the protection tag 2502 stores destination node information of a protection path, the arrangement illustrated in Fig. 9 is applicable also as the expansion tag information region 2602 of the protection tag 2502.

(Other Frame Format of Expansion Tag Frame)

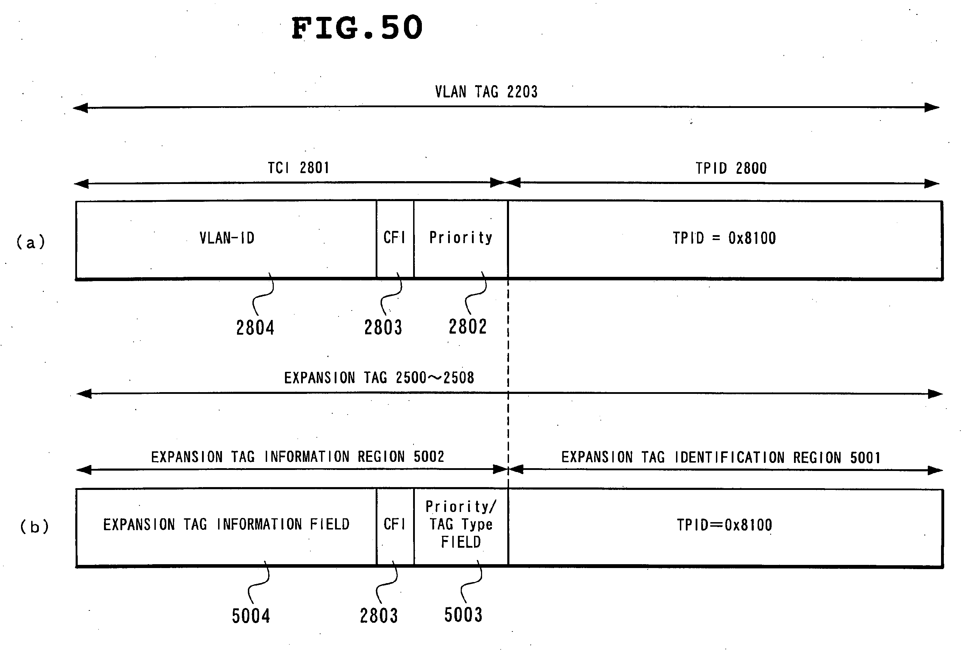

With reference to Fig. 50, other frame format of the expansion tag frames 2500 to 2508 will be described. In the following, the frame format of the expansion tag frames 2500 to 2508 described with reference to Figs. 4 to 9 will be denoted as an expansion tag frame format 1 and a frame format which will be described hereafter with reference to Fig. 50 will be denoted as an expansion tag frame format 2.

Illustrated in (a) of Fig. 50 is a detailed frame format of the VLAN tag 2203. As has been described with reference to Fig. 8, the TPID 2800 is prescribed to be "0x8100". Although not a standard, "0x9100" or other arbitrary value manually set is used in some cases.

The TCI 2801 is formed of a priority field 2802, a CFI 2803 and a VLAN-ID field 2804. Stored in the priority field 2802 is a priority value (priority) of a frame which value is prescribed by IEEE802.1p. Stored in the CFI is a value indicative of existence/non-existence of special routing information or indicative of a kind of format of a MAC address and stored in the VLAN-ID field 2804 is a VLAN-ID.

On the other hand, in the expansion tag frame format 2 illustrated in (b) of Fig. 50, the TPID 2800 and the CFI 2803 in the TCI 2801 are the same as those of the VLAN tag 2203 and the priority field 2802 is replaced by a priority/tag type field 5003 and the VLAN-ID field 2804 is replaced by an expansion tag information field 5004. Size of the corresponding field is the same as that of the expansion tag frame format 1.

In the present expansion tag frame format 2, the priority/tag type field 5003 stores information about kinds of expansion tags 2500 to 2508. In order to support IEEE802.1p also at the time of using the expansion tags 2500 to 2508, a part of a priority value in the priority field 2802 (IEEE802.1p) of the existing VLAN tag 2203 is used as information about kinds of expansion tags 2500 to 2508.

More specifically, with the priority values "110", "100", "001" and "000" used for the expansion tags 2500 to 2508, for example, "111" (for reservation), "101" (for interactive multimedia), "011" (for critical application) and "010" (for standard stream) are assumed to be compatible with IEEE802.1p.

In the above-described case, since the number of usable expansion tags 2500 to 2508 is limited to four, assume that the forwarding tag 2500, the broadcast forwarding tag 2508, the customer separation tag 2501 and the OAM&P tag 2503, for example, are selectively used and that correspondence with a priority value is 001 = the forwarding tag 2500, 000 = the broadcast forwarding 2508, 110 = the customer separation tag 2501, and 100 = the OAM & P tag 2503. This enables identification of the above-described four kinds of expansion tags, as well as supporting four priority values prescribed by IEEE802.1p. Selection of an expansion tag to be used and setting of a priority value corresponding thereto are not limited to this example.

With the expansion tag frame format 2, stored in the expansion tag information field 5004 is information such as address information according to a kind of tag of the expansion tags 2500 to 2508. In a case, for example, of the forwarding tag 2500, address information of a destination node is stored, in a case of the broadcast forwarding tag 2508, address information of a source node is stored and in a case of the customer separation tag 2501, identification information of a customer is stored.

(Node Structure According to First Mode of Implementation)

Next, description will be made of a node which generates or transfers the above-described Ethernet(R) frame with an expansion tag.

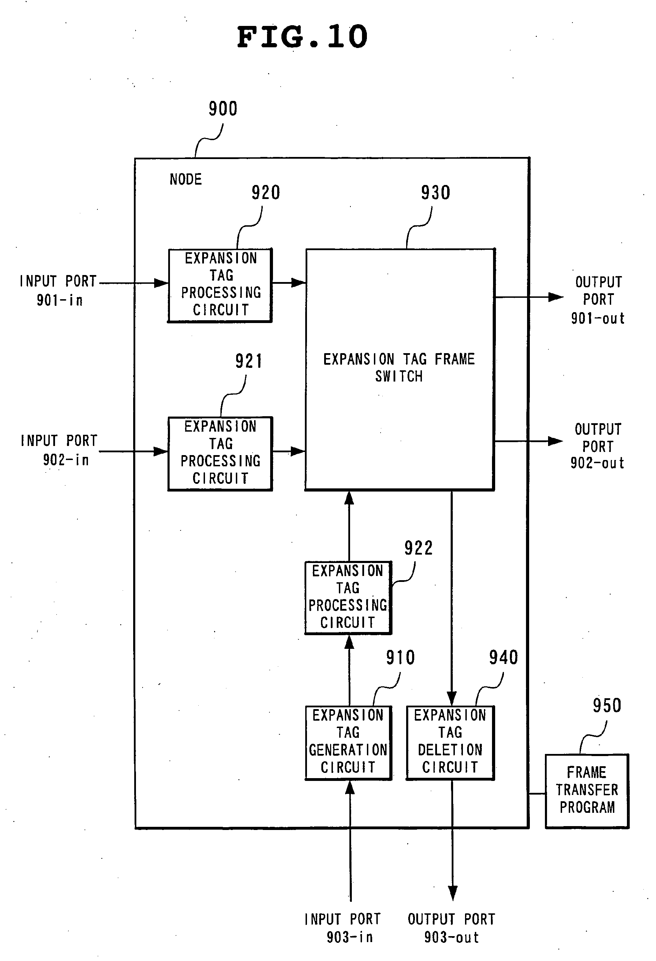

Fig. 10 is a structural diagram of the node 900 which generates or transfers the Ethernet(R) frame with an expansion tag 2300 according to the first mode of implementation of the present invention.

The node 900 shown in Fig. 10 is formed of an expansion tag generation circuit 910, expansion tag processing circuits 920, 921 and 922, an expansion tag switch 930 and an expansion tag deletion circuit 940. Input ports to the node 900 are input ports 901-in and 902-in as input to the expansion tag processing circuits 920 and 921 and an input port 903-in as input to the expansion tag generation circuit 910.

Shown is a case where to the input ports 901-in and 902-in, the Ethernet(R) frame with an expansion tag 2300 transferred from other node 900 is applied and from the input port 903-in, the Ethernet(R) frame 2200 transferred from an existing Ethernet(R) switch or host is applied.

The Ethernet(R) frame 2200 from the input port 903-in is applied to the expansion tag generation circuit 910.

The expansion tag generation circuit 910 searches all or an arbitrary combination of the destination MAC address 2201, the source MAC address 2202, the VLAN tag 2203, the Ethernet(R) attribute information 2204 and data information and input port information included in the payload 2205 of the Ethernet(R) frame 2200 for the transfer destination node information of the Ethernet(R) frame 2200.

Generate the Ethernet(R) frame with an expansion tag 2300 by generating forwarding information such as the transfer destination node identifier obtained as a result of the search or a label for reaching the transfer destination node and writing the expansion tag storage region 2301 which stores the generated forwarding information into a storage region of the VLAN tag 2203. Thereafter, transfer the Ethernet(R) frame with an expansion tag 2300 in which the expansion tag storage region 2301 is written to the expansion tag processing circuit 922.

The Ethernet(R) frames 2300 with an expansion tag applied from the input ports 901-in and 902-in are applied to the expansion tag processing circuits 920 and 921, respectively.

The expansion tag processing circuits 920 to 922 extract the forwarding information stored in the expansion tag storage region 2301 of the input Ethernet(R) frame with an expansion tag 2300. The expansion tag processing circuits 920 to 922 determine an output port based on the extracted forwarding information and notify the expansion tag switch 930 of the determined output port information and of the Ethernet(R) frame with an expansion tag 2300.

Based on the received output port information, the expansion tag switch 930 transfers the Ethernet(R) frame with an expansion tag 2300 to output port 901-out, 902-out or the expansion tag deletion circuit 940. Here, the output ports 901-out and 902-out are connected to other node 900 and an output port 903-out is connected to an existing Ethernet(R) switch or host.

The expansion tag deletion circuit 940 determines a VLAN-tag value for network separation identification based on all or some of information of the destination MAC address 2201, the source MAC address 2202, the expansion tag storage region 2301, and the Ethernet(R) attribute information 2204 of the Ethernet(R) frame with an expansion tag 2300. As a method of determining a VLAN-tag value, the node 900, for example, at the time of receiving the Ethernet (R) frame 2200 from the input port 903-in, learns correspondence information between a combination of the destination MAC address 2201 and the source MAC address 2202 of the frame and a VLAN-tag value. Upon receiving the Ethernet (R) frame with an expansion tag 2300, the expansion tag deletion circuit 940 refers to learning information to obtain a VLAN-tag value with which the destination MAC address 2201/the source MAC address 2202 of the Ethernet(R) frame with an expansion tag 2300 coincide with the source MAC address/the destination MAC address of the learning information and determines the obtained value as a VLAN-tag value of the frame.

Thereafter, write the VLAN tag 2203 containing the determined VLAN-tag value into the expansion tag storage region 2301 (the VLAN tag 2203 storage region of the ordinary Ethernet(R) frame 2200) and output the Ethernet(R) frame 2200 in which the VLAN tag 2203 is described to the output port 903-out.

When storing other network information than the forwarding information in the expansion tag storage region 2301, the expansion tag generation circuit 910 generates necessary network information from among the customer separation information, the protection information, the OAM&P information and the expansion information recited in the first mode of implementation based on all or an arbitrary combination of the destination MAC address 2201, the source MAC address 2202, the VLAN tag 2203, the Ethernet(R) attribute information 2204 and data information and input port information included in the payload 2205 of the Ethernet(R) 2200 and stores the same in the expansion tag storage region 2301.

As to customer separation, as described above, the customers are separated for each VLAN, separated between a plurality of ports or between a plurality of hosts and management of the same customer is conducted by the server. When the Ethernet(R) frame 2200 arrives, in a case where the customers are separated for each VLAN, customer separation information is determined by the VLAN tag 2203, in a case where the customers are separated between the ports, the customer separation information is determined by input port information and in a case where the customers are separated between the hosts, the customer separation information is determined by both or either one of the destination MAC address 2201 and the source MAC address 2202.

When the expansion tag storage region 2301 includes other network information than the forwarding information, the expansion tag processing circuits 920 to 922 may extract all or some of the network information of the expansion tag storage region 2301 and conduct collection processing, information rewriting/updating processing and deletion processing of the extracted network information or addition processing of new network information. In such a case, for example, of an MPLS (Multi-Protocol Label Switching) where forwarding information is label information determined by hop by hop, rewrite the forwarding information by a core node. At the time of transfer of OAM&P information between specific nodes 900 in a network set up by connecting a plurality of the nodes 900, addition and deletion of the OAM&P information is conducted between the specific nodes 900.

Such a node structure as shown in Fig. 10 enables an Ethernet(R) frame to be converted into the Ethernet (R) frame with an expansion tag 2300 according to the present invention. In addition, referring to the Ethernet(R) frame with an expansion tag 2300 of the present invention including the forwarding information of the present invention enables forwarding. Moreover, various network information and frame attribute information can be included in the expansion tags of an Ethernet(R) frame with an expansion tag, thereby enabling various kinds of control and management of the Ethernet(R) frame with an expansion tag.

(Node Structure According to Second Mode of Implementation)

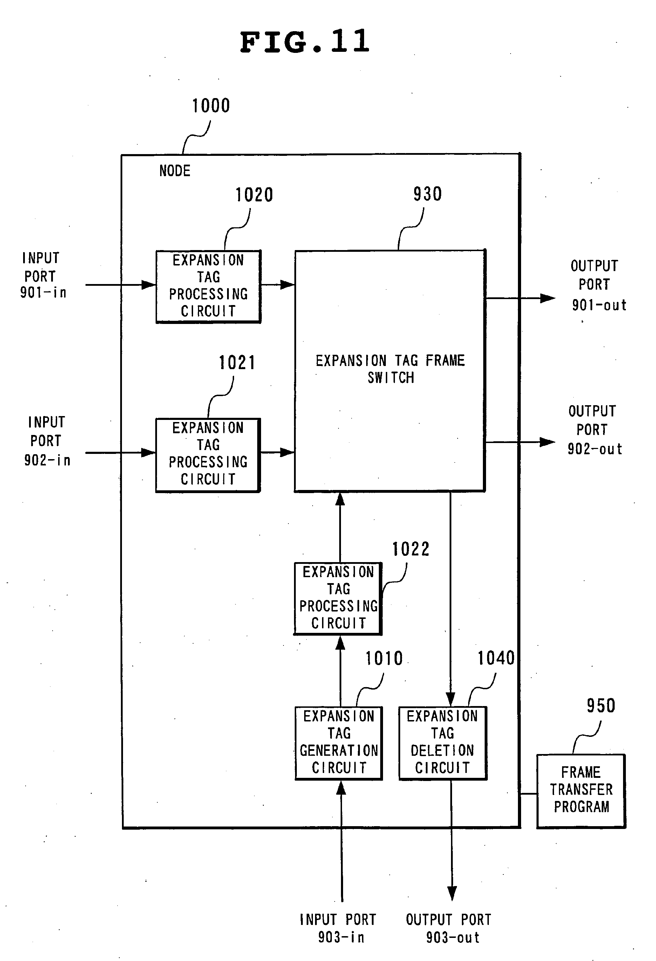

Fig. 11 is a structural diagram of a node 1000 which generates and transfers an Ethernet(R) frame with an expansion tag 2400 according to a second mode of implementation of the present invention.

The node 1000 illustrated in Fig. 11 is formed of an expansion tag generation circuit 1010, expansion tag processing circuits 1020 to 1022, an expansion tag switch 930 and an expansion tag deletion circuit 1040. Description will be made assuming that input ports of the node 1000 are 901-in to 903-in and output ports are 901-out to 903-out and input conditions of a frame to each input port are the same as those of Fig. 10.

The Ethernet(R) frame 2200 from the input port 903-in is applied to the expansion tag generation circuit 1010.

The expansion tag generation circuit 1010 searches all or a combination of the destination MAC address 2201, the source MAC address 2202, the VLAN tag 2203, the Ethernet(R) attribute information 2204 and data information and input port information stored in the payload 2205 of the Ethernet(R) frame 2200 for the transfer destination node information of the Ethernet(R) frame 2200. Generate the Ethernet(R) frame with an expansion tag 2400 with the expansion tag storage region 2301 including forwarding information such as a transfer destination node identifier obtained as a result of the search or a label for reaching a transfer destination node added at an arbitrary position before the payload 2205 in the Ethernet(R) frame 2200. Thereafter, transfer the Ethernet(R) frame with an expansion tag 2400 to the expansion tag processing circuit 1022.

When the data information stored in the payload 2205 has label information such as MPLS and FR (Frame Relay), the expansion tag generation circuit 1010 is allowed to use the label information as forwarding information and when the storage data of the payload 2205 is an IP packet, the circuit is allowed to form forwarding information based on the IP address.

The Ethernet(R) frame with an expansion tag 2400 applied through the input ports 901-in and 902-in are input to the expansion tag processing circuits 1020 and 1021, respectively.

The expansion tag processing circuits 1020 to 1022 extract the forwarding information included in the expansion tag storage region 2301 of the applied Ethernet(R) frame with an expansion tag 2400 and determine a desired output port based on the forwarding information to notify the expansion tag switch 930 of the determination result and of the Ethernet(R) frame with an expansion tag 2400.

The expansion tag switch 930 transfers the Ethernet(R) frame with an expansion tag 2400 to the output port 901-out or 902-out or the expansion tag deletion circuit 1040 based on the output port information.

The expansion tag deletion circuit 1040 deletes the expansion tag storage region 2301 from the Ethernet(R) frame with an expansion tag 2400 to convert the frame into the ordinary Ethernet(R) frame 2200 and transfers the obtained frame through the output port 903-out.

When the expansion tag storage region 2301 contains various network information other than the forwarding information, the expansion tag processing circuits 1020 to 1022 may extract all or some of the network information in the expansion tag storage region 2301 to conduct collection processing, information rewriting/updating processing and deletion processing of the extracted network information or addition processing of new network information.

When the forwarding information is label information determined hop by hop, for example, rewrite the information. At the time of transferring OAM&P information between the specific nodes 1000 in a network set up with a plurality of nodes 1000 connected, addition and deletion of the OAM&P information is conducted between the specific nodes 1000.

Although in the foregoing example, the description has been made of a case where the Ethernet(R) frame 2200 applied through the input port 903-in includes the VLAN tag 2203, also when the applied Ethernet(R) frame 2200 fails to include the VLAN tag 2203, the expansion tag generation circuit 1010 is allowed to form the expansion tag storage region 2301 to generate the Ethernet(R) frame with an expansion tag 2300 in a manner as described above.

Also when the input data from the input port 903-in is a frame such as MPLS or FR or a packet such as an IP, the expansion tag generation circuit 1010 is allowed to form the expansion tag storage region 2301 using these frame/packet information.

The expansion tag generation circuit 1010 generates the Ethernet(R) frame with an expansion tag 2400 whose payload 2205 accommodates these frames or packets and transfers the generated frame to the expansion tag processing circuit 1022. At this time, the destination MAC address 2201, the source MAC address 2202, the VLAN tag 2203 and the Ethernet(R) attribute information 104 may be arbitrarily set or may be predetermined values. This is because a frame such as MPLS and a packet such as IP originally use no MAC address for the transfer.

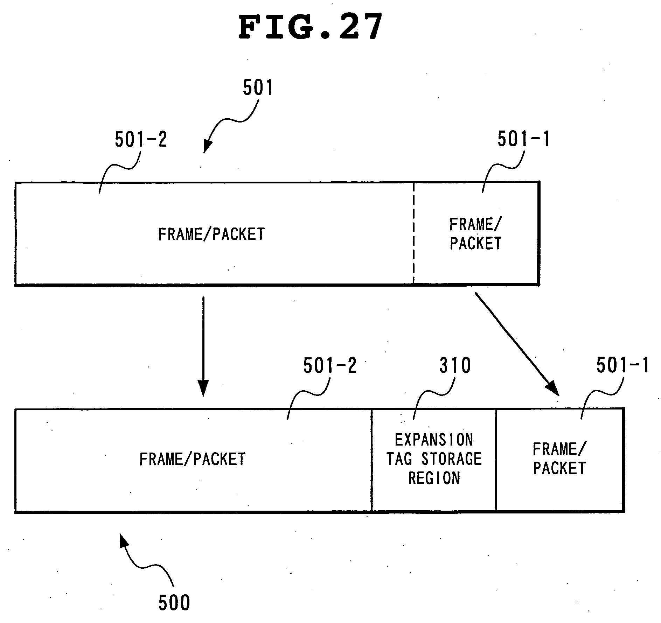

In a case where input data from the input port 903-in is a frame/packet 501 such as MPLS, FR or IP as shown in Fig. 27, the node 1000 is allowed to generate and transfer a frame with an expansion tag 500 illustrated in Fig. 27. Upon receiving the frame/packet 501 from the input port 903-in, the expansion tag generation circuit 1010 generates forwarding information from header information or payload data in which a label and an IP address of the frame/packet 501 are stored to generate an expansion tag storage region 310 including forwarding information. The expansion tag generation circuit 1010 inserts the generated expansion tag storage region 310 to a predetermined position in the frame/packet 501. Thus generated frame with an expansion tag 500 will be processed in the same manner as that of the above-described Ethernet(R) frame with an expansion tag 2400.

Such node structure as shown in Fig. 11 enables an Ethernet(R) frame, or a frame such as MPSL or FR, or an IP packet to be converted into the Ethernet(R) frame with an expansion tag 2400 or the frame with an expansion tag 500. Moreover, reference to an expansion tag including forwarding information of an Ethernet(R) frame with an expansion tag enables forwarding. Furthermore, various network information and frame attribute information can be included in an expansion tag part of an Ethernet(R) frame with an expansion tag, which facilitates control and management of the Ethernet(R) frame with an expansion tag.

(Expansion Tag Generation Circuit)

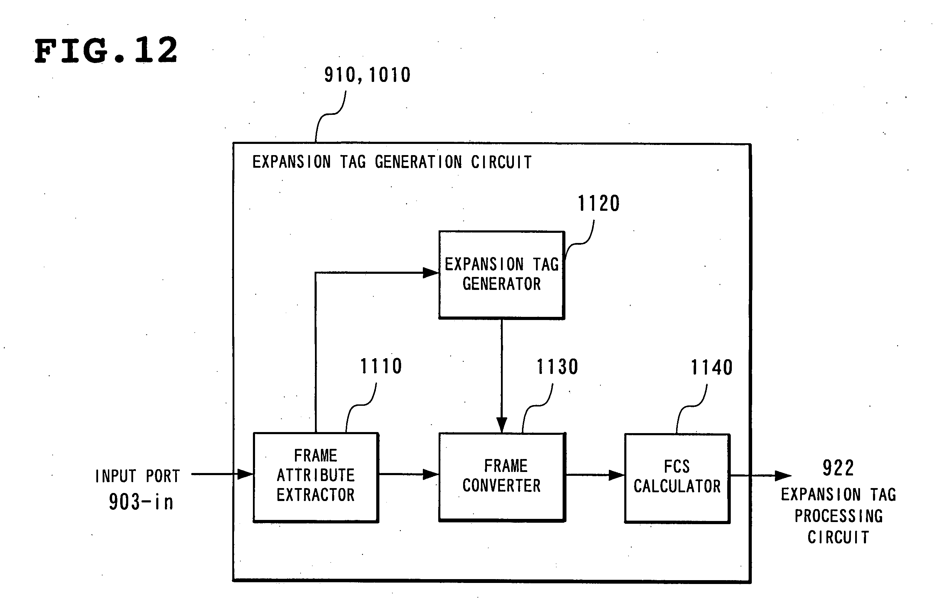

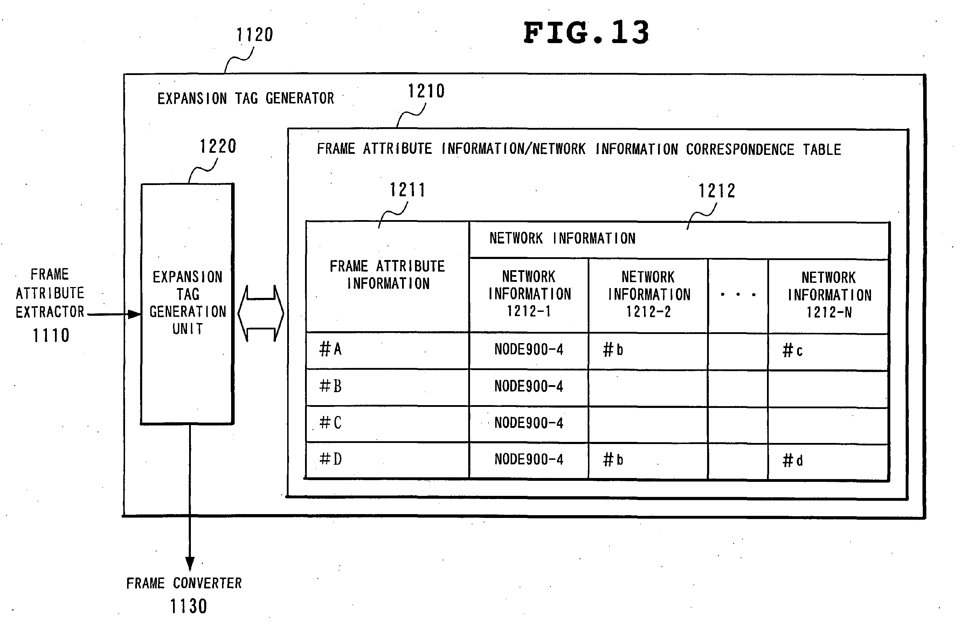

With reference to Figs. 12 and 13, description will be made of the expansion tag generation circuits 910 and 1010 of the nodes 900 and 1000 according to the first and second modes of implementation which generate the Ethernet(R) frames with an expansion tag 2300 and 2400 from the applied Ethernet(R) frame 2200.

The expansion tag generation circuits 910 and 1010 are each formed of a frame attribute extractor 1110, an expansion tag generator 1120, a frame converter 1130 and an FCS calculator 1140.

Here, description will be made of a case where the Ethernet(R) frame 2200 is applied through the input port 903-in to generate the Ethernet(R) frame with an expansion tag 2400 by the expansion tag generation circuit 1010.

The Ethernet(R) frame 2200 applied through the input port 903-in is transferred to the frame attribute extractor 1110.

The frame attribute extractor 1110 transfers frame attribute information obtained from all of or a combination of some of the input port information (input port 903-in) of the Ethernet(R) frame 2200, the destination MAC address 2201, the source MAC address 2202, the VLAN tag 2203 and the Ethernet(R) attribute information 2204 to the expansion tag generator 1120 and transfers the Ethernet(R) frame 2200 to the frame converter 1130. One example of frame attribute information is the destination MAC address 2201 itself. In a case where customer separation is conducted on a VLAN basis, it is possible to use the destination MAC address 2201 and the VLAN tag 2203 as the frame attribute information and in a case where the same is conducted on an the input port basis, it is possible to use the destination MAC address 2201 and the input port as the frame attribute information.

The expansion tag generator 1120 having received the frame attribute information searches the transferred frame attribute information for network information. Upon obtaining the network information by the search, generate the expansion tag storage region 2301 in which the network information is stored. The expansion tag generator 1120 transfers the generated expansion tag storage region 2301 to the frame converter 1130.

The frame converter 1130 generates the Ethernet(R) frame with an expansion tag 2400 from the received Ethernet(R) frame 2200 and expansion tag storage region 2301 and transfers the same to the FCS calculator 1140.

The FCS calculator 1140 calculates and adds the FCS 2206 of the Ethernet(R) frame 2400 with an expiation tag received from the frame converter 1130 to output the obtained result to an output port 1101.

Fig. 13 shows an example of a structure of the expansion tag generator 1120.

The expansion tag generator 1120 is formed of a frame attribute/network information correspondence table (address resolution table) 1210 and an expansion tag generation unit 1220. The frame attribute/network information correspondence table 1210 is formed of frame attribute information 1211 and a network information part 1212.

Based on the frame attribute information transferred from the frame attribute extractor 1110, the expansion tag generation unit 1220 searches the frame attribute information 1211 received from the frame attribute/network information correspondence table 1210 and reads network information from the network information part 1212 corresponding to the frame attribute information 1211. Thereafter, the expansion tag generation unit 1220 generates the expansion tags 2500 to 2507 for storing the read network information. Store a kind of expansion tags 2500 to 2507 to be generated in the tag type display region 2704 of the expansion tag identification region 2601 and store a predetermined initial value of a TTL in the frame control information storage region 2705. In addition, store the read network information or information obtained from the same in the expansion tag information region 2602. Generate the expansion tag storage region 2301 for storing the generated expansion tags 2500 to 2507 and transfer the same to the frame converter 1130.

In the frame attribute information/network information correspondence table 1210 shown in Fig. 13, with respect to destination MAC addresses #A, #B, #C and #D as the frame attribute information 1211, obtained network information 1212-1 (forwarding information) is a node 900-4. Although not shown in the figure, with respect to these frame attribute information 1211, customer separation information is also obtained as network information. Regarding the customer separation information, frame attribute information may be not only a destination MAC address but also a combination between a destination MAC address and a VLAN value or a combination between a destination MAC address and an input port in some cases. Other network attribute information includes quality information, frame control information and security information. Quality information includes a time stamp value which is not indicated in a table and current time is obtained with reference to a timer (not shown). In addition, frame control information includes TTL and CRC. As to TTL, its initial value is indicated in the table. As to CRC, its value is not indicated and CRC operation of the expansion tag storage region 2301 is executed by an operation unit (not shown) to obtain a result. As to security information, a security identifier for frame attribute information is indicated in the table.

Although in Fig. 13, the network information part 1212 has a number N of information storage regions from the network information parts 1212-1 to 1212-N prepared at the maximum, the number of entries is not necessarily to be N. The number of network information added may vary with frame attribute information. In the network information part 1212, a plurality of network information of the same kind may be stored.

In order to obtain network information from frame attribute information at a high speed, the expansion tag generation unit 1220 may generate a search code obtained by compressing information from frame attribute information received from the expansion tag generation unit 1220 and conduct information access by search code matching in place of the received frame attribute information. When making network information access using a search code, the frame attribute information 1211 may be used as a search code region and a search code region may be separately added to the frame attribute/network information correspondence table 1210.

When fixed network information is applied to the Ethernet(R) frame 2200 which is input through a predetermined input port, the frame attribute extractor 1110 is unnecessary. In a case, for example, of a network in which a port and a VLAN one-to-one correspond to each other fixedly, since network information can be obtained only from a port number, the frame attribute extractor 1110 is unnecessary.

The frame attribute extractor 1110 may interpret data information of the payload 2205 of the Ethernet(R) frame 2200 and form frame attribute information with the data information. In a case, for example, where Multi-protocol Label Switch (MPLS) or Frame Relay (FR) is accommodated in the payload 2205, each label information can be included in frame attribute information. In a case of an IP packet, IP address information can be used as frame attribute information.

Even when an input data string is an MPLS frame or an FR frame or an IP packet other than the Ethernet(R) frame 2200, as long as the data string is interpretable, the frame attribute extractor 1110 is allowed to form these frame attribute information and notify the expansion tag generator 1120 of the same. In a case of MPLS or FR, for example, form frame attribute information based on its label information and in a case of an IP packet, form frame attribute information based on IP address information. In this case, the frame attribute extractor 1110 generates the Ethernet (R) frame 2200, inserts these data strings into the payload 2205 and transfers the obtained frame to the expansion tag processing circuit 1122. As the destination MAC address 2201, the source MAC address 2202, the VLAN tag 2203, the Ethernet(R) attribute information 2204 and the FCS 2206, a predetermined value or an appropriate numerical value may be stored.

Although the foregoing description has been made of a case where the Ethernet(R) frame 2200 is applied to generate the Ethernet(R) frame with an expansion tag 2400 by the expansion tag generation circuit 1010, also applicable are a case where the Ethernet(R) frame 2200 is applied as input data to generate the Ethernet(R) frame with an expansion tag 2300 and a case where the frame/packet 501 is applied as input data to generate the frame with an expansion tag 500.

Thus arranging the expansion tag generation circuit enables the input Ethernet(R) frame 2200 or the frame/packet 501 such as an MPLS frame, an FR frame or an IP packet to be converted into the Ethernet(R) frame with an expansion tag 2300 or 2400 or the frame with an expansion tag 500.

(Expansion Tag Deletion Circuit)

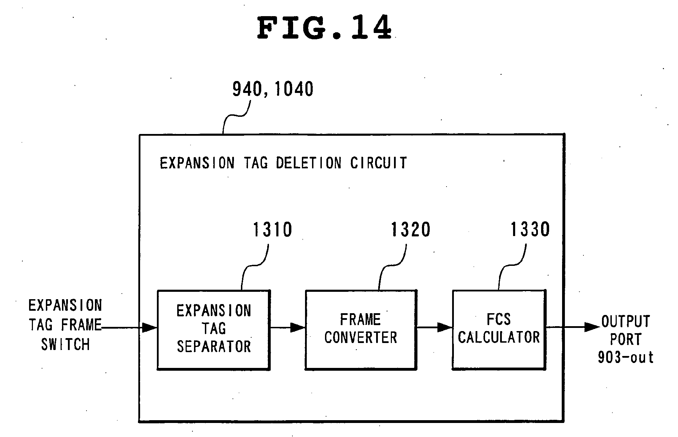

With reference to Fig. 14, description will be made of the expansion tag deletion circuits 940 and 1040 of the nodes 900 and 1000 according to the first and second modes of implementation in which the expansion tag storage region 2301 is deleted from the Ethernet(R) frames with an expansion tag 2300 and 2400.

Each of the expansion tag deletion circuits 940 and 1040 is formed of an expansion tag separator 1310, a frame converter 1320 and an FCS calculator 1330.

To begin with, description will be made of a case where the Ethernet(R) frame with an expansion tag 2400. is applied through the expansion tag switch 930 in Fig. 14.

The Ethernet(R) frame with an expansion tag 2400 from the expansion tag switch 930 is applied to the expansion tag separator 1310.

The expansion tag separator 1310 deletes the expansion tag storage region 2301 from the applied Ethernet (R) frame with an expansion tag 2400 and transfers the remaining Ethernet(R) frame with an expansion tag 2400 which includes no expansion tag storage region 2301 to the frame converter 1320.

The frame converter 1320 re-sets up the applied Ethernet(R) frame with an expansion tag 2400 which includes no expansion tag storage region 2301 to convert the same into the Ethernet(R) frame 2200 formed of the destination MAC address 2201, the source MAC address 2202, the VLAN tag 2203 if exists, the Ethernet(R) attribute information 2204, the payload 2205 and the FCS 2206 and transfers the converted frame to the FCS calculator 1330.

Upon receiving the Ethernet(R) frame 2200 from the frame converter 1320, the FCS calculator 1330 recalculates FCS of the Ethernet(R) frame 2200 and writes the result in the FCS 2206 region.

Subsequently, description will be made of a case where the Ethernet(R) frame with an expansion tag 2300 is applied through the expansion tag switch 930. In this case, the frame converter 1320 is unnecessary.

The Ethernet(R) frame with an expansion tag 2300 from the expansion tag switch 930 is applied to the expansion tag separator 1310.

The expansion tag separator 1310 reads the expansion tag storage region 2301 from the applied Ethernet (R) frame with an expansion tag 2300 and searches for a VLAN-tag corresponding to the Ethernet(R) frame with an expansion tag 2300 to store the VLAN tag 2203 including the VLAN-tag value obtained as a result of the search into the expansion tag storage region 2301. As a result, the Ethernet(R) frame with an expansion tag 2300 is converted into the Ethernet(R) frame 2200. The expansion tag separator 1310 transfers the converted Ethernet(R) frame 2200 to the FCS calculator 1330.

The FCS calculator 1330 recalculates the FCS of the Ethernet(R) frame 2200 from the expansion tag separator 1310 and writes the result into the FCS 2206 region.

Thus structured expansion tag deletion circuit enables frame conversion from an Ethernet(R) frame with an expansion tag to the Ethernet(R) frame 2200.

(Expansion Tag Processing Circuit)

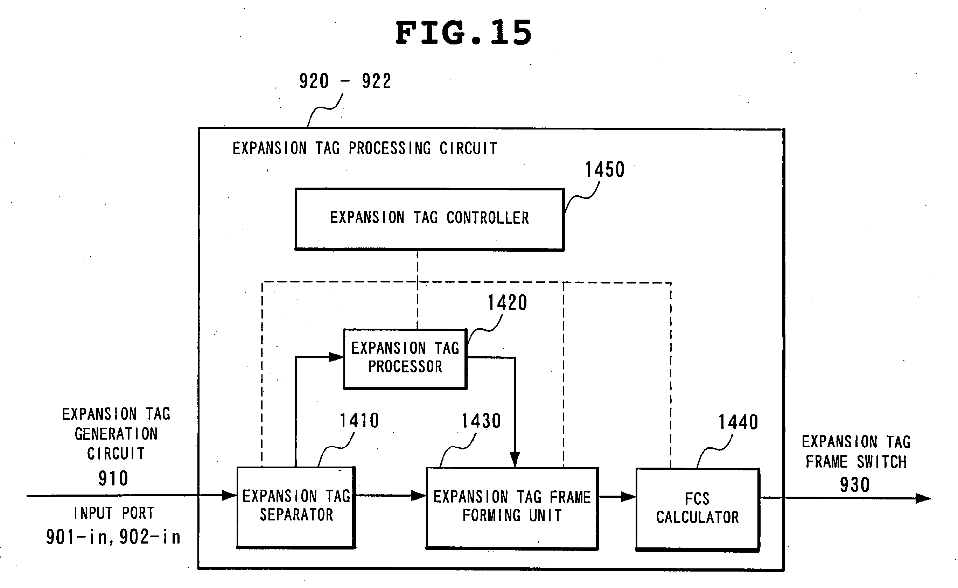

With reference to Fig. 15, description will be made of a structure of the expansion tag processing circuit of each of the nodes 900 and 1000 according to the first and second modes of implementation.

The expansion tag processing circuits 920 to 922 are each formed of an expansion tag separator 1410, an expansion tag processor 1420, an expansion tag frame forming unit 1430, an FCS calculator 1440 and an expansion tag controller 1450.

The expansion tag separator 1410 separates the expansion tag storage region 2301 of the Ethernet(R) frames with an expansion tag 2300 and 2400 applied from the input ports 901-in and 902-in or the expansion tag generation circuit 910 and transfers the separated expansion tag storage region 2301 to the expansion tag processor 1420, as well as transferring the Ethernet(R) frames with an expansion tag 2300 and 2400 from which the expansion tag storage region 2301 is removed to the expansion tag frame forming unit 1430.

The expansion tag processor 1420 extracts network information from the received expansion tag storage region 2301 to obtain processing information (e.g. deletion, addition, rewriting and non-processing of network information) corresponding to the network information and conducts processing according to the obtained processing information to update the network information. Extraction of the network information is realized by discriminating a kind of tag of the respective expansion tags 2500 to 2508 stored in the expansion tag storage region 2301 and extracting network information. More specifically, in a case where the expansion tags 2500 to 2508 have the expansion tag frame format 1, discriminate a kind of tag (kind of network information) by a value stored in the tag type display region 2704 of the expansion tag identification region 2601 to extract network information stored in the expansion tag information region 2602. In a case where the expansion tags 2500 to 2508 have the expansion tag frame format 2, discriminate a kind of tag (kind of network information) by a value stored in the priority/tag type field 5003 in the expansion tag information region 5002 to extract network information stored in the expansion tag information field 5004. In a case, for example, where network information is security information to ensure security between nodes, rewrite the information into a security identifier corresponding to a node at a subsequent hop. On the other hand, in a case where network information is frame control information which is TTL, decrement a stored TTL value to conduct rewriting. When TTL attains zero as a result of the processing, abandon the frame. Thereafter, using the updated network information, re-set up the expansion tag storage region 2301 and transfer the same to the expansion tag frame forming unit 1430.

There is also a case where various control is conducted based on received network information. This control is executed by the expansion tag controller 1450. When the received network information is customer separation information, for example, if the customer in question is given a predetermined high-priority class, it is possible to preferentially control the frame in question. When the received network information is quality information in which a time stamp value is stored, it is possible to calculate a network delay of the frame in question based on current time and the time stamp value to conduct preferential processing in order to satisfy a guaranteed performance. In a case where the received network information is frame control information in which CRC is stored, it is possible to execute CRC operation of the expansion tag storage region 2301 to detect an error by the comparison with the stored CRC value.

The expansion tag frame forming unit 1430 re-sets up the Ethernet(R) frames with an expansion tag 2300 and 2400 based on the re-established expansion tag storage region 2301 from the expansion tag processor 1420 and the Ethernet(R) frames with an expansion tag 2300 and 2400 excluding the expansion tag storage region 2301 from the expansion tag separator 1410. Thereafter, transfer the re-established frames to the FCS calculator 1440.

The FCS calculator 1440 calculates the FCS of the re-established Ethernet(R) frames with an expansion tag 2300 and 2400 and stores the calculation result in the respective FCS 2206 regions to transfer the obtained frames to the expansion tag frame switch 930.

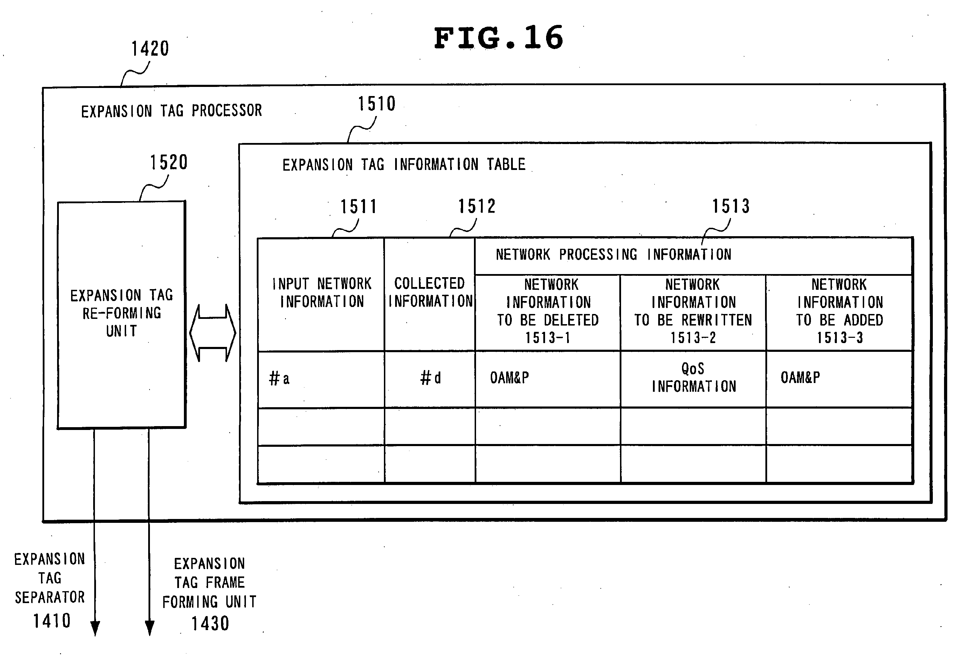

Fig. 16 shows an example of a structure of the expansion tag processor 1420.

The expansion tag processor 1420 is formed of an expansion tag information table 1510 and an expansion tag re-forming unit 1520.

Stored in the expansion tag information table 1510 are collected information 1512 and network processing information 1513 with respect to input network information 1511. Described in the network processing information 1513 are network information 1513-1 to be deleted, network information 1513-2 to be rewritten and network information 1513-3 to be added.

Upon receiving the expansion tag storage region 2301 from the expansion tag separator 1410, the expansion tag re-forming unit 1520 decrements a TTL value stored in the frame control information storage region 2705 in the expansion tag identification region 2601 of the forwarding tag 2500 located at the top. As a result, when TTL attains 0, abandon the frame. Also, extract network information from the expansion tag storage region 2301 to obtain each network processing information 1513 from the expansion tag information table 1510 based on the extracted information. The expansion tag re-forming unit 1520 conducts the processing obtained from the table and stores the network information obtained as a result of the processing in the generated expansion tag storage region 2301 to transfer the obtained frame to the expansion tag frame forming unit 1430.

Input network information for the expansion tag re-forming unit 1520 to access the expansion tag information table 1510 is preferably formed with forwarding information.

Thus structured expansion tag processing circuit enables modification of an expansion tag of an applied Ethernet(R) frame with an expansion tag.

(Expansion Tag Frame Switch)

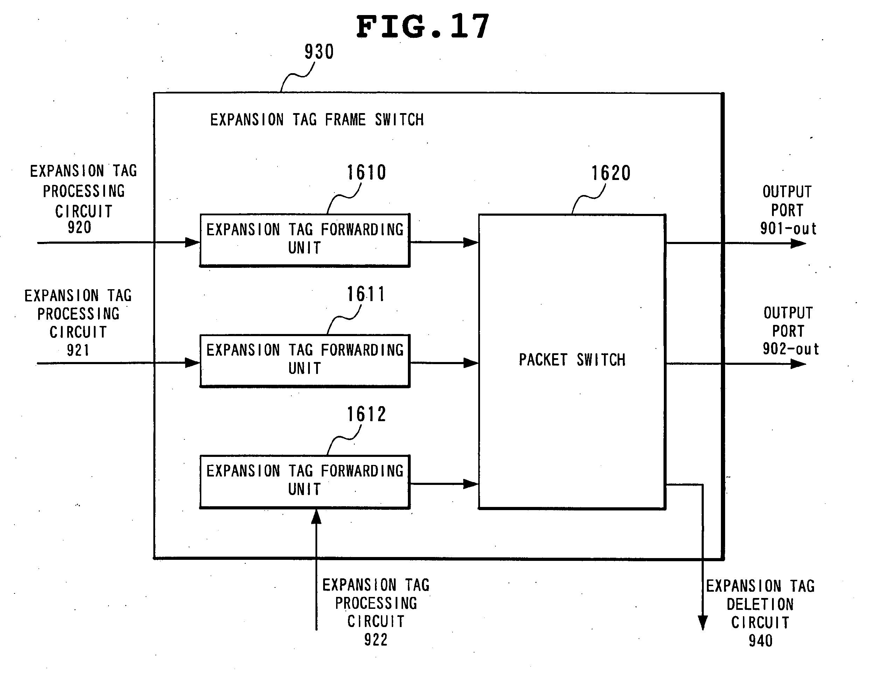

With reference to Fig. 17, description will be made of a structure of an expansion tag frame switch of each of the nodes 900 and 1000 according to the first and second modes of implementation.

The expansion tag frame switch 930 is formed of expansion tag forwarding units 1610, 1611 and 1612 and a packet switch 1620.

The expansion tag forwarding units 1610 to 1612 search the forwarding information included in the expansion tag storage region 2301 of each of the Ethernet(R) frames with an expansion tag 2300 and 2400 from the expansion tag processing circuits 920 to 922 for the output port information of the packet switch 1620 and transfer the received Ethernet(R) frames with an expansion tag 2300 and 2400 and the output port information to the packet switch 1620.

The packet switch 1620 transfers the Ethernet(R) frames with an expansion tag 2300 and 2400 to the output port 901-out, 902-out or the expansion tag deletion circuit 940 according to the output port information.

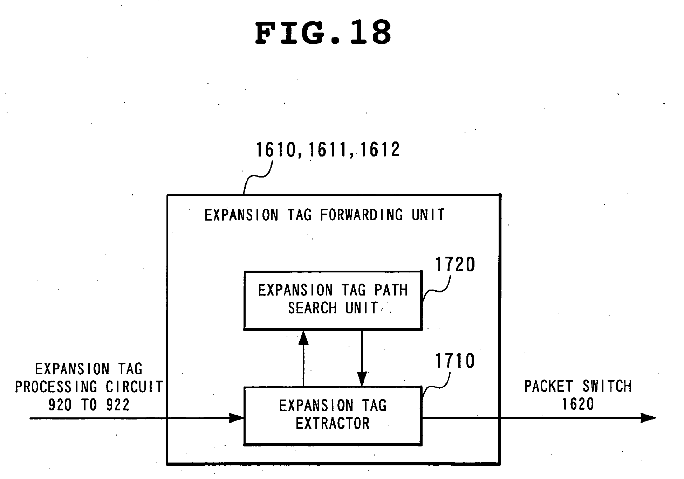

Fig. 18 shows an example of a structure of the expansion tag forwarding units 1610 to 1612.

The expansion tag forwarding units 1610 to 1612 are each formed of an expansion tag extractor 1710 and an expansion tag path search unit 1720.

The expansion tag extractor 1710 extracts the expansion tag storage region 2301 of the Ethernet(R) frames with an expansion tag 2300 and 2400 from the expansion tag processing circuits 920 to 922 and 1020 to 1022 and transfers the same to the expansion tag path search unit 1720. The expansion tag path search unit 1720 extracts forwarding information from the expansion tag storage region 2301 and determines an output port for the forwarding information to notify the expansion tag extractor 1710 of the output port information. Specific method of extracting forwarding information is as follows. The expansion tag path search unit 1720 having received the expansion tag storage region 2301 discriminates the forwarding tag 2500 or the broadcast tag 2508 in the expansion tag storage region 2301. When the expansion tags 2500 to 2508 have the expansion tag frame format 1, the discrimination is made based on a value stored in the tag type display region 2704 of the expansion tag identification region 2601, while they have the expansion tag frame format 2, the discrimination is made based on a value stored in the priority/tag type field 5003 in the expansion tag information region 5002. When the discrimination of which type the expansion tag is made, obtain address information which is stored in the address region 2902 in the expansion tag information region 2602 if the tag has the expansion tag frame format 1 and which is stored in the expansion tag information field 5004 in the expansion tag information region 5002 if the tag has the expansion tag frame format 2, that is, obtain forwarding information (destination node address information or source node address information). The expansion tag extractor 1710 having received the output port information from the expansion tag path search unit 1720 transfers the Ethernet (R) frames with an expansion tag 2300 and 2400 together with the output port information to the packet switch 1620.

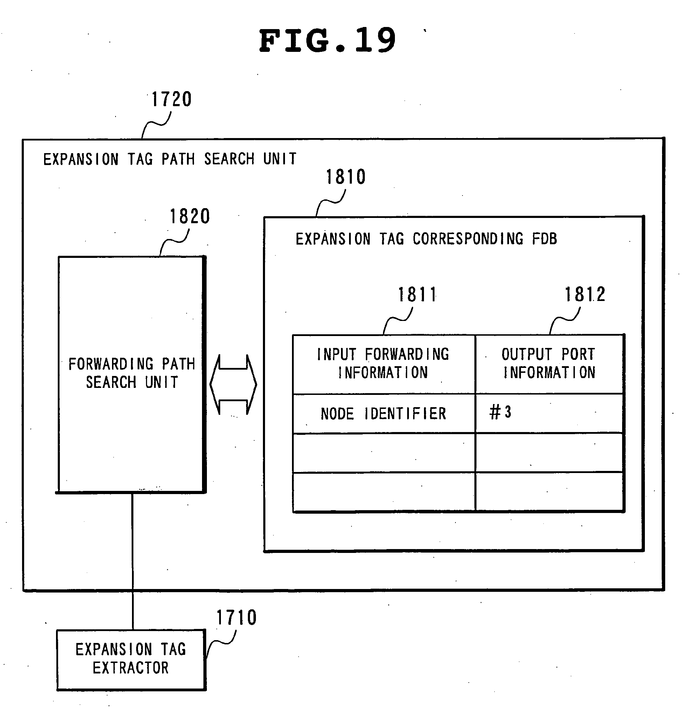

Fig. 19 shows an example of a structure of the expansion tag path search unit 1720.

The expansion tag path search unit 1720 is formed of a forwarding table (expansion tag corresponding FDB) 1810 and a forwarding path search unit 1820.

The forwarding table 1810 stores output port information 1812 for input forwarding information 1811.

From the forwarding table 1810, the forwarding path search unit 1820 obtains output port information for the forwarding information included in the expansion tag storage region 2301 applied from the expansion tag extractor 1710 and notifies the output port information to the expansion tag extractor 1710.

Although the description has been here made only of a case where path search is made using forwarding information, path search is not limited thereto and may be conducted using any of network information stored in the expansion tag storage region 2301.

Thus, the expansion tag frame switch according to the present invention enables an input Ethernet(R) frame with an expansion tag to be transferred to a desired output port.

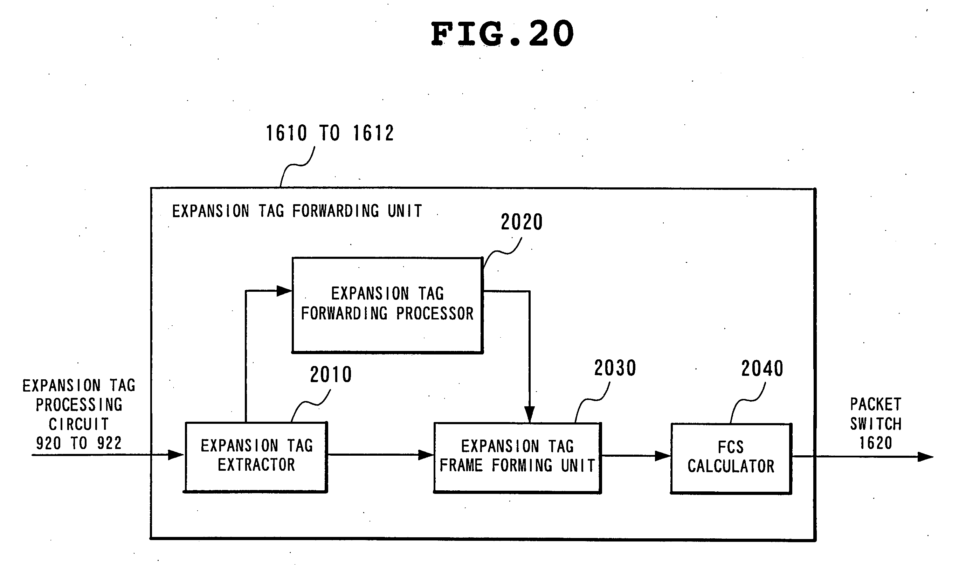

Fig. 20 shows an example of other structure of the expansion tag forwarding units 1610 to 1612.

The expansion tag forwarding units 1610 to 1612 are each formed of an expansion tag extractor 2010, an expansion tag forwarding processor 2020, an expansion tag frame forming unit 2030 and an FCS calculator 2040.

The expansion tag forwarding processor 2020 extracts network information including forwarding information from the received expansion tag storage region 2301 to obtain processing information (e.g. deletion, addition, rewriting and non-processing of network information) according to output port information and individual network information and updates the network information according to the processing information. Thereafter, using the updated network information, re-establish the expansion tag storage region 2301 and transfer the same to the expansion tag frame forming unit 2030.

The expansion tag frame forming unit 2030 re-establishes the Ethernet(R) frames with an expansion tag 2300 and 2400 based on the expansion tag storage region 2301 from the expansion tag forwarding processor 2020 and based on the Ethernet(R) frames with an expansion tag 2300 and 2400 excluding the expansion tag storage region 2301 from the expansion tag extractor 2010 and transfers the re-established Ethernet(R) frames with an expansion tag 2300 and 2400 to the FCS calculator 2040.

The FCS calculator 2040 calculates the FCS of the re-established Ethernet(R) frames with an expansion tag 2300 and 2400 to store its calculation result in each FCS 2206 region.

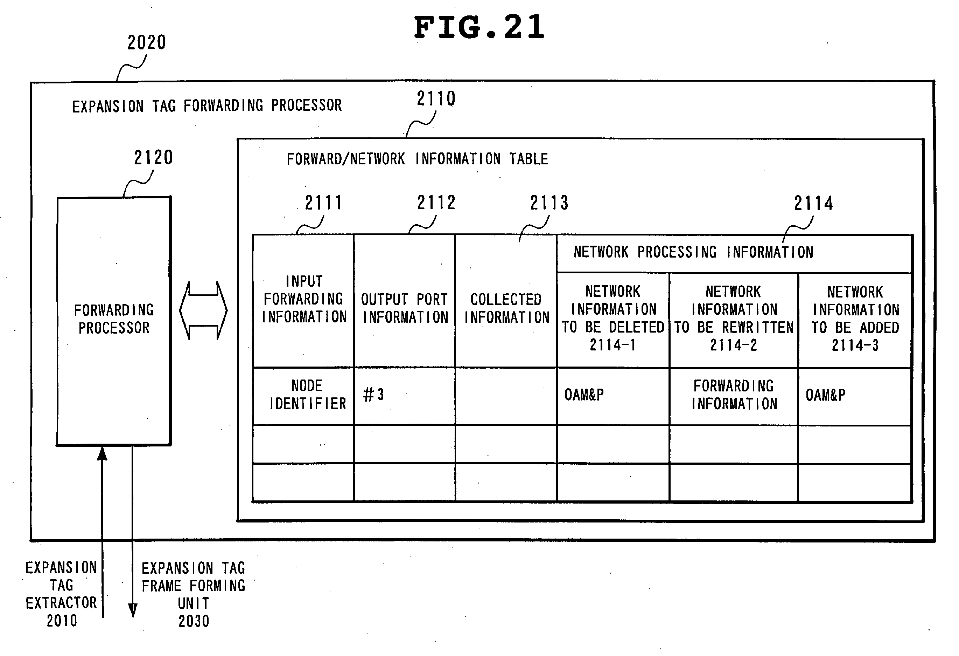

Fig. 21 shows a structure of the expansion tag forwarding processor 2020.

The expansion tag forwarding processor 2020 is formed of a forward/network information table 2110 and a forwarding processor 2120.

The forward/network information table 2110 stores output port information 2112, collected information 2113 and network processing information 2114 for input forwarding information 2111. Stored in the network processing information 2114 are network information to be deleted 2114-1, network information to be rewritten 2114-2 and network information to be added 2114-3.

Upon receiving the expansion tag storage region 2301 from the expansion tag extractor 2010, the forwarding processor 2120 refers to the forward/network information table 2110 to obtain output port information for the forwarding information included in the expansion tag storage region 2301, and network information to be processed and its processing contents. After processing individual network information, the forwarding processor 2120 re-establishes the expansion tag storage region 2301 and transfers the same together with the output port information to the expansion tag frame forming unit 2030.

Although the description has been here made only with respect to a case where output port information or network processing information is obtained using forwarding information, these information may be obtained using a part or all of other network information.

Thus, the expansion tag frame switch of the present invention enables an input Ethernet(R) frame with an expansion tag to be transferred to a desired output port.

Needless to say, each component which constitutes the above-mentioned node can be chip-ized for every part or in arbitrary combination.

(Forwarding Method)

In the following, a forwarding method using an Ethernet(R) frame with an expansion tag according to the present invention will be described. As described in the Related Art, in an Ethernet(R)-based network, each node forms an FDB by MAC address learning as illustrated in Fig. 32 and conducts forwarding processing based on the formed FDB. In the FDB, an output port for a 48-bit MAC address (address inherent to hardware interface) is recorded.

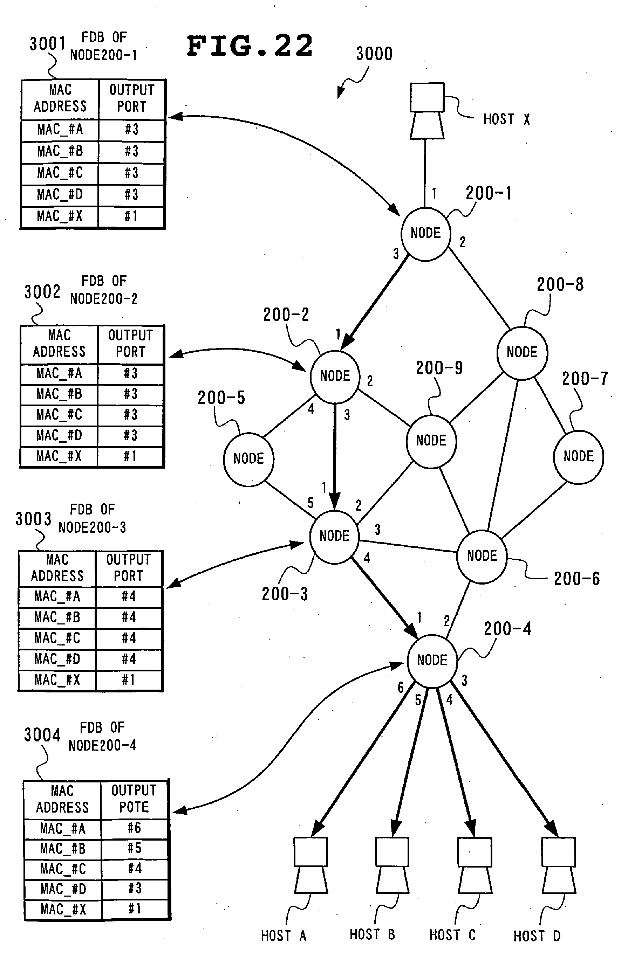

Fig. 22 shows a forwarding method in a conventional network 3000. The conventional network 3000 is made up of nodes 200-1 to 200-9, with a host X connected to the node 200-1 and hosts A, B, C and D connected to the node 200-3. Number denoted on a link from each node indicates a port number of the node.

Assume here that a frame is transferred from the host X to the hosts A to D and its path runs from the host X through node 200-1, the node 200-2, the node 200-3 and the node 200-4 to the hosts A, B, C and D. Illustrated in Fig. 22 is only the information on the transfer path. The transfer path is assumed to be set, for example, by a server not shown.

The respective nodes 200-1 to 200-4 have FDBs 3001, 3002, 3003 and 3004 as a table for transferring a frame on the path, respectively. The FDBs 3001 to 3004 are each equivalent to the FDB 220 illustrated in Fig. 32.

Recorded in the FDBs 3001 to 3004 are output port numbers for the hosts A, B, C, D and X connected to the edge nodes 200-1 and 2004. Upon receiving a frame, the node 200-1 as an ingress edge node, the nodes 200-2 and 200-3 as a core node and the node 200-4 as an egress edge node refer to the FDB to obtain an output port number for a destination MAC address of the received frame and output the frame to the port.

In a conventional method, for transferring a frame between the respective hosts connected the edge nodes, all the nodes 200-1 to 200-9 in the network, regardless of being an edge node or a core node, have a MAC address entry of all the hosts connected to the edge nodes in the network. Denote the number of edge nodes in the network as Ne and the number of hosts connected to an edge node as h (assuming that the same number of hosts are connected to each of all the edge nodes for the purpose of simplicity), the number E of entries of an FDB of each of the nodes 200-1 to 200-9 will be represented as:

$$E = Ne \times h.$$

The obtained value is the same regardless of being an edge node or a core node. Each entry of the FDB is a MAC address whose size is 48 bits and the amount M of memory of the FDB is therefore represented as:

$$M = 48 \times Ne \times h \text{ (bit)},$$

which is drastically increased according to the scale of the network (the number of edge nodes and the number of hosts connected). Such a conventional method has a shortcoming that related to the number of entries of the FDB held by each node, that is, the amount of memory, no scalability exists with respect to a network scale.

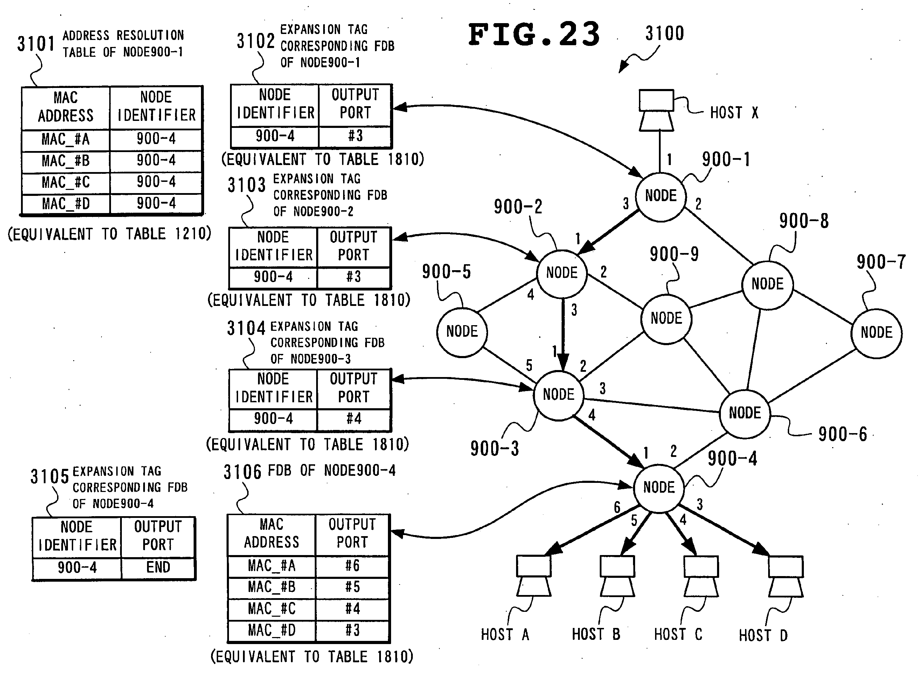

On the other hand, the forwarding method according to the present invention is shown in Fig. 23. In a network 3100 according to the present invention shown in Fig. 23, the nodes 200-1 to 200-9 in the conventional network 3000 are replaced by nodes 900-1 to 900-9 of the present invention. The nodes 900-1 to 900-9 of the present invention transfer frames not based on a MAC address of a destination host but on a node identifier of a node to which the destination host is connected (egress edge node). In Fig 23, a transfer path from the node 900-1 to the node 900-4 is indicated by a heavy line running from the node 900-1 through the node 900-2 and the node 900-3 to the node 900-4. The transfer path is determined based on the description in the expansion tag corresponding FDB of each node. Then, the expansion tag corresponding FDB of each node is assumed to be set based on information held by a server not shown or the like.

The respective nodes 900-1 to 900-4 have the following as a table for conducting such frame transfer. The node 900-1 as an ingress edge node has an address resolution table 3101 and an expansion tag corresponding FDB 3102, the nodes 900-2 and 900-3 as a core node have expansion tag corresponding FDBs 3103 and 3104, respectively, and the node 900-4 as an egress edge node has an expansion tag corresponding FDB 3105 and an FDB 3106.

From a MAC address of a destination host of an input frame, the node 900-1 as an ingress edge node makes address solution of a node identifier of the egress edge node to which the destination host is connected and describes the node identifier of the egress edge node as a destination in the forwarding tag 2500, as well as obtaining an output port for the destination node identifier to output the Ethernet(R) frame with an expansion tag 2400 to the output port.

For conducting such transfer processing, the node 900-1 has the address resolution table 3101 and the expansion tag corresponding FDB 3102. In the address resolution table 3101, a node identifier of a destination node corresponding to a MAC address of each destination host is described, while in the expansion tag corresponding FDB 3102, an output port through which a frame is output for a node identifier of a destination node is described. Although illustrated here is the address resolution table 3101 in which a node identifier of a destination node corresponding to a MAC address of a destination host is indicated, there is a case where a node identifier of a destination node corresponding to a MAC address of a destination host and to a VLAN tag are indicated. The address resolution table 3101 is equivalent to the frame attribute information/network information correspondence table 1210 shown in Fig. 13 (the MAC address in the address resolution table 3101 corresponds to the frame attribute information 1211 and a node identifier in the address resolution table 3101 corresponds to the network information 1212-1), while the expansion tag corresponding FDB 3102 is equivalent to the forwarding table 1810 shown in Fig. 19 (the node identifier of the expansion tag corresponding FDB corresponds to the input forwarding information).

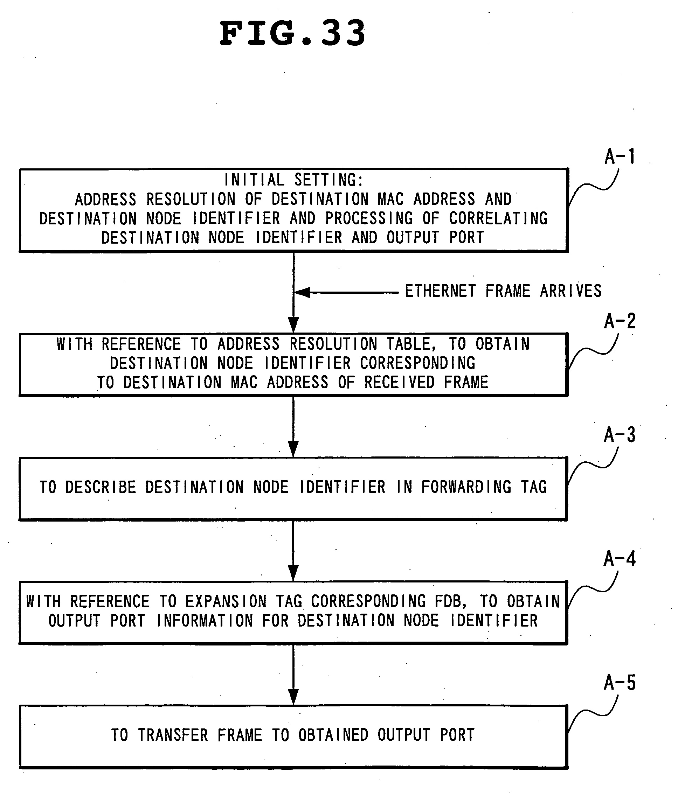

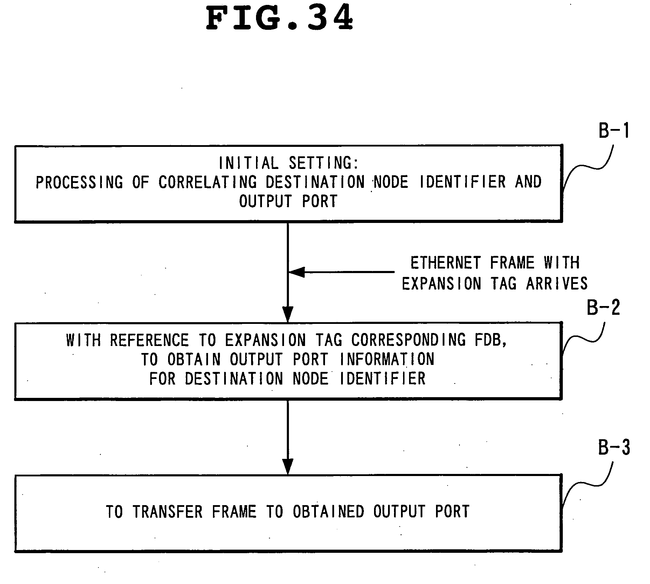

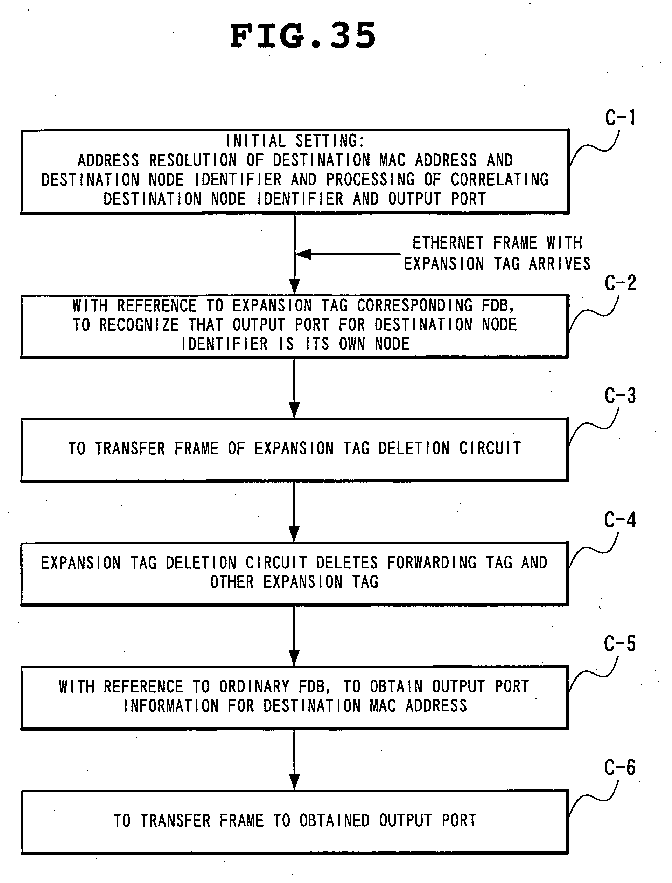

Figs. 33 to 35 are flow charts related to forwarding processing of the ingress edge node 900-1, the core nodes 900-2 and 900-3 and the egress edge node 900-4, respectively.

In each of the nodes 900-1 to 900-4, address solution of a destination node identifier corresponding to a destination MAC address and processing of correlating the destination node identifier and an output port are conducted at Steps A-1, B-1 and C-1 by a server 3200, for example, as an initial state. In the server 3200, MAC address information of a host connected to each edge node at the initial setting is recorded. Based on the information, the server 3200 correlates a destination MAC address and a destination node identifier. In addition, determine an appropriate path based on connection conditions of all the nodes in the network to, as a result, determine a destination node identifier and an output port in each node.

Subsequently, description will be made of processing of the ingress edge node 900-1. Upon receiving a frame directed to the MAC address A, B, C, D, the node 900-1 refers to the address resolution table 3101 to recognize that a node identifier of a destination node corresponding to the MAC address A, B, C, D_is 900-4 (Step A-2) and describes 900-4 in the forwarding tag 2500 (Step A-3). Thereafter, with reference to the expansion tag corresponding FDB 3102, obtain information that an output port for the node 900-4 is a port #3 (Step A-4) and output the Ethernet(R) frame with an expansion tag 2300 to the port #3 (Step A-5). The output frame arrives at the node 900-2.

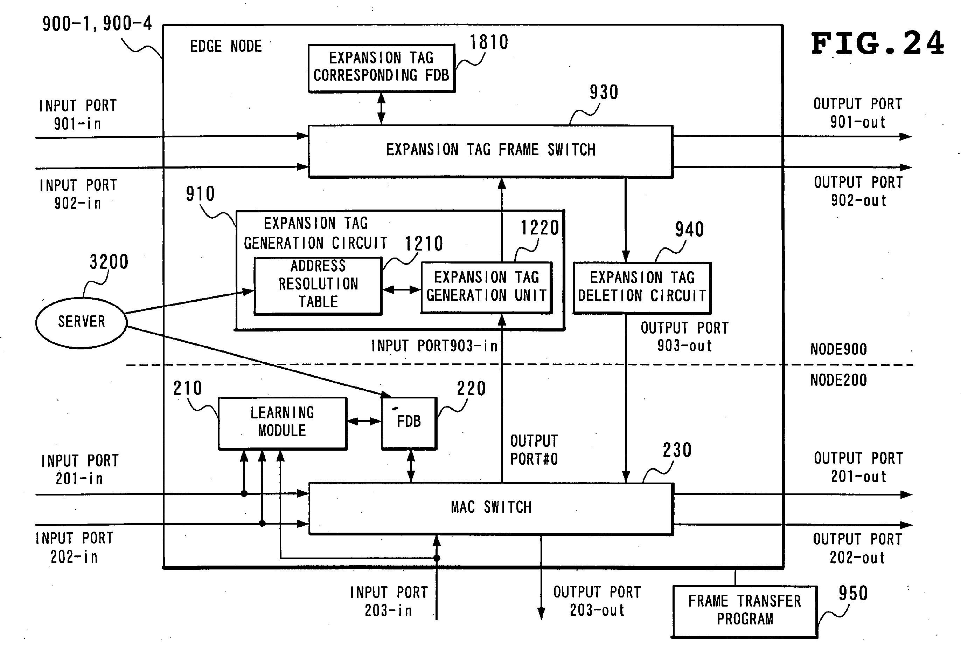

Fig. 24 shows a structure of the ingress edge node 900-1 and the egress edge node 900-4. For converting (or reverse conversion) an Ethernet(R) frame into an Ethernet(R) frame with an expansion tag, the edge nodes have the structure of the node 900 characteristic of the present invention in addition to the structure of the conventional node 200. In Fig. 24, the part below the dotted line shows the structure of the conventional node 200 and the upper part shows the structure characteristic of the present invention.

The input ports 201-in to 203-in and the output ports 201-out to 203-out on the node 200 side represent ports on the host side of the edge nodes 900-1 and 900-4, while the input ports 901-in and 902-in and the output ports 901-out and 902-out on the node 900 side represent ports on the node side of the edge nodes 900-1 and 900-4. Although in the figure, the expansion tag corresponding FDB 1810 and the expansion tag frame switch 930 are assumed to have different structure, the expansion tag corresponding FDB 1810 is a component of the expansion tag frame switch 930 and located therein according to Fig. 10 and to detailed description of the same. In Fig. 24, among the circuits shown in Fig. 10, illustration of the expansion tag processing circuit not relevant to the forwarding processing is omitted for the purpose of simplification.

Upon receiving an input frame from the host X at any of the input ports 201-in to 203-in, the MAC switch 230 determines an output port with reference to the FDB 220. Other than the output ports 201-out to 203-out to other switch and host, the FDB 220 has an entry of a special output port #0 related to a frame to be converted into an Ethernet(R) frame with an expansion tag. The entry is set for a destination MAC address designated in advance by the server 3200.

With information about a communicable host for each input port (for each host in a case where one host is connected to the input port, and for a group of hosts in a case where a plurality of hosts are connected to the input port) held therein, the server 3200 designates a frame directed to each of these hosts to be converted into an Ethernet (R) frame with an expansion tag and sets an entry for its destination MAC address to be the output port #0. Frame output to the output port #0 is applied to the expansion tag generation circuit 910. The expansion tag generation unit 1220 of the expansion tag generation circuit 910 refers to the address resolution table 1210 to determine a destination node, inserts the forwarding tag 2500 in which the destination node identifier is stored into the frame to convert the frame into the Ethernet(R) frame with an expansion tag 2300 and transfers the converted frame to the expansion tag frame switch 930.

The address resolution table 1210 corresponds to the address resolution table 3101 in Fig. 23. Each entry of the address resolution table 1210 is set by the server 3200, for example. The expansion tag frame switch 930 obtains output port information corresponding to the destination node identifier with reference to the expansion tag corresponding FDB 1810 and transfers the frame to the relevant port (output port 901-out or 902-out). The expansion tag corresponding FDB 1810 corresponds to the expansion tag corresponding FDB 3102 in Fig. 23.

Subsequently, the core nodes 900-2 and 900-3 in the network which have received the Ethernet(R) frame with an expansion tag 2300 from the ingress edge node 900-1 in Fig. 23 determines an output port based on the forwarding tag 2500 of the Ethernet(R) frame with an expansion tag 2300 and transfers the same to the relevant port. For executing the processing, the nodes 900-2 and 900-3 have the expansion tag corresponding FDBs 3103 and 3104. In each of the expansion tag corresponding FDBs 3103 and 3104, each destination node identifier and its corresponding output port are described.

Upon receiving the Ethernet(R) frame with an expansion tag 2300, the node 900-2 refers to the expansion tag corresponding FDB 3103 to recognize that the output port for the destination node identifier 900-4 is the port #3 (Step B-2) and transfer the Ethernet(R) frame with an expansion tag 2300 to the port #3 (Step B-3). Upon receiving the frame, the node 900-3 refers to the expansion tag corresponding FDB 3104 to recognize that the output port for the destination node identifier 900-4 is a port #4 (Step B-2) and transfer the Ethernet(R) frame with an expansion tag 2300 to the port #4 (Step B-3). The transferred frame arrives at the node 900-4.

Since the core nodes 900-2 and 900-3 conduct none of conversion processing between an Ethernet(R) frame with an expansion tag and an Ethernet(R) frame, they are structured only with the part above the dotted line in Fig. 24, and when receiving a frame from the ingress edge node 900-1 at the input port 901-in or 902-in, the expansion tag frame switch 930 refers to the expansion tag corresponding FDB 1810 to determine an output port and outputs the frame to the relevant output port 901-out or 902-out. The expansion tag corresponding FDB 1810 here corresponds to the expansion tag corresponding FDBs 3103 and 3104 in Fig. 23. Although in Fig. 23, the node 900-2 uses four ports for the connection with other node, while the node 900-3 uses five ports for the connection with other node, the number of ports used for the connection between nodes in Fig. 24 is set to be two for the purpose of simplification of description.

Subsequently, the egress edge node 900-4 which has received the Ethernet(R) frame with an expansion tag 2300 from the core node 900-3 in Fig. 23, upon confirming that its own node is a destination, deletes the forwarding tag 2500 from the Ethernet(R) frame with an expansion tag 2400 to make the frame an ordinary Ethernet(R) frame and then determines an output port according to a MAC address of a destination host. For conducting the processing, the node 900-4 has the expansion tag corresponding FDB 3105 and the expansion tag corresponding FDB 3106. In the expansion tag corresponding FDB 3105, a destination node identifier and its corresponding output port are described, while in the FDB 3106, a MAC address of each host connected and its corresponding output port are described.

Upon receiving the Ethernet(R) frame with an expansion tag 2400, the egress edge node 900-4 refers to the expansion tag corresponding FDB 3105 at Step C-2 to obtain "END" which is an identifier indicating that an output port entry for the destination node identifier 900-4 is its own node. The identifier "END" is described, for example, in the output port field for a node identification entry whose node ID is the same as its own node ID. Thereafter, at Step C-3, output the frame to the output port connected to the expansion tag deletion circuit in the node and delete the forwarding tag 2500 (Step C-4) to convert the frame into the ordinary Ethernet(R) frame with a VLAN tag 2200.

The node 900-4 having converted the frame into the Ethernet(R) frame with a VLAN tag 2200 refers to the FDB 3106 at Step C-5 to output the frame to an output port #6 when the destination MAC address of the Ethernet(R) frame with a VLAN tag 2200 is MAC_#A, to an output port #5 when the destination MAC address is MAC_ #B, to the output port #4 when the destination MAC address is MAC_#C and to the output port #3 when the destination MAC address is MAC_#D (Step C-6). As a result, the Ethernet(R) frame with a VLAN tag 2200 is transferred to each host.

Fig. 24 also shows the structure of the egress edge node 900-4. Upon receiving the frame from the core node 900-3 at the input port 901-in or 902-in, the expansion tag frame switch 930 refers to the expansion tag corresponding FDB 1810 to recognize that its own node is the destination node and transfers the frame to the expansion tag deletion circuit 940. The expansion tag corresponding FDB 1810 here corresponds to the expansion tag corresponding FDB 3105 in Fig. 23.

The expansion tag deletion circuit 940 deletes the forwarding tag 2500 and converts the Ethernet(R) frame with an expansion tag 2400 into the ordinary Ethernet(R) frame with a VLAN tag 2200 to transfer the converted frame to the MAC switch 230. With reference to the FDB 220, the MAC switch 230 obtains information about an output port corresponding to the destination MAC address of the Ethernet(R) frame with a VLAN tag 2200 and outputs the relevant Ethernet(R) frame with a VLAN tag 2200 in question to any relevant one of the output ports 201-out to 203-out. The FDB 220 here corresponds to the FDB 3106 in Fig. 23.

As described in the foregoing, according to the forwarding method of the present invention, an ingress edge node maps a MAC address of a destination host into an identifier of an egress edge node to which the destination host is connected, whereby a core node conducts forwarding processing based on an egress edge node identifier.

It is also possible that, according to the forwarding method of the present invention, an ingress edge node maps an IP address of a destination host into an identifier of an egress edge node to which the destination host is connected, whereby a core node conducts forwarding processing based on a egress edge node identifier.

The amount of table memory of each node when using the forwarding method of the present invention will be as follows.

Represent the number of edge nodes in the network as Ne, the number of core nodes as Nt and the number of hosts connected to the edge node as h (assume that to all the edge nodes, the same number of hosts are connected for the purpose of simplicity), the number of entries Ec of the expansion tag corresponding FDB of each core node will be expressed by the following expression:

$$Ec = Ne.$$

Entry of the expansion tag corresponding FDB is a node identifier and its size is 12 bits, the same size as that of the address region 2902 of the expansion tag information region 2602 of the forwarding tag 2500 in which the node identifier is stored. The amount of memory Mc of the expansion tag corresponding FDB of a core node will be expressed as follows:

$$Mc = 12 \times Ne \text{ (bit).}$$

With respect to each edge node, the number of entries Eee of the expansion tag corresponding FDB is expressed by the following expression:

$$Eee = Ne$$

and a total of the number of entries Eea of an ordinary FDB in the address resolution table is as follows:

$$Eea = Ne \times h$$

and the total amount of memory Me will be:

$$Me = 12 \times Ne + 48 \times Ne \times h \text{ (bit).}$$

Although this example is where each edge node communicates with all the edge nodes, in VPN service expected as an ordinary form of use, the number of edge nodes to communicate is limited. In such a case, with the number of communication destination edge nodes expressed as Nce, it is only necessary to replace Ne in the above-described numerical expression with Nce. In this case, since Nce is smaller than Ne, the total amount of memory Me is reduced.

Summarizing the foregoing obtains such a result of comparison in the amount of memory between a core node and an edge node in the present invention and conventional art as shown in the following Table 1.

[Table 1]

| COMPARISON IN AMOUNT OF MEMORY BETWEEN CORE NODE AND EDGE NODE | | | |
|---|---|---|---|
| | CORE NODE | EDGE NODE | |
| | | CASE WHERE ALL EDGE NODES SERVE AS COMMUNICATION DESTINATION | ASSUMED CASE (VPN SERVICE) |
| PRESENT INVENTION | $12 \times Ne$ (bit) | $12 \times Ne + 48 \times Ne \times h$ (bit) | $12 \times Nce + 48 \times Nce \times h$ (bit) |
| ART CONVENTIONAL | $48 \times Ne \times h$ (bit) | $48 \times Ne \times h$ (bit) | $48 \times Ne \times h$ (bit) |

Since it can be seen from Table 1 that related to a core node, the amount of memory in the present invention depends only on the number of edge nodes and not on the number of hosts, it can be said that scalability exists with respect to network scale. It can be found that as compared with the conventional method, the amount of memory can be reduced to 1/4h and the larger the number of hosts accommodated in an edge node becomes (the larger the network scale becomes), the larger the reduction effect is.

On the other hand, with respect to an edge node, the amount of memory in the present invention, when the amount is the largest (when connected to all the edge nodes), depends on the number of edge nodes and the number of connected hosts to have the same level as that of the conventional method. In a case of such a form of service as expected to be VPN service, since no entry is made for a host connected to an edge node not to communicate, the amount of memory is reduced. In this case, as compared with the conventional method, the amount of memory can be decreased to Nce/Ne to enable the amount of memory to be reduced as much as the amount corresponding to the number of edges not connected.

Also in comparison in the network as a whole, because the present invention has a large reduction in the amount of memory at a core node, drastic reduction in the amount of memory can be obtained in the network as a whole.

Accordingly, the forwarding method of the present invention enables drastic reduction in the amount of memory of a FDB at a core node, in particular, as compared with a conventional method and the amount of memory at an edge node is as much as that by a conventional method at the worst, so that in expected forms of service, more reduction in the amount of memory is possible than that by a conventional method. This is because a plurality of hosts connected to an egress edge node are represented by the egress edge node to result in drastic reduction in the number of entries of an FDB at the core node and because a destination node identifier has 12 bits to have a reduced size of each entry as compared with a 48-bit MAC address. Furthermore, determining an output port by 12-bit address matching at the core node enables higher-speed forwarding than that obtained by 48-bit MAC address matching.

In addition, although in the above-described mode of implementation, the core nodes 900-2 and 900-3 are assumed to have the structure illustrated above the dotted line in Fig. 24, the core nodes 900-2 and 900-3 may be structured to include the part lower than the dotted line in Fig. 24 to make the amount of memory mounted be the amount required by the FDB 1810.

When the core node is thus formed to include the entire structure shown in Fig. 24, at the time of changing a mode of use of a node used as a core node so as to be used as an edge node, application to the new mode is enabled only by increasing memory without the necessity of drastic addition of hardware.

Subsequently, description will be made of a method of forwarding a broadcast frame by using an Ethernet(R) frame with an expansion tag according to the present invention.

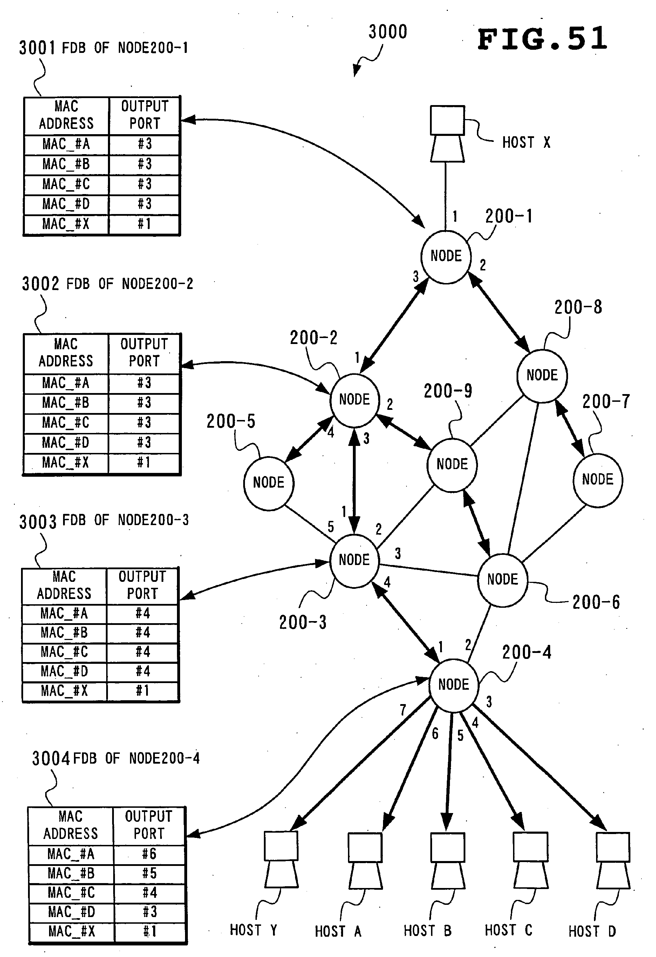

Fig. 51 shows a broadcast forwarding method in the conventional network 3000. The network structure is the same as that shown in Fig. 22 to assume a state where a host Y is newly connected to a port 7 of the node 200-4.

In conventional nodes 200-1 to 200-9, when an input Ethernet(R) frame is a broadcast frame whose destination MAC address (MAC_DA) is "0 x FFFF" or when it is an Ethernet(R) frame whose MAC_DA is not registered in the FDBs3001 to 3004 (i.e. node as an output destination is unknown) (hereinafter referred to as unknown unicast frame), broadcast transfer is conducted.

In Fig. 51 which shows an example of an unknown unicast frame, assume that a frame is transferred from the host X to the host Y. Upon receiving the frame, the node 200-1 searches a MAC address entry of the FDB 3001 and since no registration of MAC_DA = MAC_#7 is made, broadcast-transfers the frame as an unknown unicast frame.

More specifically, among the ports (ports #1, #2, #3) on the transfer path, transfer the frame to a port (port #2, port #3) other than the port through which the frame is applied. The broadcast transfer path in this case is indicated by a heavy line and is assumed to be set by a server not shown or the like, for example. Other nodes on the transfer path similarly search the FDBs 3002 to 3004 and when the entry of MAC_#Y is not registered, broadcast-transfers the frame to other port than the input port among the ports on the transfer path. As a result, when the unknown unicast frame arrives at the node 200-4, the node 200-4 broadcast-transfers the frame to the ports #3 to #7, so that the frame arrives at the host #Y connected to the port #7.

As described in the foregoing, at the time of broadcast-transferring a unknown unicast frame, the conventional nodes 200-1 to 200-9 search the FDBs 3002-3005. Since FDB search will be search of as many entries as the number of 48-bit MAC addresses proportional to the network scale, no scalability exists with respect to the network scale.

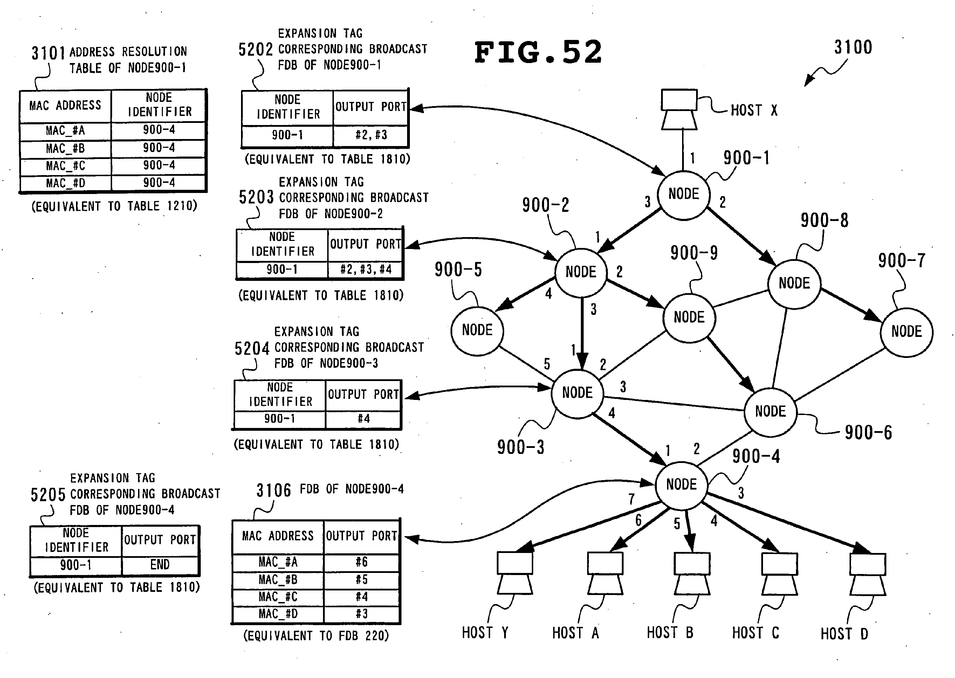

On the other hand, Fig. 52 shows a broadcast forwarding method according to the present invention. In Fig. 52, the expansion tag corresponding FDBs 3102 to 3105 in Fig. 23 are replaced by expansion tag corresponding broadcast FDBs 5202 to 5205 and to the port #7 of the node 900-4, the host Y is newly connected. While in the expansion tag corresponding FDBs 3102 to 3105, an output port for a destination node identifier in the forwarding tag 2500 is stored, in the expansion tag corresponding broadcast FDBs 5205 to 5205, an output port for a source node identifier in the broadcast forwarding tag 2508 is stored.

In Fig. 52, a broadcast transfer path from the source node (ingress edge node) 900-1 is indicated by a heavy line. This is a one-way path from the node 900-1. The transfer path is assumed to be set by a server not shown or the like. In the following, description overlapped with that of the above-described ordinary forwarding method (forwarding method for a unicast frame) will be omitted or will be made roughly.

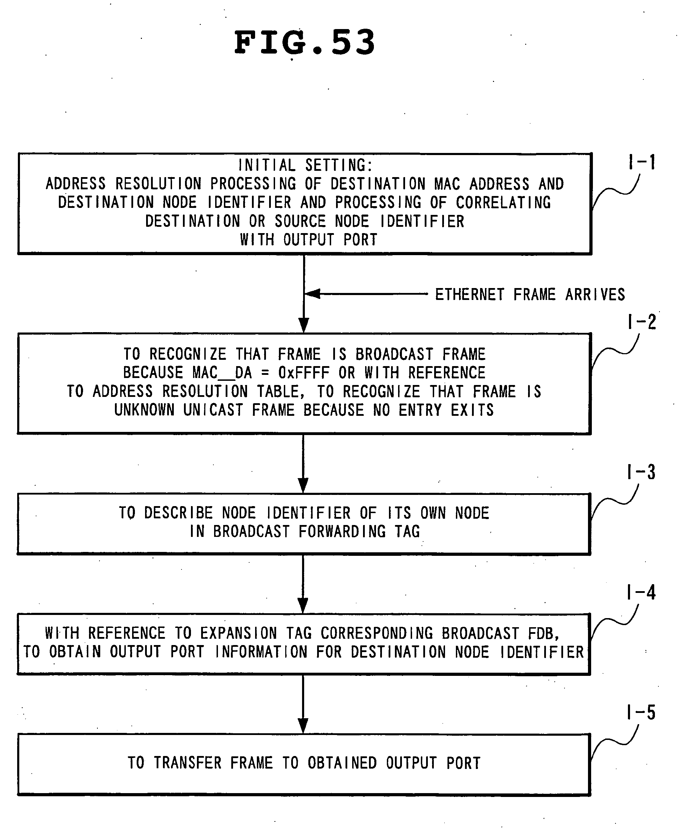

Description will be started with the processing of the node 900-1 as an ingress edge node. Fig. 53 is a flow chart of the broadcast forwarding processing of the ingress edge node 900-1.

As the initial state, each node 900-1 conducts address solution processing of a destination node identifier corresponding to a destination MAC address and processing of correlating a destination node identifier or a source node identifier with an output port at Step I-1. These processing is conducted by using the server 3200 or the like, for example.

Upon receiving the broadcast frame (MAC_DA = 0 x FFFF), the node 900-1 recognizes that the received frame is a broadcast frame because MAC_DA = 0 x FFFF. Upon receiving a frame directed to MAC_#Y, search the address resolution table 3101 and when no entry of MAC_#Y is found, recognize that the received frame is a unknown unicast frame (Step I-2). In such a case, describe the node identifier "900-1" of its own node in the broadcast forwarding tag 2508 (Step I-3).

Thereafter, with reference to the expansion tag corresponding broadcast FDB 5202, obtain information that output ports for the node 900-1 are the ports #2 and #3 (Step I-4) to output the Ethernet(R) frame with an expansion tag 2300 to the ports #2 and #3 (Step I-5). The output frame arrives at the nodes 900-2 and 900-8 (hereinafter, no description about the node 900-8 will be made).

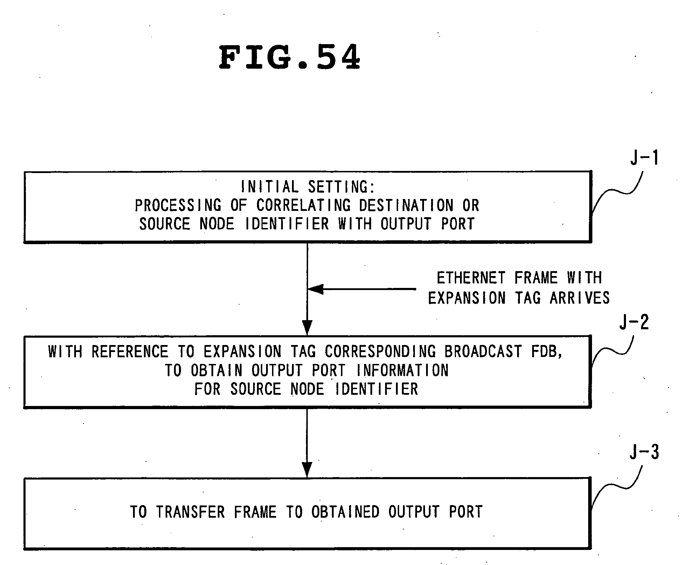

Subsequently, processing of the core nodes 900-2 and 900-3 will be described. Fig. 54 is a flow chart of the core nodes 900-2 and 900-3. Also in the core nodes 900-2 and 900-3 similarly to the node 900-1, correlation of an output port with a node identifier of a destination node or a source node is made at Step J-1. Upon receiving the Ethernet(R) frame with an expansion tag 2300, the node 900-2 refers to the expansion tag corresponding broadcast FDB 5203 to recognize that output ports for the source node identifier 900-1 are the ports #2, #3 and #4 (Step J-2) and transfers the Ethernet(R) frame with an expansion tag 2300 to these ports (Step J-3). The node 900-3 having received the frame (description of the nodes 900-5 and 900-9 is omitted) refers to the expansion tag corresponding broadcast FDB 5204 to confirm that an output port for the source node identifier 900-1 is the port #4 (Step J-2) and transfers the Ethernet(R) frame with an expansion tag 2300 to the port #4 (Step J-3). The transferred frame arrives at the edge node 900-4.

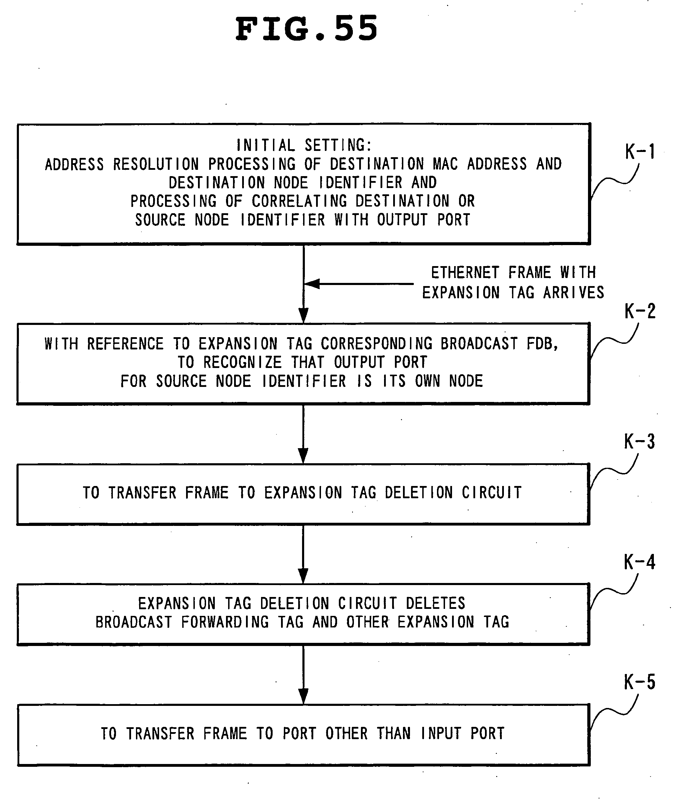

Subsequently, processing of the egress edge node 900-4 will be described. Fig. 55 is a flow chart of the' node 900-4. Also in the egress edge node 900-4 similarly to the node 900-1, address solution processing between a destination MAC address and a destination node identifier and correlation of an output with a node identifier of a destination node or a source node are made at Step K-1. Upon receiving the Ethernet(R) frame with an expansion tag 2400, the node 900-4 refers to the expansion tag corresponding broadcast FDB 5205 to obtain an identifier "END" indicating that an output port entry for the source node identifier 900-1 is its own node at Step K-2. The identifier "END" is described in an output port field for a node identifier entry of a source node when an output port exists only one on the transfer path, for example.

Thereafter, at Step K-3, output the frame to the output port connected to the expansion tag deletion circuit in the node and delete the broadcast forwarding tag 2508 (Step K-4) to convert the frame into the ordinary Ethernet(R) frame with a VLAN tag 2200. When the converted Ethernet(R) frame with a VLAN tag 2200 has MAC_DA = 0 x FFFF, the node 900-4 transfers the frame to other transfer port than the input port (Step K-5).

When the converted Ethernet(R) frame with a VLAN tag 2200 is not a broadcast frame, the node 900-4 refers to the ordinary FDB 3106 and when no entry exists for the MAC_DA of the Ethernet(R) frame with a VLAN tag 2200, transfers the frame to other transfer port than the input port (Step K-5). As a result, the broadcast frame whose MAC_DA is 0 x FFFF is transferred to the hosts A, B, C, D and Y. Also when the' host Y is newly connected (when the frame is an unknown unicast frame directed to the host Y), the frame is transferred to the host Y.

As described in the foregoing, according to the broadcast forwarding method of the present invention, with respect to a broadcast frame or an unknown unicast frame, with a node identifier of an ingress edge node stored in the broadcast forwarding tag, a core node conducts frame transfer based on the node identifier in the broadcast forwarding tag. As a result, while a conventional node involves MAC address search of an FDB, the present invention requires no MAC address search and determines an output port based on a node identifier stored in a tag, thereby enabling drastic reduction in the amount of memory, as well as enabling high-speed forwarding.

The description so far is made with respect to a case where all the Ethernet(R) frames with a VLAN tag applied to an ingress edge node are converted into frames with an expansion tag as an example. The present invention also enables transfer of an Ethernet(R) frame with a VLAN tag, and a forwarding method executed in such a case will be described in the following.

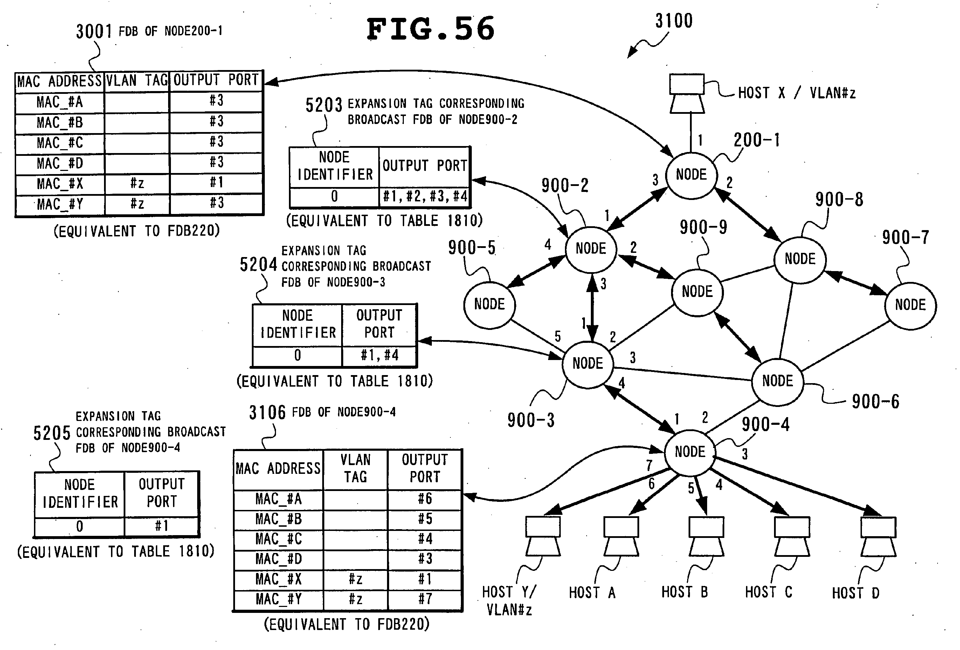

Fig. 56 shows one example of such cases, in which when a frame is transferred from the host X belonging to a VLAN#z to the host Y similarly belonging to the VLAN#z, the ingress node 200-1 is an existing Ethernet(R) switch.

For conducting frame transfer processing when an Ethernet(R) frame with a VLAN tag is applied to the nodes 900-2 to 9 of the present invention, according to the present invention, tag values ranging from 0 to 4095 are divided for each use in an ordinary VLAN tag and an expansion tag of the present invention. Although this division method is arbitrary, assume here, for the purpose of simplicity, that with a boundary value denoted as A, a tag below the boundary value A is used as an ordinary VLAN tag and a tag not less than the boundary value A as an expansion tag. In Fig. 56, assume that #z (node identifier) < A.

Upon receiving the Ethernet(R) frame with a VLAN tag 2200, the nodes 900-2 to 9 broadcast the frame. Broadcast path may be set for each ordinary VLAN tag in one case, set for each tag group which is a group of several tags or set one for all the ordinary VLAN in another. Correspondence between a tag of a set broadcast path and an output port is stored in the expansion tag corresponding broadcast FDB. Held here are both an output port for a node identifier (not less than the value A) stored in an expansion tag and an output port for a tag value (below A) of an ordinary VLAN.

Description will be made in the following of a case where a broadcast path is set for each tag group obtained by grouping several tags. Divide ordinary VLAN values below the above-described boundary value A into a plurality of ranges and set a broadcast path for each range. In a case, for example, where the boundary value A is set to be "3001", setting is made by representing the VLAN tag value ranging from 0 to 1000 as "0", the value ranging from 1001 to 2000 as "1001" and the value ranging from 2001 to 3000 as "2001". Then, set a broadcast path for each of the VLAN tags "0", "1001" and "2001". Thus setting a plurality of broadcast paths according to a value of VLAN enables distribution of traffic transfer in the network when transferring a frame by broadcasting.

To which value the boundary value A is set or into how many ranges ordinary VLAN values below the boundary value A are divided is not limited to the above-described setting example and can be arbitrarily set.

Specific example will be described with reference to Fig. 56. In Fig. 56, for all the ordinary VLAN tag values, one broadcast path is set and for all the ordinary VLAN, the node identifier is #0. In Fig. 56, to the node 200-1, the Ethernet(R) frame 2200 with an ordinary VLAN tag is applied from the host X. The node 200-1 refers to the FDB 3001 to output the frame to the port #3. Upon receiving the frame, the node 900-2 regards the node identifier of a destination as #0 because the tag value of the received frame is below A, refers the expansion tag corresponding broadcast FDB 5203 to obtain an output port for the node identifier #0 and broadcasts the frame to other ports #2, 3 and 4 than the port #1 through which the frame is input.

The nodes 900-3 and 900-9 having received a frame similarly broadcast the frame to the output port for the node identifier #0 (in Fig. 56, FDB of the node 900-9 is omitted). The node 900-4 having received the frame from the node 900-3 recognizes that the egress node is its own node because an output port for the node identifier #0 is only the input port of the frame. In this case, since the value of the tag of the received frame is below A, refer to the FDB 3106 to obtain the output port #7 without deleting the tag and transfer the frame.

As described in the foregoing, even when the Ethernet(R) frame 2200 with an ordinary VLAN tag is applied, a node of the present invention enables frame transfer based on a tag to drastically reduce the amount of memory, as well as realizing high-speed forwarding as has been described so far.

(Mode of Implementation Related to Forwarding Method in Case Where Customer Separation Tag is Used)

As a third mode of implementation, a forwarding method will be described which is to be executed when a customer separation tag is used together with a forwarding tag with respect to the forwarding method using an Ethernet (R) frame with an expansion tag according to the present invention.

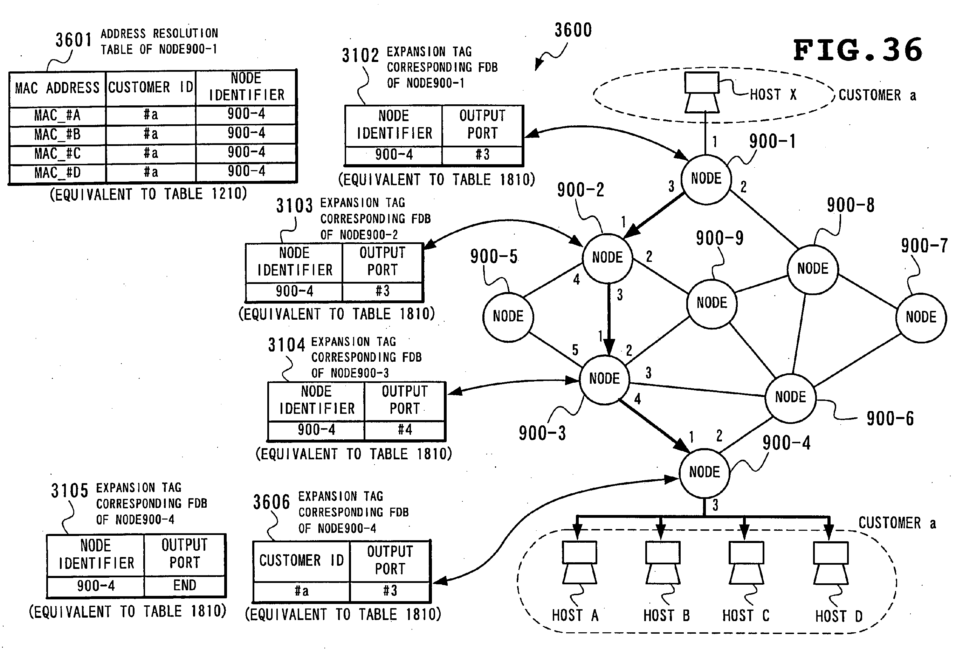

Fig. 36 shows a forwarding method in a proposed network 3600. As compared with the proposed network 3100, the proposed network 3600 has modification in that the hosts A, B, C and D are connected to the port #3 of the node 900-4 (the remaining part is the same).

Also assume that the host X connected to the node 900-1 and the hosts A, B, C and D connected to the node 900-4 are the same customer #a. In Fig. 36, similarly to Fig. 23, assume that a frame is transferred from the host X to the hosts A to D and its path is set to be from the host X through the node 900-1, the node 900-2, the node 900-3 and the node 900-4 to the hosts A, B, C, D by a server not shown or the like.

Each of the nodes 900-1 to 900-4 on the transfer path has the following as a table for frame transfer. The node 900-1 as an ingress edge node has the address resolution table 3601 and the expansion tag corresponding FDB 3102, the nodes 900-2 and 900-3 as a core node have the expansion tag corresponding FDBs 3103 and 3104, respectively, and the node 900-4 as an egress edge node has the expansion tag corresponding FDBs 3105 and 3606. Since in Fig. 36, operation of the ingress edge node 900-1 and the egress edge node 900-4 differs from that of Fig. 23 and operation of the core nodes 900-2 and 900-3 is the same as that of Fig. 23, description will be made mainly of the operation of the nodes 900-1 and 900-4 in the following.

The node 900-1 as an ingress edge node obtains, from a MAC address of a destination host of an input frame, a customer separation identifier (hereinafter denoted as a customer ID) and a egress node identifier of an edge to which the destination host is connected and describes the node identifier of the egress edge node as the destination in the forwarding tag 2500 and describes the customer ID in the customer separation tag 2501, as well as obtaining an output port for the destination node identifier to output the Ethernet(R) frame with an expansion tag 2400 to the output port.

For conducting such transfer processing, the node 900-1 has the address resolution table 3601 and the expansion tag corresponding FDB 3102. Described in the address resolution table 3601 are a customer ID corresponding to a MAC address of each destination host and a node identifier of a destination node, while described in the expansion tag corresponding FDB 3102 is an output port through which the output is made for a node identifier of a destination node. Although illustrated here is a case where the address resolution table 3601 is structured to have description of a customer ID corresponding to a MAC address of a destination host and a node identifier of a destination node, there is a case where a MAC address of a destination host, a customer ID corresponding to a VLAN tag and a node identifier of a destination node are described. The address resolution table 3601 is equivalent to the frame attribute information/ network information correspondence table 1210 in Fig. 13 (the MAC address in the address resolution table 3601 corresponds to the frame attribute information 1211 and the customer ID and the node identifier in the address resolution table 3601 correspond to the network information 1212-1), while the expansion tag corresponding FDB 3102 is equivalent to the forwarding table 1810 in Fig. 19.

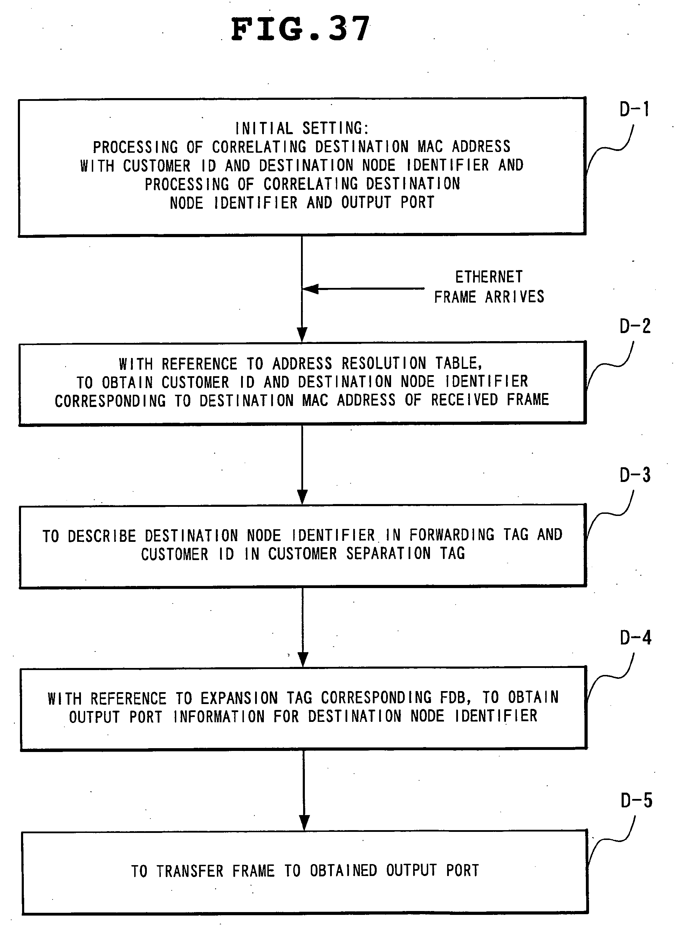

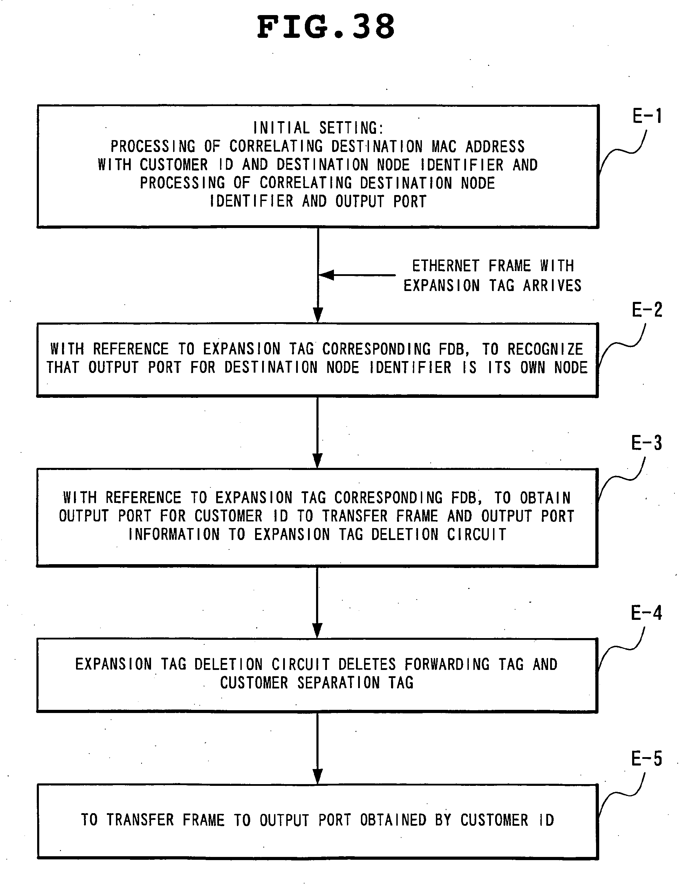

Figs. 37 and 38 are flow charts related to forwarding processing of the ingress edge node 900-1 and the egress edge node 900-4, respectively.

In each of the nodes 900-1 and 900-4, address solution processing of a customer ID and a destination node identifier corresponding to a destination MAC address and processing of correlating a destination node identifier and an output port are conducted as an initial state by, for example, such server 3200 as shown in Fig. 24 (Steps D-1 and E-1). In the server 3200, MAC address information of a host connected to each edge node and customer information to which each host belongs are registered at the time of initial setting. Based on the registration, the server 3200 correlates the destination MAC address, the customer ID and the destination node identifier. Also based on connection conditions of all the nodes in the network, determine an appropriate path to, as a result, determine a destination node identifier and an output port in each node.

Subsequently, processing of the ingress edge node 900-1 will be described. Upon receiving a frame directed to the MAC address A, B, C, D, the node 900-1 refers to the address resolution table 3601 to recognize that the MAC address A, B, C, D belongs to the customer #a and a node identifier of the corresponding destination node is 900-4 (Step D-2). Thereafter, the node 900-1 describes 900-4 in the forwarding tag 2500 and describes #a in the customer separation tag 2501 (Step D-3). Thereafter, with reference to the expansion tag corresponding FDB 3102, obtain information that an output port for the node 900-4 is the port #3 (Step D-4) to output the Ethernet(R) frame with an expansion tag 2400 to the port #3 (Step D-5). The output frame arrives at the node 900-2.

Structure of the ingress edge node 900-1 is as shown in Fig. 24. Related to the operation of the ingress edge node 900-1, difference from the proposed network 3100 is the following point. The expansion tag generation unit 1220 of the expansion tag generation circuit 910 having received a frame from the MAC switch 230 refers to the address resolution table 1210 to determine a customer ID and a destination node, inserts the forwarding tag 2500 storing a destination node identifier and the customer separation tag 2501 storing the customer ID into the frame to convert the frame into the Ethernet(R) frame with an expansion tag 2400 and transfers the converted frame to the expansion tag frame switch 930. Similarly to the proposed network 3100, the expansion tag frame switch 930 refers to the forwarding tag 2500 to determine an output port and transfers the frame.

Subsequently, the core node 900-2, 900-3 in the network which has received the Ethernet(R) frame with an expansion tag 2400 from the ingress edge node 900-1 determines an output port based on the forwarding tag 2500 of the Ethernet(R) frame with an expansion tag 2400 and transfers the frame to the relevant port similarly to the operation in the proposed network 3100.

Subsequently, the egress edge node 900-4 having received the Ethernet(R) frame 2400 from the core node 900-3 in Fig. 36, when confirming that its own node is a destination, determines an output port based on a customer ID stored in the customer separation tag 2501, deletes the forwarding tag 2500 and the customer separation tag 2501 from the Ethernet(R) frame with an expansion tag 2400 and makes the frame be an ordinary Ethernet(R) frame to transfer the frame to the determined port. For conducting this processing, the node 900-4 has the expansion tag corresponding FDBs 3105 and 3606. In the expansion tag corresponding FDB 3105, a destination node identifier and its corresponding output port are described and in the expansion tag corresponding FDB 3606, a customer ID and its corresponding output port are described.

Upon receiving the Ethernet(R) frame with an expansion tag 2400, the node 900-4 refers to the expansion tag corresponding FDB 3105 at Step E-2 to obtain the identifier "END" indicating that an output port entry for the destination node identifier 900-4 is its own node. Thereafter, refer to the expansion tag corresponding FDB 3606 at Step E-3 to search for an output port entry for the customer ID stored in the customer separation tag 2501 and obtain the port #3.

Upon obtaining the output port #3, output the frame to the output port connected to the expansion tag deletion circuit in the node at Step E-4 and delete the forwarding tag 2500 and the customer separation tag 2501 to convert the frame into the Ethernet(R) frame 2200 with an ordinary VLAN tag. The node 900-4 having converting the frame into the Ethernet(R) frame with a VLAN tag 2200 outputs the frame to the output port #3 at Step E-5. Receiving a self-addressed frame by each of the hosts A to D leads to transfer of the Ethernet(R) frame with a VLAN tag 2200 to each host.

Fig. 24 also shows a structure of the egress edge node 900-4. Related to the operation of the egress edge node 900-4, difference from the proposed network 3100 is the following point. Upon receiving a frame from the core node 900-3 by the input port 901-in or 902-in, the expansion tag frame switch 930 refers to the expansion tag corresponding FDB 1810 (corresponding to the expansion tag corresponding FDBs 3105 and 3606) to recognize that its own node is a destination node, as well as obtaining output port information from the customer ID. Upon obtaining the output port information, transfer the information and the frame to the expansion tag deletion circuit 940. The expansion tag deletion circuit 940 deletes the forwarding tag 2500 and the customer separation tag 2501 to convert the Ethernet(R) frame with an expansion tag 2400 into the Ethernet(R) frame 2200 with an ordinary VLAN tag or an ordinary Ethernet(R) frame and transfer the frame together with the output port information to the MAC switch 230. The MAC switch 230 outputs the relevant Ethernet(R) frame with a VLAN tag 2200 to any relevant one of the output ports 201-out to 203-out according to the received output port information.

As described in the foregoing, in the forwarding method using a forwarding tag and a customer separation tag according to the present mode of implementation, an ingress edge node maps a MAC address of a destination host into an identifier and a customer ID of an egress edge node to which the destination host is connected to forward a frame based on the destination edge node identifier. In addition, a core node forwards the frame based on the destination node identifier to enable the frame to reach the egress edge node. The egress edge node deletes the forwarding tag and determines an output port based on the customer ID stored in the customer separation tag to transfer the frame. As a result, the egress edge node requires no learning of a MAC address of a connected host.

Thus, according to the forwarding method of the present mode of implementation, similarly to the method according to the already described mode of implementation, forwarding is conducted with a node identifier of an egress edge node representing a plurality of hosts connected to the egress edge node, thereby drastically reducing the amount of memory of a FDB of a core node in particular. Moreover, at the egress edge node, a plurality of hosts belonging to the same customer are grouped by a customer ID to determine an output port, thereby eliminating the need of learning a MAC address of a connected host.

<Mode of Implementation Related to Hierarchical network>

Hierarchical network using a node according to the present invention will be described as a fourth mode of implementation.

<Structure of Hierarchical network>

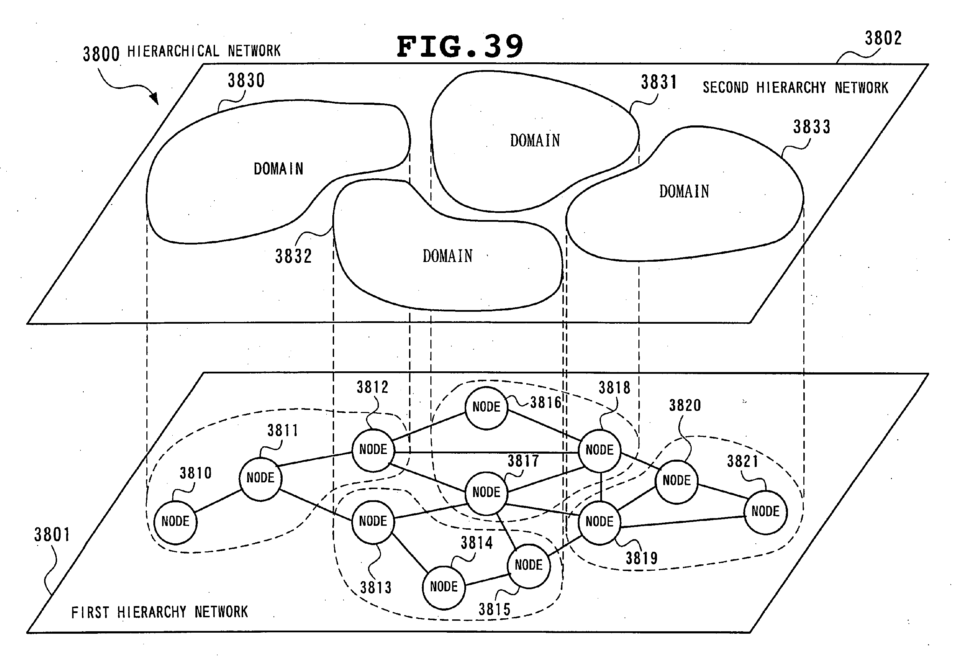

Fig. 39 shows a structure of a hierarchical network 3800. In the forwarding methods according to the first and second modes of implementation, since data is transferred with a destination node identifier stored in the forwarding tag 2500 whose address region has 12 bits (a fixed length of a certain size in general), the number of nodes that can be accommodated in the network is limited to about 4000 (a certain finite number in general). For eliminating such limitation on the number of nodes to accommodate more nodes than those of the limited number, the network is layered. The hierarchical network 3800 is a two-stage hierarchical network, in which a first hierarchy network 3801 shows physical connection of nodes in the network and a second hierarchy network 3802 divides the respective nodes of the first hierarchy network 3801 into logical domains 3830 to 3833.

In the domain 3830, nodes 3810, 3811 and 3812 are accommodated, in the domain 3831, nodes 3816, 3817 and 3818 are accommodated, in the domain 3832, nodes 3813, 3814 and 3815 are accommodated and in the domain 3833, nodes 3819, 3820 and 3821 are accommodated. Representing each node as a combination between a domain identifier and a node identifier enables assignment of a node identifier unique in a domain to a node in other domain, thereby drastically increasing the number of nodes accommodated. For the convenience of explanation, even in a different domain, each node is assigned a different identifier in Fig. 39. Since the hierarchical network shown in Fig. 39 has two stages, the number of nodes that can be accommodated is about 16 million nodes at the maximum.

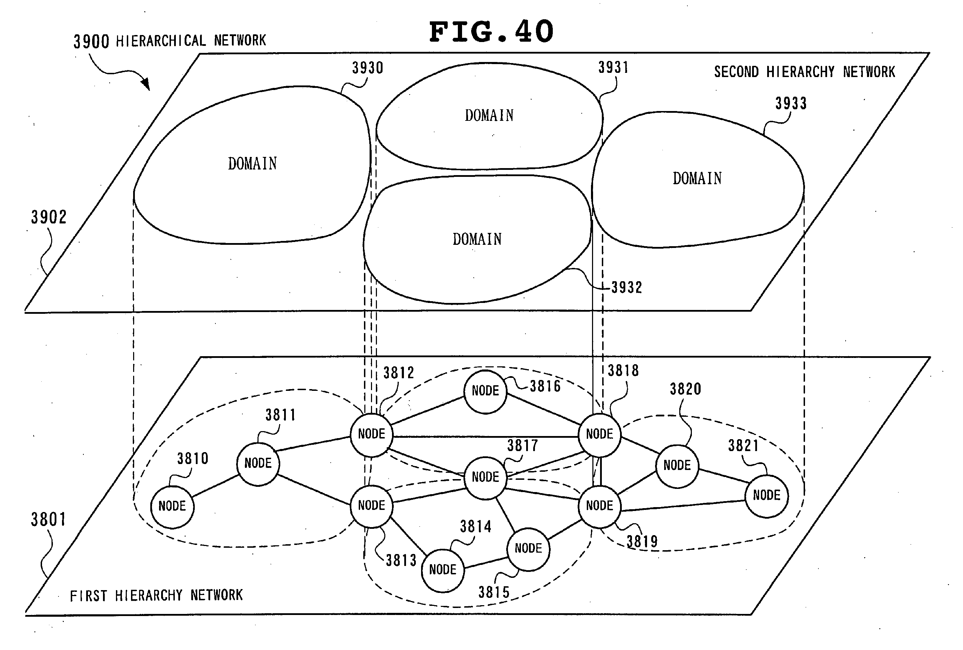

In the hierarchical network 3800 shown in Fig. 39, a boundary between the domains is set to be on a link. On the other hand, it is also possible to set a domain boundary on a node as shown in Fig. 40. In a hierarchical network 3900 shown in Fig. 40, for a physical connection network (first hierarchy network 3801) similar to that in Fig. 39, domains 3930, 3931, 3932 and 3933 are set in a second hierarchical network 3902.

In the domain 3930, the nodes 3810, 3811, 3812 and 3813 are accommodated, in the domain 3931, the nodes 3812, 3816, 3817 and 3818 are accommodated, in the domain 3932, the nodes 3813, 3814, 3815, 3817 and 3819 are accommodated and in the domain 3933, the nodes 3818, 3819, 3820 and 3821 are accommodated.

In Fig. 40, a boundary between the domains 3930 and 3931 is on the node 3812, that between the domains 3930 and 3932 is on the node 3813, that between the domains 3931 and 3932 is on the node 3817, that between the domains 3931 and 3933 is on the node 3818 and that between the domains 3932 and 3933 is on the node 3819. Even in a case where a node serves as a domain boundary, representing each node as a combination between a domain identifier and a node identifier enables drastic increase in the number of nodes that can be accommodated.

<Hierarchical network Compatible Frame Format>

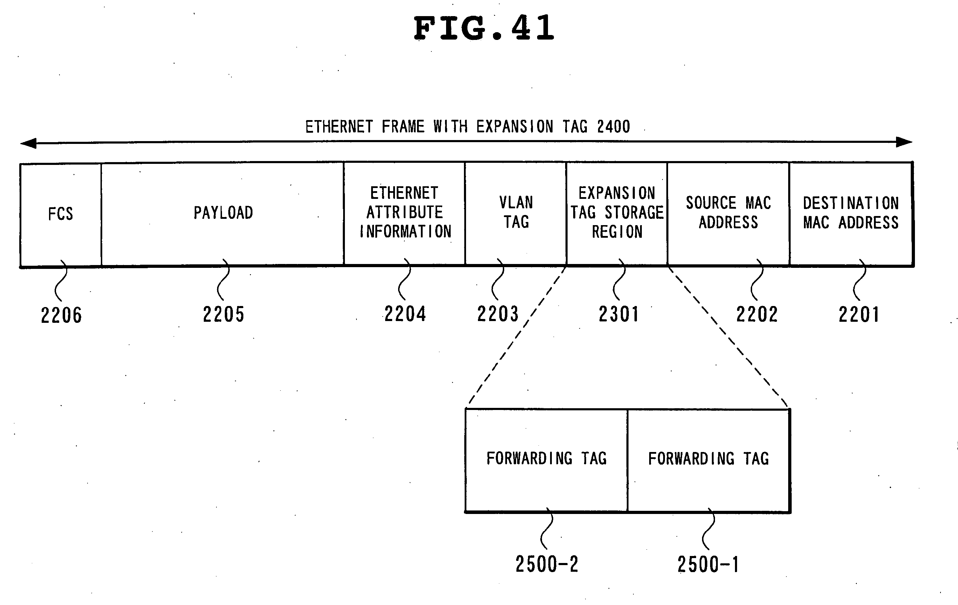

Fig. 41 shows a frame format for data transfer in such hierarchical networks 3800 and 3900. The Ethernet(R) frame with an expansion tag 2400 has two forwarding tags 2500-1 and 2500-2 stored in its expansion tag storage region 2301.

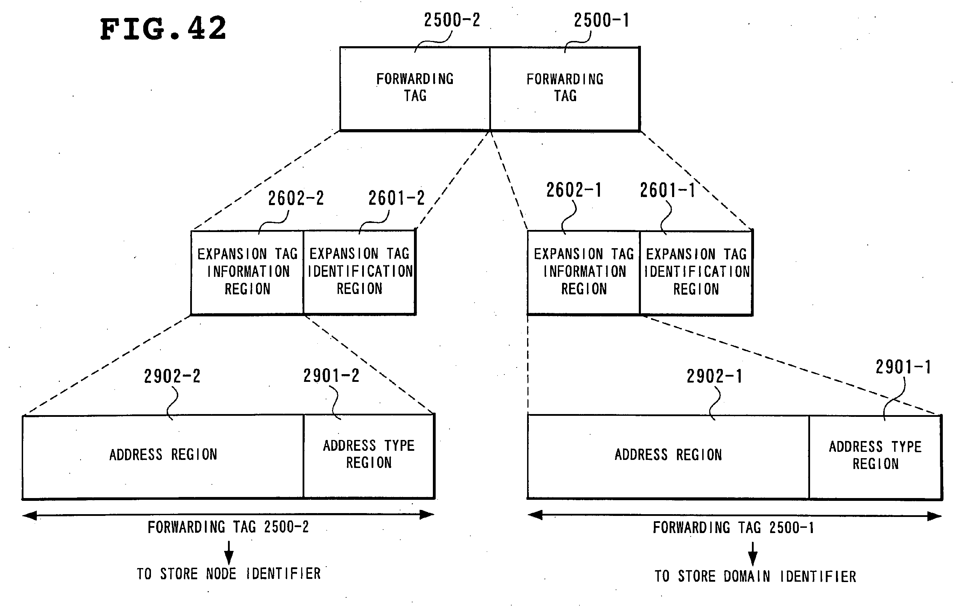

Fig. 42 shows a structure of each of the forwarding tags 2500-1 and 2500-2. As has been described in Fig. 6, the forwarding tags 2500-1 and 2500-2 are formed of expansion tag identification regions 2601-1, 2 and expansion tag information regions 2602-1, 2, respectively, and the expansion tag information regions 2602-1, 2 are formed of address type regions 2901-1, 2 and address regions 2902-1, 2, respectively, as shown in Fig. 9. In the hierarchical network, a domain identifier is stored in the forwarding tag 2500-1 and a node identifier is stored in the forwarding tag 2500-2.

More specifically, stored in the address type regions 2901-1, 2 are types of identifiers to be stored in the address regions 2902-1, 2 (information indicative of a domain and information indicative of a node, respectively) and stored in the address regions 2902-1, 2 are a domain identifier and a node identifier. According to the format shown in Fig. 9, the address type region 2901 has four bits to be able to support a hierarchical network having 16 stages at the maximum.

<Forwarding Example in Case Where Link Serves as Domain Boundary>

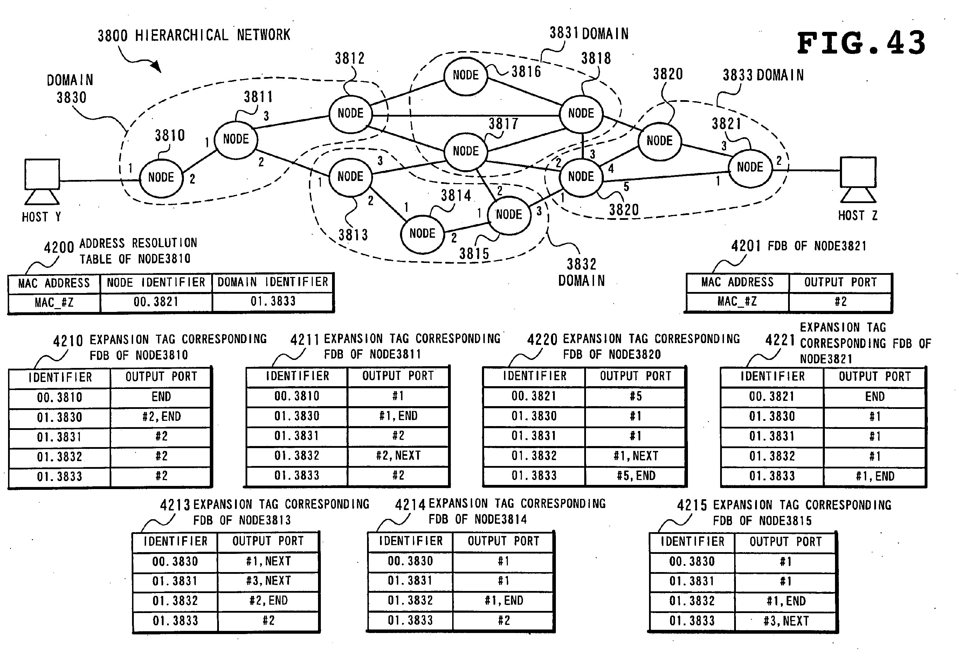

Fig. 43 shows a forwarding example in the hierarchical network 3800 in which a link serves as a domain boundary. In this example, a frame is transferred from the host Y connected to the node 3810 belonging to the domain 3830 to the host Z connected to the node 3821 belonging to the domain 3833. In the forwarding in the hierarchical network 3800, a frame is transferred to a desired domain with reference to the forwarding tag 2500-1 in which a domain identifier is stored and in the domain, the frame is transferred to a desired node with reference to the forwarding tag 2500-2 in which a node identifier is stored.

The transfer path is assumed to be set by a server or the like similarly to the first and second modes of implementation and at the domain level (second hierarchy network level), the path is assumed to be from the host Y through the domain 3830 and the domain 3832 to the domain 3833, at the node level in the domains 3830 and 3832 until the destination domain (first hierarchy network level), the path is assumed to be from the node 3810 through the node 3811, the node 3813 and the node 3814 to the node 3815 and at the node level in the destination domain 3833 (first hierarchy network level), the path is assumed to be from the node 3820 through the node 3821 to the host Z.

For transferring a frame on a transfer path, each of the nodes 3810 to 3812 has the following. The node 3810 as the ingress edge node has an address resolution table 4200 and an expansion tag corresponding FDB 4210, the nodes 3811 to 3820 as a core node have expansion tag corresponding FDBs 4211 to 4220 and the node 3821 as the egress edge node has an expansion tag corresponding FDB 4221 and a FDB 4201.

Described in the address resolution table 4200 are a MAC address of a destination host, and correspondingly a node identifier of an egress edge node to which the host is connected and a domain identifier of a domain to which the edge node belongs.

Described in the expansion tag corresponding FDBs 4210 to 4221 are a domain identifier/node identifier and an output port for the identifier. Related to a domain at a hop subsequent to the node, in particular, in an output port entry for the domain identifier, NEXT is described together with the output port. Related to a domain to which a node in question belongs, in a output port entry for the domain identifier, "END" is described together with the output port. Similarly, as an output port entry for a node identifier of its own node, only the "END" is described.

Described in the FDB 4201 are a MAC address of a host connected to the egress edge node and an output port for the host.

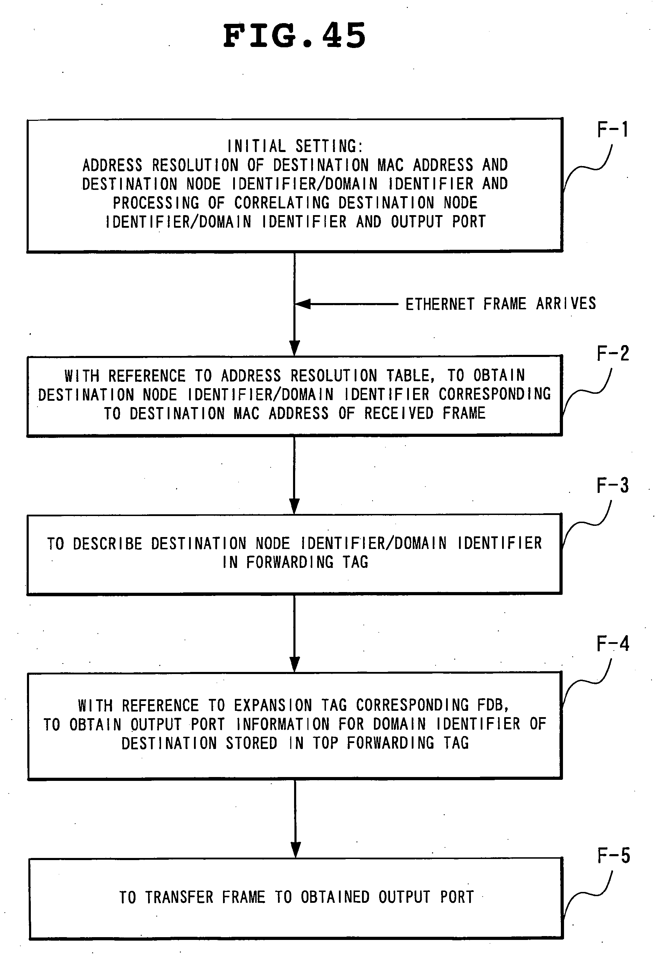

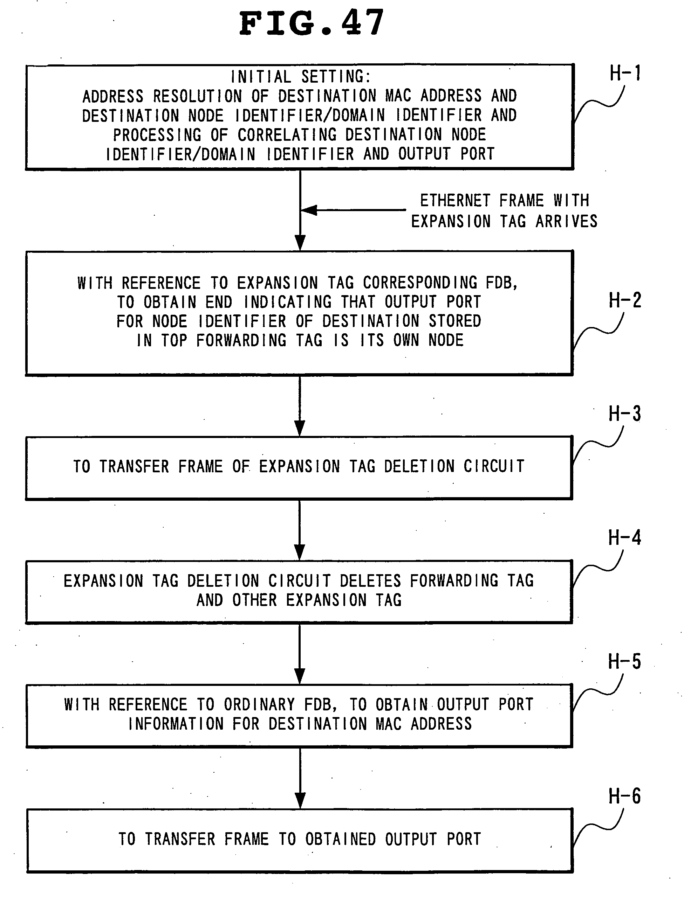

Figs. 45, 46 and 47 are flow charts related to forwarding processing at the ingress edge node 3810, the core nodes 3811, 3813, 3814, 3815 and 3820 and the egress edge node 3821, respectively. As the initial state, the edge nodes 3810 and 3821 conduct address solution of a destination node identifier/domain identifier corresponding to a destination MAC address at Steps F-1 and H-1, the respective nodes 3810 to 3821 conduct processing of correlating a destination node identifier/domain identifier and an output port at Steps F-1, G-1 and H-1. These processings are conducted by a server or the like similarly to the first and second modes of implementation.

<Ingress Edge Node>

Upon receiving a frame from the host Y, the node 3810 as an ingress edge node refers to the address resolution table 4200 to obtain the domain 3833 to which the nodes 3820 and the node 3821 belong as information about a node to which the destination host Z is connected (Step F-2). Described in the address resolution table 4200 are a MAC address of a destination host, a node identifier of an egress edge node to which the host is connected and a domain identifier of a domain to which the node belongs.

As has been described with reference to Figs. 9 and 42, a node identifier and a domain identifier are represented as a combination between an address type and an address. Here, with the type of node identifier set to be 00 and the type of domain identifier to be 01, the node identifier is represented as 00.38xx and the domain identifier as 01.38xx. Generation of the address resolution table 4200 is made by a server or the like similarly to the first and second modes of implementation.

Each server holds information about a correspondence relation between each node and each domain. Upon obtaining each information from the address resolution table 4200, the node 3810 at Step F-3 describes a domain identifier 01.3833 in the top forwarding tag 2500-1 and a node identifier 00.3821 in the second forwarding tag 2500-2 (01 and 00 are described in the address type regions 2901-1, 2, while 3833 and 3821 are described in the address regions 2902-1, 2).

When the forwarding tags 2500-1 and 2500-2 are added, the ingress edge node 3810 determines an output port with reference to the expansion tag corresponding FDB based on the information in the top forwarding tag 2500-1 to transfer the frame. With reference to the expansion tag corresponding FDB 4210, the node 3810 finds that output port information for the information 01.3833 in the top forwarding tag 2500-1 is the port #2 (Step F-4) to transfer the frame to the output port #2 (Step F-5). As a result, the frame arrives at the node 3811.

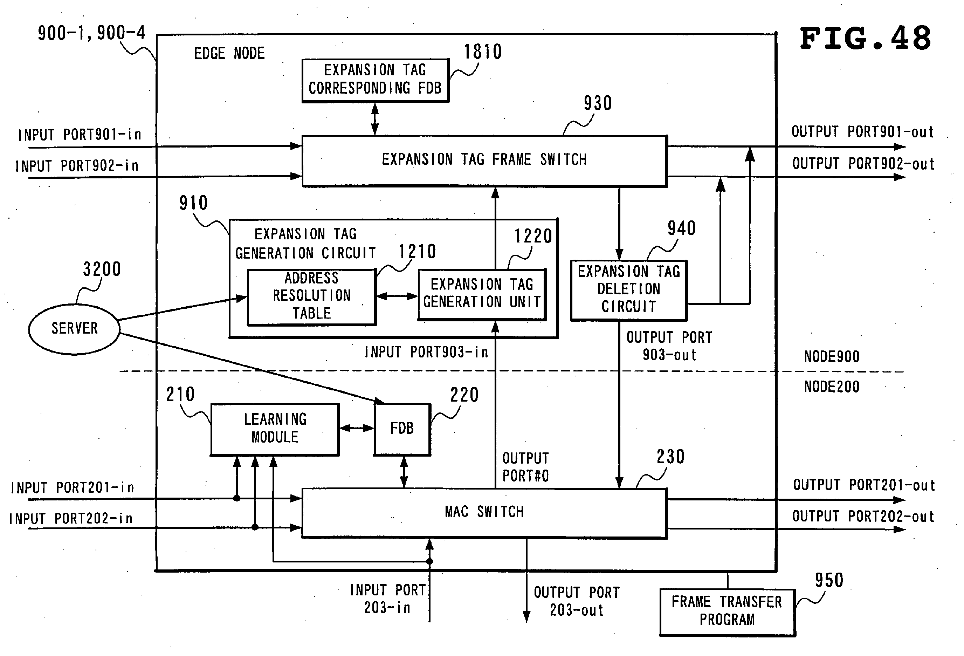

Fig. 48 shows structures of the ingress edge node 3810, the egress edge node 3821 and the core nodes 3811 to 3820. The core nodes 3811 to 3820 are formed only of a part above a dotted line. Here, regarding operation of each node which has been described with respect to the forwarding method in the non-hierarchical network according to the first and second modes of implementation, only a difference in operation in the hierarchical network will be described.

At the ingress edge node 3810, operation at the time of generating a forwarding tag differs. More specifically, upon receiving a frame whose tag is to be forwarded from the output port #0 of the MAC switch 230, the expansion tag generation unit 1220 refers to the address resolution table 1210 to obtain the destination node identifier.

Here, in the hierarchical network, an egress node to which a destination host is connected is represented by a node identifier and a domain identifier to which the node belongs. Therefore, entries of the address resolution table 1210 have a node identifier and a domain identifier. The expansion tag generation unit 1220 having obtained each identifier generates the forwarding tag 2500-1 in which the domain identifier is stored and the forwarding tag 2500-2 in which the node identifier is stored and stores the forwarding tag 2500-1 at the top and the forwarding tag 2500-2 at the second position to transfer the obtained frame to the expansion tag frame switch 930.

With reference to the expansion tag corresponding FDB 1810, the expansion tag frame switch 930 determines an output port. At this time, determine the output port based on the top forwarding tag. Since the domain identifier/node identifier stored in the forwarding tag are each formed of 4 bits of an address type region and 12 bits of an address region, each entry in the expansion tag corresponding FDB 1810 is changed from 12 bits in Fig. 24 to 16 bits.

<Core node: Outside Destination Domain>

The core nodes 3811, 3813 and 3814 on the transfer path obtain output port information with reference to the expansion tag FDB to transfer the frame similarly to the processing at and after Step F-4 of the node 3810. The node 3811 having received a frame from the node 3810 refers to the expansion tag corresponding FDB 4211 at Step G-2 to find that the output port information for 01.3833 indicates the port #2. Since the output port information includes no entry of NEXT which indicates that the next hop is the destination domain, transfer the frame to the obtained output port #2 at Step G-6. Similarly, the nodes 3813 and 3814 obtain the output port information for 01.3833 with reference to the expansion tag corresponding FDBs 4123 and 4214 (Step G-2) to transfer the frame to the port (Step G-6). As a result, the frame arrives at the node 3815.

<Core node: Boundary Node to Destination Domain>

The node 3815 similarly refers to the expansion tag corresponding FDB 4215 to search for output port information for 01.3833. Since the node 3815 is a node as a boundary on the target domain 3833, in the output port information for 01.3833, together with the port #3, "NEXT" is described which indicates that the destination domain 3833 starts at the next hop (Step G-2). Since the obtained output port information includes the entry "NEXT" (Step G-3), the node 3830 transfers the frame and the output port information to the expansion tag deletion circuit (Step G-4). The expansion tag deletion circuit deletes the top forwarding tag 2500-1 and places the second forwarding tag 2500-2 storing the node address at the top (Step G-5) to transfer the obtained frame to the output port #3 (Step G-6).

When the domain identifier stored in the forwarding tag coincides with the domain to which its own node belongs at Step G-2, the output port information includes the entry "END". In such a case, at Steps G-3 to G-5, similarly to the case where the NEXT entry is included, delete the top forwarding tag by the expansion tag deletion circuit and transfer the obtained frame to the output port. As an example of a forwarding tag thus storing a domain identifier to which its own node belongs, there is a case where a frame is transferred from domain boundary nodes of a plurality of hierarchies in a hierarchical network having three or more stages which will be described in later mode of implementation. In a node having received such a frame from a domain boundary node, an identifier of a domain to which its own node belongs is stored in the top forwarding tag.

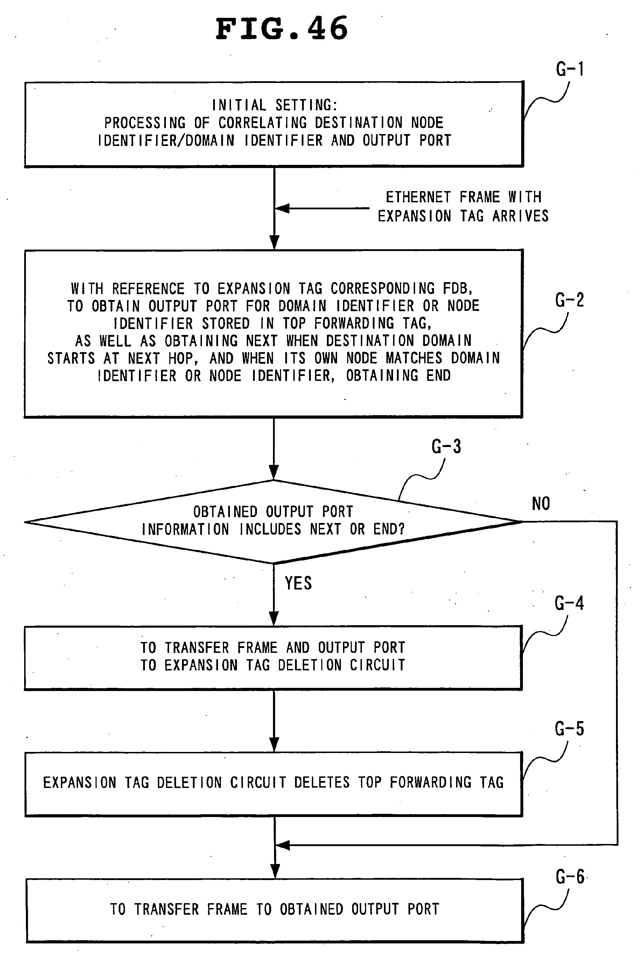

Another possible case is where an ingress edge node is a boundary node to a destination domain. In such a case, Step F-4 of Fig. 45 serves as Step G-2 in Fig. 46 to operate according to the flow chart of Fig. 46.

The domain boundary node is a node not existing in the non-hierarchical network which has been described in the first and second modes of implementation. In the node 3815, when the expansion tag frame switch 930 refers to the expansion tag corresponding FDB 1810 to obtain the entry "NEXT" indicating that the destination domain starts at the next hop, the frame and the output port information are transferred to the expansion tag deletion circuit 940. The expansion tag deletion circuit 940 deletes the top forwarding tag 2500-1 and makes the forwarding tag 2500-2 be the top tag to transfer the obtained frame to the relevant output port 901-out or 902-out.

<Core node: within Destination Domain>

The frame transferred from the node 3815 with the forwarding tag 2500-2 storing a node identifier at the top arrives at the node 3820. The node 3820 refers to the expansion tag corresponding FDB 4220 to obtain the output port #5 corresponding to the node identifier 00.3821 stored in the forwarding tag 2500-2 (Step G-2) and because the output port information fails to include the NEXT entry (Step G-3), transfers the frame to the port #5 (Step G-6).

<Egress Edge Node>

The frame arrives at the node 3821. The node 3821 refers to the expansion tag corresponding FDB 4221 to obtain END indicating that the destination node is its own node as the output port information for the information 00.3821 of the forwarding tag 2500-2 (Step H-2). Then, the node 3821 transfers the frame to the expansion tag deletion circuit (Step H-3). After deleting the forwarding tag 2500-2 (Step H-4) to make the frame be an ordinary Ethernet(R) frame, the expansion tag deletion circuit refers to the FDB 4201 as an FDB for an egress edge node to obtain the output port #2 for the destination MAC address MAC _#Z (Step H-5) and transfers the frame to the port #2 (Step H-6). As a result, the frame arrives at the host Z.

Processing of the egress edge node 3821 is the same as that in a non-hierarchical network which has been described in the first and second modes of implementation.

As described in the foregoing, in the forwarding method in a hierarchical network whose link serves as a domain boundary, an ingress edge node obtains a node identifier of an egress edge node to which a destination host is connected and a domain identifier to which the node belongs and stores the identifiers in the forwarding tags 2500-2 and 2500-1, respectively. Each node refers to the expansion tag corresponding FDBs 4210 to 4215 to transfer the frame to an output port corresponding to the domain identifier stored in the top forwarding tag 2500-1. Then, the boundary node 3815 to the destination domain deletes the top forwarding tag 2500-1 to make the forwarding tag 2500-2 in which the node identifier is stored be a top tag and each node in the destination domain refers to the expansion tag corresponding FDBs 4220 to 4221 to transfer the frame to the output port corresponding to the node identifier stored in the top forwarding tag 2500-2, whereby the frame arrives at the egress edge node 3821.

This enables, in the hierarchical network 3800, each node to transfer a frame to an egress edge node as a destination with reference only to the top forwarding tag. In other words, even when increasing a network scale by layering to expand an address region, since a reference address region at the time of forwarding is fixed, none of a switching rate is affected by the network scale.

In addition, since according to the present forwarding method, a frame is transferred to a desired domain with reference to a domain identifier and in the domain, the frame is transferred to a desired node with reference to a node identifier, each of the expansion tag corresponding FDBs 4210 to 4221 only needs to have as many entries as the number of domains and the number of edge nodes included in the domain. The expansion tag corresponding FDB 4210, for example, has a total of five entries including four as the number of domains and one as the number of edge nodes. This can be generalized as follows. With the number of domains as X and the number of edge nodes included in each domain as Y (for the purpose of simplicity, assume that each domain includes the same number of edge nodes), the number of entries of an expansion tag corresponding FDB of each node only needs to be X + Y. In a non-hierarchical network, entries as many as the total number of edge nodes are required, that is, X x Y, so that the number of FDB entries can be drastically reduced by layering.

Thus, according to the present forwarding method, only a top forwarding tag is referred to and an address region to be referred at the time of forwarding remains unchanged, scalability for the network scale with respect to a switching rate exists. Moreover, since the number of entries of an FDB can be drastically reduced, scalability exists for the network scale with respect also to the amount of memory of an FDB. In addition, since as a matter of course, tag forwarding is conducted with a destination node identifier as a key, MAC address entries as many as the number of hosts connected to an edge node can be degenerated to drastically reduce the amount of memory of an FDB. In addition to this memory reduction effect by the tag forwarding, the above-described effects are produced.

<Mode of Implementation Where Domain Boundary is Node>

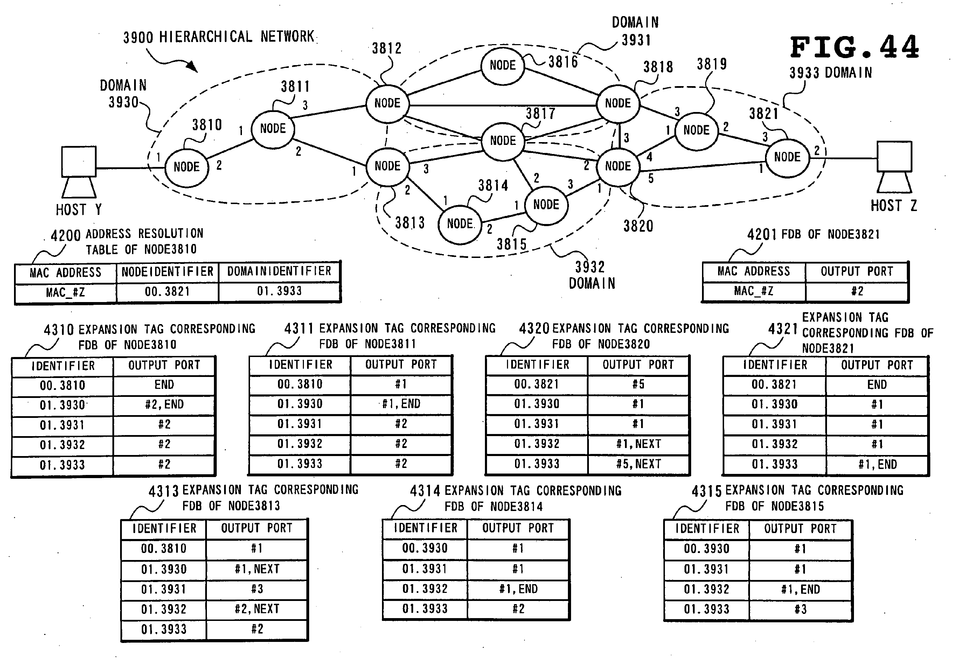

In the following mode of implementation, description will be made of forwarding in the hierarchical network 3900 in which a node serves as a domain boundary. Fig. 44 shows a forwarding example in the Hierarchical network 3900. Similarly to Fig. 43, assume that a frame is transferred from the host Y to the host Z and its path is the same. In the following, description will be made mainly of the difference from Fig. 43. Flow charts of the respective nodes related to the forwarding processing will be those shown in Figs. 45, 46 and 47 similarly to the case of the Hierarchical network 3800. Node structure is also the same as that in Fig. 48.

<Ingress Edge Node and Core node>

The ingress edge node 3810 having received a frame from the host Y refers to the address resolution table 4200 to obtain the domain identifier 01.3933 and the node identifier 00.3821 for MAC_#Z (Step F-2) and describe the identifiers in the forwarding tags 2500-1, 2 (Step F-3). Then, with reference to an expansion tag corresponding FDB 4310, obtain the output port #2 for the domain identifier 01.3933 (Step F-4) and transfer the frame to the obtained port (Step F-5). Upon receiving the frame, the core nodes 3811, 3813, 3814 and 3815 refer to expansion tag corresponding FDBs 4311 to 4315 to obtain an output port for the domain identifier 01.3933 (Step G-2) and output the frame to the port (Step G-6).

<Boundary Node>

Operation of the node 3820 having received the frame from the node 3815 is as follows. The node 3820 refers to an expansion tag corresponding FDB 4320 to search for an output port for the domain identifier 01.3933 stored in the top forwarding tag 2500-1 of the received frame (Step G-2). Since the corresponding output port is the port #5 and the entry NEXT indicating that the domain 3933 starts at the next hop is also described (Step G-3), transfer the frame and the output port information to the expansion tag deletion circuit (Step G-4), delete the forwarding tag 2500-1 at the expansion tag deletion circuit and bring the forwarding tag 2500-2 to the top position (Step G-5) to transfer the frame to the port #5 (Step G-6).

<Egress Edge Node>

The node 3821 having received the frame from the node 3820 refers to an expansion tag corresponding FDB. 4321 to obtain END indicating that an output port for the node identifier 00.3821 in the forwarding tag 2500-2 is its own node (Step H-2). Then, transfer the frame to the expansion tag deletion circuit (Step H-3) to delete the forwarding tag 2500-2 at the expansion tag deletion circuit (Step H-4), refer to the FDB4201 to obtain the output port #2 for the destination MAC address MAC_#Z (Step H-5) and transfer the frame to the port #2 (Step H-6). As a result, the frame arrives at the host Z.

As described in the foregoing, also in the forwarding method in the Hierarchical network shown in Fig. 44 in which a node serves as a domain boundary, similarly to the case where a link serves as a domain boundary in Fig. 43, a frame can be transferred to an egress edge node as a destination with reference only to a top forwarding tag. As a result, reference is necessary only to the top forwarding tag to have an address region to be referred to at the time of forwarding remaining unchanged, so that a switching rate will not be affected by network scale. Moreover, the number of entries of an FDB can be drastically reduced to have scalability in terms of the amount of memory. Therefore, increase of the network scale is realized by a hierarchical network to have scalability.

<Compatibility with N-Stages Hierarchical network>

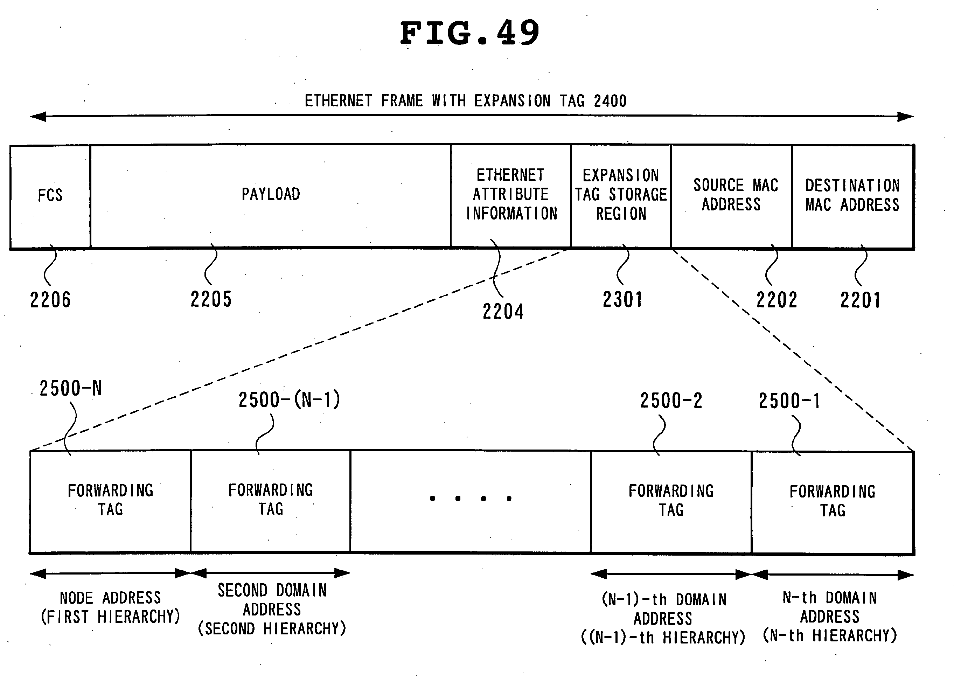

In the so far described modes of implementation, the description has been made with respect only to a two-stages hierarchical network, while in the present mode of implementation, a hierarchical network having an arbitrary number of stages not less than three will be described. An N-stages hierarchical network becomes compatible by storing the forwarding tags 2500-1 to 2500-N in the expansion tag storage region 2301 as shown in Fig. 49. In this case, store a domain identifier of an N-th stage hierarchy as the highest hierarchy in the top forwarding tag 2500-1, a domain identifier of an (N-1)th stage hierarchy in the second forwarding tag 2500-2, a domain identifier of a second stage hierarchy in an (N-1)th forwarding tag 2500-(N-1) and a node identifier of the first stage hierarchy in an N-th forwarding tag 2500-N.

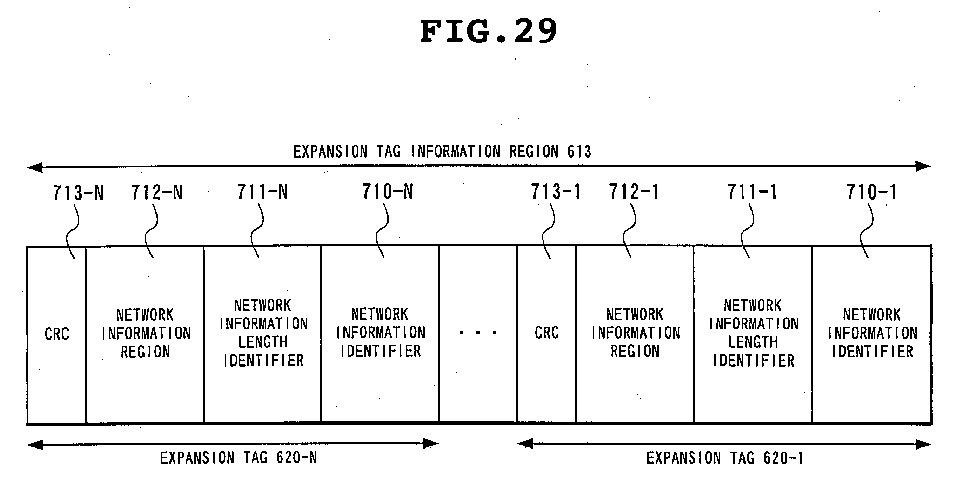

According to the frame format shown in Fig. 29, since an address type region is represented by four bits, the number of hierarchies can be 16 stages at the maximum and since an address region is represented by 12 bits, each hierarchy is capable of accommodating up to 4096 nodes. By changing division of the address type region 2901 and the address region 2902, the number of stages and the number of nodes in each hierarchy can be modified. When representing the address type region by three bits, for example, the number of hierarchies can be changed up to eight stages and since the address region is represented by 13 bits, each hierarchy is allowed to accommodate up to 8192 nodes.

Also in a hierarchical network having three or more stages, the forwarding method is the same as that described with respect to the preceding mode of implementation with reference to Figs. 43 and 44. More specifically, with reference to an address resolution table, an ingress edge node obtains a domain identifier and a node identifier of each hierarchy of an egress edge node and stores the same in a forwarding tag. Thereafter, the ingress edge node and a core node forward a domain in the highest hierarchy with reference to the top forwarding tag. Then, when arriving at a core node on the border of a destination domain, delete the top forwarding tag to forward the domain to a destination domain in one-lower hierarchy with reference to a new top forwarding tag. Then when arriving at a node bounding on the destination domain in the hierarchy, delete the forwarding tag. Upon reaching the lowest hierarchy by repeating the operation, forwarding with reference to the lowest stage forwarding tag in which the destination node identifier is stored enables a frame to reach the egress edge node as the destination.

<Structure of Ethernet(R) Frame with Expansion Tag>

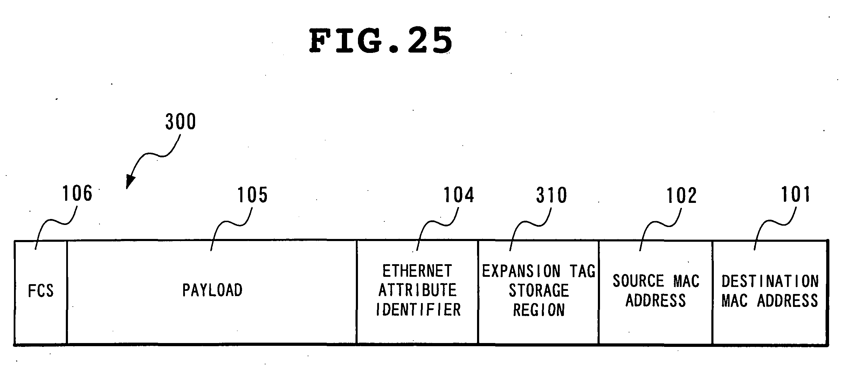

With reference to Figs. 25 to 30, other Ethernet(R) frame with an expansion tag according to the present invention will be described.

Fig. 25 shows a structure of an Ethernet(R) frame with an expansion tag 300 to which the Ethernet(R) frame 100 shown in Fig. 31 is converted.

The Ethernet(R) frame with an expansion tag 300 is formed of information regions of the destination MAC address 101, the source MAC address 102, an expansion tag storage region 310, the Ethernet(R) attribute identifier 104, the payload 105 and the FCS 106. Stored in the destination MAC address 101, the source MAC address 102, the Ethernet(R) attribute identifier 104 and the payload 105 is information succeeded from the Ethernet(R) frame 100 to be converted. Stored in the FCS 106 is error check information of the entire Ethernet(R) frame with an expansion tag 300.

In the expansion tag storage region 310, information about network control or network management is stored. The expansion tag storage region 310 is mapped into the storage region of the network separation identifier 103 of the Ethernet(R) frame 100. As a result, the width and position of the information region of the expansion tag storage region 310 will be the same as those of the network separation identifier 103.

Since the network separation identifier 103 has the above-described 16 bits representing the tag protocol identifier (TPID) in which a fixed value (0x8100) is accommodated, when setting the expansion tag storage region 310 and the network separation identifier 103 to have the same structure, discriminate them by changing the TPID value. In a network known to use the Ethernet(R) frame with an expansion tag 300, the TPID value may be freely set in the expansion tag storage region 310 to freely use a storage region of the network separation identifier 103.

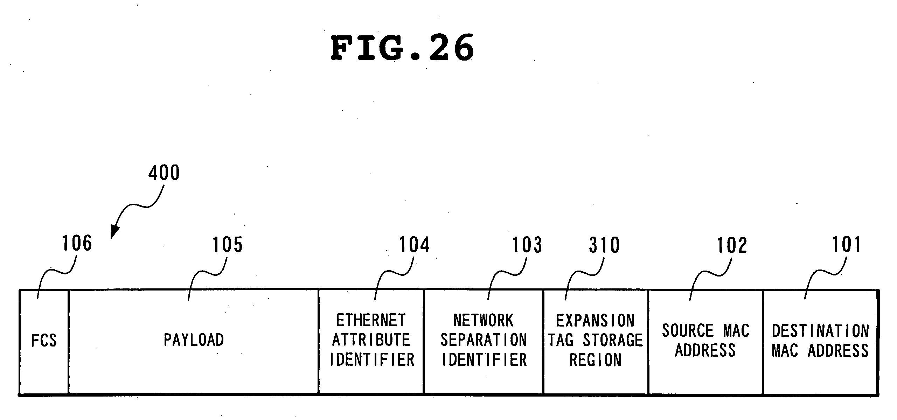

Fig. 26 shows a structure of an Ethernet(R) frame with an expansion tag 400 to which the Ethernet(R) frame 100 or the Ethernet(R) frame 100 with the network separation identification 103 omitted is converted.

The Ethernet(R) frame with an expansion tag 400 is formed of information regions of the destination MAC address 101, the source MAC address 102, the expansion tag storage region 310, the network separation identifier 103, the Ethernet(R) attribute identifier 104, the payload 105 and the FCS 106.

Stored in the destination MAC address 101, the source MAC address 102, the network separation identifier 103, the Ethernet(R) attribute identifier 104 and the payload 105 is a group of information succeeded from the applied Ethernet(R) frame 100. When the Ethernet(R) frame 100 to be converted fails to have the network separation identifier 103, the network separation identifier 103 is not always necessary. In the FCS 106, error check information about the whole of the Ethernet(R) frame with an expansion tag 400 is stored.

In the expansion tag storage region 310, information for network control or network management is stored. Although the expansion tag storage region 310 is placed between the source MAC address 102 and the Ethernet(R) attribute identifier 104 in Fig. 26, it may be located at any place before the payload 105 in the Ethernet(R) frame 100.

In the following, irrespectively of existence/non-existence of the network separation identifier 103 or position of the expansion tag storage region 310, a frame including the expansion tag storage region 310 which is to be converted from the Ethernet(R) frame 100 or the Ethernet(R) frame 100 with the network separation identifier 103 omitted will be referred to as the Ethernet(R) frame with an expansion tag 400.

Fig. 27 shows the structure of the frame with an expansion tag 500 to which the non-Ethernet(R) frame/packet 501 such as a frame including a multi-protocol label switch (MPLS) or frame relay (FR) or an IP packet. The frame with an expansion tag 500 is formed by inserting the expansion tag storage region 310 into a predetermined position in the frame/packet 501 to be converted. Stored in the expansion tag storage region 310 is information for network control or network management.

Stored in the expansion tag storage region 310 are all or any of network information including forwarding information such as a transfer destination node identifier or label information for the transfer to a destination node of the Ethernet(R) frames 300 and 400 with an expansion tag and the frame with an expansion tag 500, customer separation information for separating a network on a customer or a customer group basis, protection information indicative of failure information or protection path information for failure recovery, OAM&P (Operation, Administration, Management & Provisioning) information indicative of operation/management information, expansion information such as TTL (Time to Live) for limiting a time to live of an Ethernet(R) frame with an expansion tag in the network or a time stamp, and quality information such as delay, jitter and a packet loss rate. As to these network information, a plurality of the information can be added simultaneously even of the same kind.

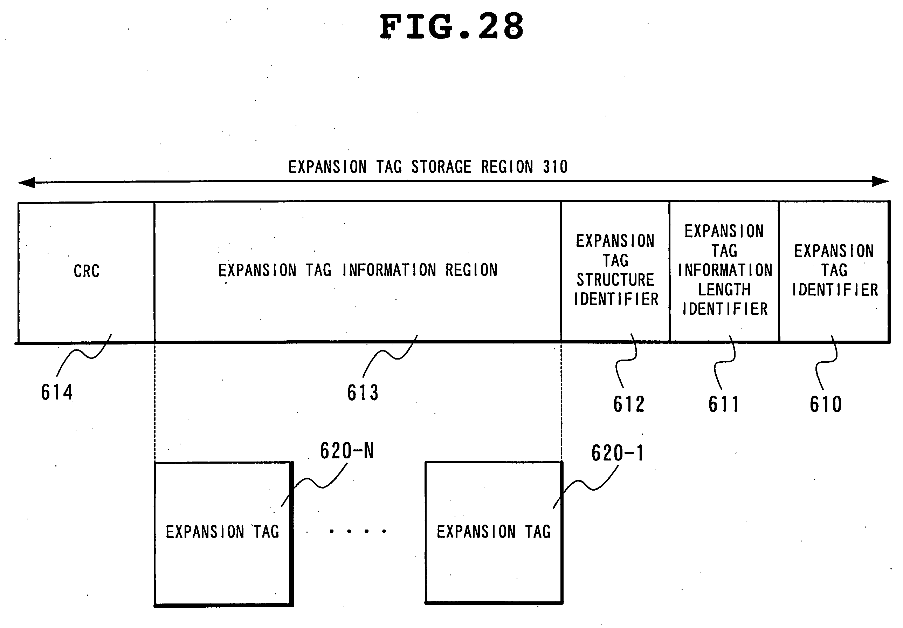

Fig. 28 to Fig. 30 show a detailed structure example of the expansion tag storage region 310.

The expansion tag storage region 310 shown in Fig. 28 is formed of an expansion tag information identifier 610, an expansion tag information length identifier 611, an expansion tag structure identifier 612, an expansion tag information region 613 and a CRC 614.

The expansion tag information identifier 610 is an identifier indicative of being the expansion tag storage region 310. When the Ethernet(R) frames 300 and 400 with an expansion tag and the frame with an expansion tag 500 are known in advance to have the expansion tag storage region 310, the expansion tag information identifier 610 is omissible.

The expansion tag information length identifier 611 indicates the length of the expansion tag storage region 310. Length indicated here may be the length of the entire expansion tag storage region 310 or may be lengths of only the expansion tag structure identifier 612, the expansion tag information region 613 and the CRC 614. When the length of the expansion tag storage region 310 is fixed in advance, or an explicit information length is stored in a network expansion tag 620 stored in the expansion tag information region 613 or information stored in the expansion tag information region 614 has a predetermined length, the expansion tag information length identifier 611 is omissible.

The expansion tag structure identifier 612 is an identifier indicative of the structure of the expansion tag storage region 310. When in the Ethernet(R) frames 300 and 400 with an expansion tag and the frame with an expansion tag 500, the structure of the expansion tag storage region 310 is known in advance, the expansion tag structure identifier 612 is omissible.

The expansion tag information region 613 is a region for accommodating the expansion tags 620-1, N in which network information is stored. The expansion tags 620-1, N can be accommodated in the plural.

The CRC 614 is a region for storing a CRC operation result of the expansion tag storage region 310. The CRC 614 can be omitted. When omitting the CRC 614, the value stored in the expansion tag information length identifier 611 needs not include the length of the CRC 614 region.

Fig. 29 shows a structure of the expansion tag 620 accommodated in the expansion tag information region 613.

The expansion tag 620 is formed of network information identifiers 710-1, N, network information length identifiers 711-1, N, network information regions 712-1, N and CRC 713-1, N.

The network information identifiers 710-1, N indicate a kind of network information stored in the network information regions 712-1, N among the above-described various kinds of network information.

Stored in network information length identifier 711-1, N is a total length of the network information identifier 710-1, N, the network information length identifier 711-1, N and the network information region 712-1, N or a length of the network information region 712-1, N. When the lengths of the network information identifier 710-1, N and the network information region 712-1, N are fixed, the network information length identifier 711-1, N is unnecessary.

Stored in the network information region 712-1, N is one information indicated by the network information identifier 710-1, N among the above-described various kinds of network information.

The CRC 713-1, N is a region for storing a CRC operation result of the expansion tag 620-1, N. The CRC 713-1, N may be omitted.

When a storage position in the expansion tag information region 613 is predetermined for each kind of network information, the network information identifier 710-1, N and the network information length identifier 711-1, N are omissible.

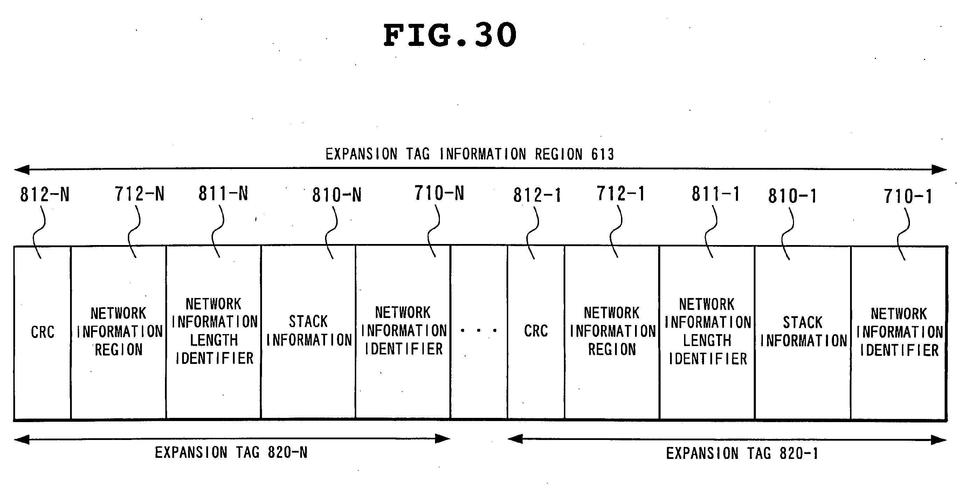

Fig. 30 shows a structure of other expansion tag 820-1, N accommodated in the expansion tag information region 613.

The expansion tag 820-1, N is formed of the network information identifier 710-1, N, stack information 810-1, N, a network information length identifier 811-1, N, the network information region 712-1, N and a CRC 812-1, N.

The network information identifier 710-1, N and the network information region 712-1, N are as described above.

The stack information 810-1, N is an identifier indicating whether subsequently to the expansion tag 820-1, N in question, the expansion tag 820-1, N exists or not. When the stack information 810-1, N is of a flag form, existence/non-existence of a subsequent expansion tag 820-1, N is described by a flag (e.g. with a subsequent expansion tag 820-1, N existing, set up an ON flag and otherwise set up an OFF flag). The stack information 810-1, N may be of a counter form in another case. Assuming that a stack position of the expansion tag 820-1, N is indicated using a descending counter (when stacked in N stages, the stack information 810-1 of the top expansion tag 820-1 indicates N and the stack information 810-N of the N-th expansion tag 820-N indicates 1), the expansion tag 820-1, N whose stack information 810-1, N indicates 1 will section the expansion tag information region 613. Conversely, assuming that a stack position of the expansion tag 820-1, N is indicated using an ascending counter (when stacked in N stages, the stack information 810-1 of the top expansion tag 820-1 indicates 1 and the stack information 810-N of the N-th expansion tag 820-N indicates N), the expansion tag 820-1, N whose stack information 810-1, N indicates 1 will section the expansion tag information region 613.

Stored in the network information length identifier 811-1, N is a total length of the network information identifier 710-1, N, the stack information 810-1, N, the network information length identifier 811-1, N and the network information region 712-1, N or a length of the network information region 712-1, N. When the network information region 712 has a fixed length, however, the network information length identifier 811 is unnecessary.

The CRC 812-1, N is a region for storing a CRC operation result of the expansion tag 820-1, N. The CRC 812-1, N may be omitted.

By thus newly adding an expansion tag, information that an existing Ethernet(R) frame lacks in can be added without changing a position of a destination MAC address and a source MAC address of the existing Ethernet(R) frame while maintaining connection therebetween.

Function of each means as a component of the node in the network of the present invention can be realized not only by hardware but also by loading a frame transfer program (application) 950 which executes the above-described function of each means into a memory of a computer processing device to control the computer processing device. The frame transfer program 950 is stored in a magnetic disc, a semiconductor memory or other recording medium and loaded into the computer processing device from the recording medium to control operation of the computer processing device, thereby realizing each of the above-described functions.

Although the present invention has been described with respect to the preferred modes of implementation in the foregoing, the present invention is not necessarily limited to the above-described modes of implementation and can be embodied as variation within the scope of its technical idea.

As described in the foregoing, according to the present invention, in an Ethernet(R) frame with an expansion tag and a node processing the same, a destination node identifier is stored in an expansion tag to conduct forwarding with reference to the expansion tag. Accordingly, because the destination node identifier has 12 bits, size of one entry is reduced as compared with forwarding using a 48-bit Ethernet(R) MAC address, thereby drastically reducing the amount of memory of an FDB.

Moreover, even with an Ethernet(R) frame having different destination MAC address and VLAN, as long as a destination node is the same, a destination node identifier accommodated in a forwarding expansion tag will be the same, so that reduction in the number of entries of an FDB leads to reduction in the amount of memory of the FDB. For the both reasons, the amount of memory of an FDB of a bridge can be drastically reduced.

Since the forwarding using an expansion tag according to the present invention enables drastic reduction in a reference region as compared with conventional forwarding destination search by complete matching of a 48-bit destination MAC address, search can be simplified/sped up to produce an effect of high-speed forwarding. Furthermore, since the Ethernet(R) frame with an expansion tag according to the present invention has position of a destination MAC address and a source MAC address to which an existing node refers unchanged, the existing node is allowed to transmit an Ethernet(R) frame with an expansion tag to have an effect of excellent affinity/connectability with the existing node.

Moreover, according to the present invention, forwarding with a plurality of hosts connected to an egress edge node represented by a node identifier of the egress edge node enables drastic reduction in the amount of memory of an FDB of a core node, in particular, while grouping a plurality of hosts belonging to the same customer on a customer ID basis at the egress edge node to determine an output port eliminates the need of MAC address learning of a connected host.

Moreover, in addition to the memory reduction effect of drastically reducing the amount of memory of an FDB produced because according to the forwarding in a hierarchical network, tag forwarding using a destination node identifier as a key is conducted to degenerate as many MAC address entries as the number of hosts connected to an edge node, scalability for network scale exists with respect to a switching rate because only a top forwarding tag is referred to have an address region to be referred at the time of forwarding unchanged. The number of entries of an FDB can be also drastically reduced to have scalability for network scale with respect to the amount of memory of an FDB as well.

By setting an expansion tag frame format to use, in the priority/tag type field, a part of priority values in the priority field of an existing VLAN tag as expansion tag type information, the expansion tag is allowed to transmit through the existing Ethernet(R) switch to have mutual connectability.

In addition, according to the present invention, with respect to a broadcast frame or an unknown unicast frame, a node identifier of an ingress edge node is stored in a broadcast forwarding tag, and in a core node, the frame is transferred based on the node identifier in the broadcast forwarding tag, so that while in a conventional node, MAC address search of an FDB is involved, no MAC address search is required in the present invention and an output port is determined based on a node identifier stored in a tag, thereby enabling drastic reduction in the amount of memory, as well as enabling high-speed forwarding.

Moreover, since the node of the present invention is capable of transferring a frame based on a tag even when an Ethernet(R) frame with an ordinary VLAN tag is applied, the amount of memory can be drastically reduced, while enabling high-speed forwarding.

Although the invention has been illustrated and described with respect to exemplary embodiment thereof, it should be understood by those skilled in the art that the foregoing and various other changes, omissions and additions may be made therein and thereto, without departing from the spirit and scope of the present invention.

**Claims**

1. A frame transfer method in a network for transferring a data frame sent from a source on the network to a predetermined destination, comprising the steps of:

    adding, to applied said data frame, an expansion tag containing information about forwarding to an egress edge node to said destination to make an expansion frame, and
    relaying said data frame based on said forwarding information of said added expansion tag to transfer the frame to said egress node by each node on said network.

2. A frame transfer method in a network for transferring a data frame sent from a source on the network to a predetermined destination, comprising the steps of:

adding, to applied said data frame, an expansion tag containing information about forwarding to an egress edge node to said destination and information about customers to which said source and said destination belong to make an expansion frame, and
relaying said data frame based on said forwarding information of said added expansion tag to transfer the frame to said egress node by each node on said network.

3. A frame transfer method in a network for transferring a data frame sent from a source on the network to a predetermined destination, comprising the steps of:

when applied said data frame is a frame to be broadcast, adding, to said data frame, an expansion tag containing information about forwarding of an ingress node having received said frame to make an expansion frame, and
relaying said data frame based on said forwarding information of said added expansion tag to transfer the frame to each node on said network by each node on said network.

4. The frame transfer method as set forth in claim 3, wherein
said frame to be broadcast is set to be a frame whose output destination node is unknown.

5. The frame transfer method in the network as set forth in one of claim 1 to claim 4, wherein
at an ingress node of the source of said data frame on said network, said expansion tag is generated based on network information of said data frame and generated said expansion tag is added to make said expansion frame.

6. The frame transfer method in the network as set forth in one of claim 1 to claim 5, wherein at said egress node on said network, said expansion tag is deleted from said expansion frame to make said data frame and said data frame is transferred to said transfer destination.

7. The frame transfer method in the network as set forth in one of claim 1 to claim 6, wherein
said data frame is an Ethernet(R) frame.

8. The frame transfer method in the network as set forth in claim 6, wherein
a VLAN tag of said Ethernet(R) frame is replaced by said expansion tag to make said expansion frame.

9. The frame transfer method in the network as set forth in claim 7, wherein
said expansion tag is inserted immediately after a source MAC address of said Ethernet(R) frame to make said expansion frame.

10. The frame transfer method in the network as set forth in claim 7, wherein
when said Ethernet(R) frame fails to have said VLAN tag, said expansion tag is added between a source MAC address and Ethernet(R) attribute information to make said expansion frame.

11. The frame transfer method in the network as set forth in one of claim 1 to claim 10, wherein
said forwarding information is identification information composed of identifier information of said egress node or label information for reaching said egress node.

12. The frame transfer method in the network as set forth in one of claim 1 to claim 11, wherein
said forwarding information is identification information composed of identifier information of said egress node or label information for reaching said egress node and additionally identifier information of said ingress node.

13. The frame transfer method in the network as set forth in claim 3, wherein
said forwarding information is identification information composed of identifier information of said ingress node.

14. A frame transfer method in a network for transferring a data frame sent from a source on the network to a predetermined destination, comprising the steps of:

EP 1 533 953 A1

applying a data frame with a VLAN tag added onto said network by an ingress node of said source, and broadcast-transferring said data frame along a broadcast path based on information stored in said VLAN tag to transfer the frame to said egress node by each node on said network.

**15.** The frame transfer method as set forth in claim 14, wherein
a range of tag values added to said data frame is divided into a range of a value for use as forwarding information of said expansion tag and a range of a value for use as said VLAN.

**16.** The frame transfer method as set forth in claim 15, wherein
when a value of a tag added to said data frame is within the range of a value for use as said expansion tag, transfer is conducted based on the forwarding information of said expansion tag and when the value is within the range of a value for use as said VLAN tag, broadcast-transfer is conducted based on the information of said VLAN tag.

**17.** The frame transfer method as set forth in claim 16, wherein
the range of a value for said VLAN tag is further divided into a plurality of ranges to set a broadcast path for each of the plurality of ranges.

**18.** The frame transfer method in the network as set forth in one of claim 1 to claim 17, wherein
a length of said expansion tag is 32 bits and a length of a storage region of said expansion tag is an integral multiple of 32 bits.

**19.** The frame transfer method in the network as set forth in one of claim 1 to claim 18, wherein
said ingress node in said network has a table which makes an address of said transfer destination and identification information of said egress node correspond with each other and a table which makes identification information of said egress node and output port information correspond with each other,
a core node in said network has a table which makes identification information of said egress node and output port information correspond with each other, and
said egress node has a table which makes an address of said transfer destination and output port information correspond with each other and a table which makes identification information of said egress node and output port information correspond with each other.

**20.** The frame transfer method in the network as set forth in one of claim 1 to claim 18, wherein
said ingress node in said network has a table which makes an address of said transfer destination and identification information of said egress node correspond with each other, a table which makes identification information of said egress node and output port information correspond with each other, and a table which makes identification information of said ingress node and one or a plurality of output port information correspond with each other,
a core node in said network has a table which makes identification information of said egress node and output port information correspond with each other and a table which makes identification information of said ingress node and one or a plurality of output port information correspond with each other, and
said egress node has a table which makes an address of said transfer destination and output port information correspond with each other, a table which makes identification information of said egress node and output port information correspond with each other and a table which makes identification information of said ingress node and one or a plurality of output port information correspond with each other.

**21.** The frame transfer method in the network as set forth in claim 20, wherein
identification information of said ingress node is an existing VLAN tag value or a group identifier obtained by grouping a part of existing VLAN tags or a group identifier obtained by grouping all the existing VLAN tags.

**22.** The frame transfer method in the network as set forth in one of claim 1 to claim 12, wherein
said ingress node in said network has a table which makes an address of said transfer destination, identification information of said egress node and customer information of said transfer destination correspond with each other and a table which makes identification information of said egress node and output port information correspond with each other,
a core node in said network has a table which makes identification information of said egress node and output port information correspond with each other, and
said egress node has a table which makes customer information of said transfer destination and output port

41

information correspond with each other and a table which makes identification information of said egress node and output port information correspond with each other.

23. A network in which a plurality of nodes are connected with each other by a link, wherein

a part of nodes in physical connection of the network are grouped into domains to make a higher-stage hierarchical network for the physical connection,

a part of domains in said hierarchical network are grouped into higher-order domains to make a higher-stage hierarchical network for said hierarchical network, and

structure of said hierarchical network has an arbitrary number of hierarchies.

24. The network as set forth in claim 23, wherein

located at a boundary between said domains is a link.

25. The network as set forth in claim 23, wherein

located at a boundary between said domains is a node.

26. The network as set forth in claim 23, wherein

located at a boundary between said domains are a link and a node together.

27. A frame transfer method in a network for transferring a data frame sent from a source on the network to a predetermined destination, comprising the steps of:

grouping a part of nodes in physical connection of the network into domains to make a higher-stage hierarchical network for the physical connection, and

grouping a part of domains in said hierarchical network into higher-order domains to make a higher-stage hierarchical network for said hierarchical network, thereby

forming said hierarchical network into a hierarchical network having an arbitrary number of hierarchies, and adding, to applied said data frame, an expansion tag containing information about forwarding to an egress edge node to said destination to make an expansion frame, and relaying said data frame based on said forwarding information of said added expansion tag to transfer the frame to said egress node by each node on said network.

28. The frame transfer method in the network as set forth in claim 27, wherein

in an ingress node of a source of said data frame on said hierarchical network, said forwarding information includes identifier information of said egress node and identifier information of a domain in each hierarchy to which the egress node belongs, or additionally identifier information of said ingress node and identifier information of a domain in each hierarchy to which the ingress node belongs, and said forwarding information is stored in a plurality of expansion tags to make an expansion frame by adding said plurality of expansion tags.

29. The frame transfer method in the network as set forth in claim 27 or claim 28, wherein

in each node on said hierarchical network, said data frame is relayed based on the forwarding information stored in an expansion tag at the top of said plurality of expansion tags added.

30. The frame transfer method in the network as set forth in claim 27 or claim 28, wherein

in each node on said hierarchical network, when a connection destination of an output port determined based on said top expansion tag is in a different domain, after deleting said top expansion tag, said data frame is relayed to the determined output port.

31. The frame transfer method in the network as set forth in one of claim 27 to claim 30, wherein

in said egress node on said hierarchical network, after deleting said expansion tag from said expansion frame to make said data frame, said data frame is transferred to said transfer destination.

32. The frame transfer method in the network as set forth in one of claim 27 to claim 31, wherein

said ingress node in said hierarchical network has a table which makes an address of said transfer destination, identification information of said egress node and identification information of each domain to which the egress node belongs correspond with each other, and a table which makes identification information of said egress node, identification information of a domain in each hierarchy to which the egress node belongs and output port information correspond with each other,

a core node in said hierarchical network has a table which makes identification information of said egress node, identification information of a domain in each hierarchy to which the egress node belongs and output port information correspond with each other, and

said egress node of said hierarchical network has a table which makes address information of said transfer destination and output port information correspond with each other, and a table which makes identification information of said egress node, identification information of a domain in each hierarchy to which the egress node belongs and output port information correspond with each other.

33. The frame transfer method in the network as set forth in one of claim 27 to claim 32, wherein

said core node in said hierarchical network, when a connection destination node of an output port is in a different domain, additionally has a special flag as output port information.

34. The frame transfer method in the network as set forth in one of claim 27 to claim 32, wherein each said node in said hierarchical network additionally has a special flag as output port information for node identification information of each node itself or for domain identification information of a domain to which the node itself belongs.

35. The frame transfer method as set forth in one of claim 27 to claim 34, wherein

said expansion tag is formed of an expansion tag identification region and an information storage region, and stored in the expansion tag identification region is at least one of:

1) a forwarding tag indication bit indicating whether in said expansion tag storage region there exists an expansion tag other than a forwarding information tag in which transfer information of a frame with an expansion tag is stored,
2) a region end point indication bit indicative of an expansion tag accommodated at the end of said expansion tag storage region,
3) a reservation bit prepared for future expansion of functions,
4) a VLAN tag/expansion tag indication bit for expressing an expansion tag,
5) a tag type display region for displaying a kind of expansion tag, and
6) TTL (Time to Live) for counting the number of hops of said frame with an expansion tag,

or additionally a frame control information storage region in which a check code for checking an error of said expansion tag is stored.

36. The frame transfer method as set forth in one of claim 27 to claim 34, wherein

said expansion tag is formed of an expansion tag identification region and an information storage region, and stored in the expansion tag identification region is at least one of:

1) a forwarding tag indication bit indicating whether in said expansion tag storage region there exists an expansion tag other than a forwarding information tag in which transfer information of a frame with an expansion tag is stored,
2) a region end point indication bit indicative of an expansion tag accommodated at the end of said expansion tag storage region, and
5) a tag type display region for displaying a kind of expansion tag.

37. The frame transfer method as set forth in one of claim 27 to claim 34, wherein

said expansion tag is formed of an expansion tag identification region and an information storage region, the expansion tag identification region is located in the first half of the expansion tag and has a length of 16 bits,

the information storage region is located in the first half of the expansion tag and has a length of 16 bits, and stored in the expansion tag identification region are:

1) a forwarding tag indication bit indicating whether in said expansion tag storage region there exists an expansion tag other than a forwarding information tag in which transfer information of a frame with an expansion tag is stored,
2) a region end point indication bit indicative of an expansion tag accommodated at the end of said expansion tag storage region,
3) a reservation bit prepared for future expansion of functions,
4) a VLAN tag/expansion tag indication bit whose value expressing an expansion tag is fixed to 1,

5) a 4- bit tag type display region for displaying a kind of expansion tag, and
6) 8-bit TTL (Time to Live) for counting the number of hops of said frame with an expansion tag,

said VLAN tag/expansion tag indication bit being stored at a position of the second to fourth bits from the top of the expansion tag identification region.

**38.** The frame transfer method as set forth in one of claim 27 to claim 34, wherein
said expansion tag is formed of an expansion tag identification region and an information storage region,
the expansion tag identification region is located in the first half of the expansion tag and has a length of 16 bits,
the information storage region is located in the first half of the expansion tag and has a length of 16 bits, and stored in the expansion tag identification region are:

1) a forwarding tag indication bit indicating whether in said expansion tag storage region there exists an expansion tag other than a forwarding information tag in which transfer information of a frame with an expansion tag is stored,
2) a region end point indication bit indicative of an expansion tag accommodated at the end of said expansion tag storage region,
3) a reservation bit prepared for future expansion of functions,
4) a VLAN tag/expansion tag indication bit whose value expressing an expansion tag is fixed to 1,
5) a 3-bit tag type display region for displaying a kind of expansion tag, and
6) 8-bit TTL (Time to Live) for counting the number of hops of said frame with an expansion tag,

said VLAN tag/expansion tag indication bit being stored at a position of the second to fifth bits from the top of the expansion tag identification region.

**39.** The frame transfer method as set forth in one of claim 27 to claim 34, wherein
when including said forwarding information, said expansion tag is formed of an expansion tag identification region and an information storage region, and
stored in the information storage region are an address type region for storing a kind of forwarding information tag in which transfer information of a frame is stored and an address region for storing transfer information of a frame.

**40.** The frame transfer method as set forth in one of claim 27 to claim 39, wherein
said expansion tag selectively includes:

protection information including failure information at the time of occurrence of a failure and protection path information for recovering from a failure,
quality information including a packet loss rate, frame arrival time into the network and bandwidth control information,
frame control information including a time to live of a frame in the network and information about error detection,
security information including information for ensuring reliability of a frame and secrecy at the time of setting up the network or at the time of changing a network structure, and
user expansion information including information arbitrarily defined by a user.

**41.** The frame transfer method as set forth in one of claim 27 to claim 39, wherein
said expansion tag selectively includes:

forwarding information for transferring a frame to an egress edge node to a destination,
broadcast forwarding information for transferring a frame to be broadcast to all the nodes on the network,
customer separation information for discriminating customers to which a destination and a source of a frame belong,
OAM & P information for operating and managing the network,
said protection information, said quality information, said frame control information, said security information and said user expansion information.

**42.** The frame transfer method as set forth in one of claim 27 to claim 39, wherein
said expansion tag includes

said forwarding information, said broadcast forwarding information, said customer separation information and said OAM&P information.

**43.** The frame transfer method as set forth in one of claim 27 to claim 39, wherein

said expansion tag is formed of an expansion tag identification region and an information storage region,

stored in said expansion tag identification region is 0x8100 which is a value of TPID prescribed by IEEE802.1Q or 0x9100 not prescribed or other value, and

said information storage region is formed of a priority region prescribed by IEEE802.1Q, a CFI region and an expansion tag information storage region for storing information of said expansion tag.

**44.** The frame transfer method as set forth in one of claim 27 to claim 39, wherein

said expansion tag is formed of an expansion tag identification region and an information storage region,

the expansion tag identification region is located in the first half of said expansion tag and has a length of 16 bits and the information storage region is located in the latter half of said expansion tag and has a length of 16 bits,

stored in said expansion tag identification region is 0x8100 which is a value of TPID prescribed by IEEE802.1Q or 0x9100 not prescribed or other value, and said information storage region is formed of a priority region prescribed by IEEE802.1Q, a CFI region and an expansion tag information storage region for storing information of said expansion tag.

**45.** The frame transfer method as set forth in claim 43 or claim 44, wherein

in the priority region of said information storage region, priority prescribed by IEEE802.1p is assigned to a part of priority values and to the remaining priority values, identification information of said expansion tag is assigned.

**46.** The frame transfer method as set forth in claim 43 or claim 44, wherein

in the priority region of said information storage region, priority prescribed by IEEE802.1p is assigned to four priority values and to the remaining four priority values, identification information of said expansion tag is assigned.

**47.** The frame transfer method as set forth in claim 43 or claim 44, wherein

in the priority region of said information storage region, priority prescribed by IEEE802.1p is assigned to the priority values of 111, 101, 011 and 010 and to the priority values of 001, 000, 110 and 100, identification information of said expansion tag is assigned.

**48.** The frame transfer method as set forth in claim 43 or claim 44, wherein

among said priority values of said information storage region, 001 is information for discriminating said forwarding tag, 000 is information for discriminating said broadcast forwarding tag, 110 is information for discriminating a customer separation tag, and 100 is information for discriminating an OAM&P tag.

**49.** A node in a network for transferring a data frame sent from a source on the network to a predetermined destination, comprising:

frame processing element which adds, to applied said data frame, an expansion tag containing information about forwarding to an egress edge node to said destination to make an expansion frame, and

switch element which receives said expansion frame to transfer the frame to a path to said egress node based on said forwarding information of said expansion tag.

**50.** A node in a network for transferring a data frame sent from a source on the network to a predetermined destination, comprising:

frame processing element which adds, to said data frame, an expansion tag containing information about forwarding of an ingress node which has received said frame to make an expansion frame, when applied said data frame is a frame to be broadcast, and

switch element which receives said expansion frame to transfer the frame to a path to each node on said network based on said forwarding information of said expansion tag.

**51.** A node in a network for transferring a data frame sent from a source on the network to a predetermined destination, comprising:

frame processing element which adds, to applied said data frame, an expansion tag containing information about forwarding to an egress edge node to said destination and customer information of said destination to make an expansion frame, and

switch element which receives said expansion frame to transfer the frame to a path to said egress node based on said forwarding information of said expansion tag.

52. A node in a network for transferring a data frame sent from a source on the network to a predetermined destination, comprising:

frame processing element which adds, to applied said data frame, a plurality of expansion tags containing information about forwarding to an egress edge node to said destination to make an expansion frame, and switch element which receives said expansion frame to transfer the frame to a path to said egress node based on said forwarding information of said expansion tag located at the top.

53. A node in a network for transferring a data frame sent from a source on the network to a predetermined destination, comprising:

when applied said data frame is a frame to be broadcast, adding a plurality of expansion tags containing information about forwarding of an ingress node having received said frame to make an expansion frame, and switch element which receives said expansion frame to transfer the frame to a path to each node on said network based on said forwarding information of said expansion tag located at the top.

54. A node in a network for transferring a data frame sent from a source on the network to a predetermined destination, comprising:

frame processing element which adds, to applied said data frame, a plurality of expansion tags containing information about forwarding to an egress edge node to said destination to make an expansion frame, and switch element which receives said expansion frame to transfer the frame to a path to said egress node based on said forwarding information of said expansion tag located at the top and when said forwarding information of said top expansion tag indicates that a node at the next hop belongs to a different domain, transfer the frame to a path to a deletion circuit.

55. A node in a network for transferring a data frame sent from a source on the network to a predetermined destination, comprising:

frame processing element which adds, to applied said data frame, a plurality of expansion tags containing information about forwarding to an egress edge node to said destination to make an expansion frame, and switch element which receives said expansion frame to transfer the frame to a path to said egress node based on said forwarding information of said expansion tag located at the top and when said forwarding information of said top expansion tag coincides with identification information of the node itself or of a domain to which the node itself belongs, transfer the frame to a path to a deletion circuit.

56. A node in a network for transferring a data frame sent from a source on the network to a predetermined destination, comprising:

switch element which receives an expansion frame with an expansion tag including information about forwarding to an egress edge node to said destination to transfer the frame to a path to said egress node based on said forwarding information of said expansion tag.

57. A node in a network for transferring a data frame sent from a source on the network to a predetermined destination, comprising:

switch element which receives an expansion frame with an expansion tag including forwarding information of an ingress edge node which has received said frame to transfer the frame to a path to each node on said network based on said forwarding information of said expansion tag.

58. A node in a network for transferring a data frame sent from a source on the network to a predetermined destination, comprising:

switch element which receives applied said data frame to transfer the frame to a path to each node on said network based on information of a VLAN tag of said data frame.

59. A node in a network for transferring a data frame sent from a source on the network to a predetermined destination, comprising:

switch element which, when receiving an expansion frame with an expansion tag including forwarding information of an ingress edge node which has received said frame, transfers the frame to a path to each node on said network based on said forwarding information of said expansion tag and when receiving a data frame with said VLAN tag added, transfers the frame to a path to each node on said network based on information of a VLAN tag of said data frame.

60. A node in a network for transferring a data frame sent from a source on the network to a predetermined destination, comprising:

switch element which receives an expansion frame with an expansion tag including information about forwarding to an egress edge node to said destination and customer information of said destination to transfer the frame to a path to said egress node based on said forwarding information of said expansion tag.

61. A node in a network for transferring a data frame sent from a source on the network to a predetermined destination, comprising:

switch element which receives an expansion frame with a plurality of expansion tags including information about forwarding to an egress edge node to said destination to transfer the frame to a path to said egress node based on said forwarding information of said expansion tag located at the top.

62. A node in a network for transferring a data frame sent from a source on the network to a predetermined destination, comprising:

switch element which receives an expansion frame with a plurality of expansion tags including forwarding information of an ingress edge node which has received said frame to transfer the frame to a path to each node on said network based on said forwarding information of said expansion tag located at the top.

63. A node in a network for transferring a data frame sent from a source on the network to a predetermined destination, comprising:

switch element which receives an expansion frame with a plurality of expansion tags including information about forwarding to an egress edge node to said destination to transfer the frame to a path to said egress node based on said forwarding information of said expansion tag located at the top and when said forwarding information of said top expansion tag indicates that a node at the next hop belongs to a different domain, transfer the frame to a path to a deletion circuit.

64. A node in a network for transferring a data frame sent from a source on the network to a predetermined destination, comprising:

switch element which receives an expansion frame with a plurality of expansion tags including information about forwarding to an egress edge node to said destination to transfer the frame to a path to said egress node based on said forwarding information of said expansion tag located at the top and when said forwarding information of said top expansion tag coincides with identification information of the node itself or of a domain to which the node itself belongs, transfer the frame to a path to a deletion circuit.

65. The node as set forth in one of claim 49 to claim 64, wherein
said frame processing element including,
a frame attribute detector for extracting frame attribute information of applied said data frame to an input port of the node,
an expansion tag generator for generating said expansion tag based on said frame attribute information, and
a frame converter for adding generated said expansion tag to applied said data frame to convert the frame into an expansion frame.

**66.** The node as set forth in claim 65, wherein
said expansion tag generator includes:

a correspondence information table in which information about correspondence between frame attribute information generated by said frame attribute detector and network information, and
an expansion tag generation unit for, after reading network information corresponding to said frame attribute information from said correspondence information table based on said frame attribute information, generating an expansion tag based on said network information.

**67.** The node as set forth in claim 65 or claim 66, wherein
said frame converter,
when a data frame applied to an input port of said node is an Ethernet(R) frame,
inserts said expansion tag after said destination MAC address.

**68.** The node as set forth in one of claim 65 to claim 67, wherein
said frame converter includes:

an expansion tag separation unit for, when said data frame is an Ethernet(R) frame, separating said expansion tag from said expansion frame transferred from said frame switch, and
an FCS calculation unit for recalculating an FCS of said Ethernet(R) frame transferred from the expansion tag separation unit to rewrite the FCS.

**69.** The node as set forth in one of claim 49 to claim 68, further comprising
an expansion tag deletion circuit for deleting said expansion tag included in said frame with an expansion tag to output the frame as a data frame.

**70.** The node as set forth in claim 69, wherein
said expansion tag deletion circuit includes:

an expansion tag separation unit for separating said expansion tag from said expansion frame, and
an FCS calculation unit for recalculating an FCS of said Ethernet(R) frame transferred from the expansion tag separation unit to rewrite the FCS.

**71.** The node as set forth in one of claim 49 to claim 70, wherein
said switch element including,
a frame forwarding unit for receiving an expansion frame transferred from said frame processing element to obtain output port information based on network information stored in an expansion tag in said expansion frame, and
a packet switch unit for receiving an expansion frame and said output port information transferred from said frame forwarding unit to output said frame with an expansion tag to a port as set forth in said output port information.

**72.** The node as set forth in claim 71, wherein
said frame forwarding unit includes:

an expansion tag information table indicative of correspondence between forwarding information in an expansion tag of said expansion frame received and output port information of said packet switch, and
a forwarding path search unit for extracting forwarding information from an expansion tag of said expansion frame received and referring to said expansion tag information table to obtain output port information from the forwarding information.

**73.** The node as set forth in claim 72, wherein
said forwarding information is identification information composed of identifier information of said egress node or label information for reaching said egress node.

**74.** The node as set forth in claim 72, wherein
said forwarding information is identification information composed of identifier information of said egress node or label information for reaching said egress node and additionally identifier information of said ingress node.

75. The node as set forth in claim 72, wherein
said forwarding information is identification information composed of identifier information of said ingress node.

76. The node as set forth in claim 72, wherein
said forwarding information is identification information composed of identifier information of said egress node and identifier information of a domain in each hierarchy to which the node belongs or label information for reaching said egress node.

77. The node as set forth in one of claim 49 to claim 76, wherein
said ingress node in said network has a table which makes an address of said transfer destination and identification information of said egress node correspond with each other and a table which makes identification information of said egress node and output port information correspond with each other,
a core node in said network has a table which makes identification information of said egress node and output port information correspond with each other, and
said egress node has a table which makes an address of said transfer destination and output port information correspond with each other and a table which makes identification information of said egress node and output port information correspond with each other.

78. The node as set forth in one of claim 49 to claim 76, wherein
said ingress node in said network has a table which makes an address of said transfer destination and identification information of said egress node correspond with each other, a table which makes identification information of said egress node and output port information correspond with each other, and a table which makes identification information of said ingress node and one or a plurality of output port information correspond with each other,
a core node in said network has a table which makes identification information of said egress node and output port information correspond with each other and a table which makes identification information of said ingress node and one or a plurality of output port information correspond with each other, and
said egress node has a table which makes an address of said transfer destination and output port information correspond with each other, a table which makes identification information of said egress node and output port information correspond with each other and a table which makes identification information of said ingress node and one or a plurality of output port information correspond with each other.

79. The node as set forth in one of claim 49 to claim 78, wherein
identification information of said ingress node is an existing VLAN tag value or a group identifier obtained by grouping a part of existing VLAN tags or a group identifier obtained by grouping all the existing VLAN tags.

80. The node as set forth in one of claim 49 to claim 77, wherein
said ingress node in said network has a table which makes an address of said transfer destination, identification information of said egress node and customer information of said transfer destination correspond with each other and a table which makes identification information of said egress node and output port information correspond with each other,
a core node in said network has a table which makes identification information of said egress node and output port information correspond with each other, and
said egress node has a table which makes customer information of said transfer destination and output port information correspond with each other and a table which makes identification information of said egress node and output port information correspond with each other.

81. The node as set forth in one of claim 49 to claim 77, wherein
said ingress node in said network has a table which makes an address of said transfer destination, identification information of said egress node and identification information of a domain in each hierarchy to which the node belongs correspond with each other, and a table which makes identification information of said egress node, identification information of a domain in each hierarchy to which the node belongs and output port information correspond with each other,
a core node in said network has a table which makes identification information of said egress node, identification information of a domain in each hierarchy to which the node belongs and output port information correspond with each other, and
said egress node has a table which makes an address of said transfer destination and output port information correspond with each other, and a table which makes identification information of said egress node, identification information of a domain in each hierarchy to which the node belongs and output port information correspond with each other.

82. In a network for transferring a data frame sent from a source on the network to a predetermined destination, a frame transfer program executed on a node in the network for controlling transfer of said data frame, comprising the functions of:

adding, to applied said data frame, an expansion tag containing information about forwarding to an egress edge node to said destination to make an expansion frame, and
receiving said expansion frame to transfer the frame to a path to said egress node based on said forwarding information of said expansion tag.

83. In a network for transferring a data frame sent from a source on the network to a predetermined destination, a frame transfer program executed on a node in the network for controlling transfer of said data frame, comprising the functions of:

when applied said data frame is a frame to be broadcast, adding an expansion tag containing information about forwarding of an ingress node having received said frame to make an expansion frame, and
receiving said expansion frame to transfer the frame to a path to each node on said network based on said forwarding information of said expansion tag.

84. In a network for transferring a data frame sent from a source on the network to a predetermined destination, a frame transfer program executed on a node in the network for controlling transfer of said data frame, comprising the functions of:

adding, to applied said data frame, an expansion tag containing information about forwarding to an egress edge node to said destination and customer information of said destination to make an expansion frame, and
receiving said expansion frame to transfer the frame to a path to said egress node based on said forwarding information of said expansion tag.

85. In a network for transferring a data frame sent from a source on the network to a predetermined destination, a frame transfer program executed on a node in the network for controlling transfer of said data frame, comprising the functions of:

adding, to applied said data frame, a plurality of expansion tags containing information about forwarding to an egress edge node to said destination to make an expansion frame, and
receiving said expansion frame to transfer the frame to a path to said egress node based on said forwarding information of said expansion tag located at the top.

86. In a network for transferring a data frame sent from a source on the network to a predetermined destination, a frame transfer program executed on a node in the network for controlling transfer of said data frame, comprising the functions of:

when applied said data frame is a frame to be broadcast, adding a plurality of expansion tags containing information about forwarding of an ingress node having received said frame to make an expansion frame, and
receiving said expansion frame to transfer the frame to a path to each node on said network based on said forwarding information of said expansion tag located at the top.

87. In a network for transferring a data frame sent from a source on the network to a predetermined destination, a frame transfer program executed on a node in the network for controlling transfer of said data frame, comprising the functions of:

adding, to applied said data frame, a plurality of expansion tags containing information about forwarding to an egress edge node to said destination to make an expansion frame,
receiving said expansion frame to transfer the frame to a path to said egress node based on said forwarding information of said expansion tag located at the top, and when said forwarding information of said top expansion tag indicates that a node at the next hop belongs to a different domain, transferring the frame to a path to a deletion circuit.

**88.** In a network for transferring a data frame sent from a source on the network to a predetermined destination, a frame transfer program executed on a node of the network for controlling transfer of said data frame, comprising the functions of:

adding, to applied said data frame, a plurality of expansion tags containing information about forwarding to an egress edge node to said destination to make an expansion frame,
receiving said expansion frame to transfer the frame to a path to said egress node based on said forwarding information of said expansion tag located at the top, and when said forwarding information of said top expansion tag coincides with identification information of the node itself or of a domain to which the node itself belongs, transferring the frame to a path to a deletion circuit.

**89.** In a network for transferring a data frame sent from a source on the network to a predetermined destination, a frame transfer program executed on a node in the network for controlling transfer of said data frame, comprising the function of:

receiving an expansion frame with an expansion tag including information about forwarding to an egress edge node to said destination added to applied said data frame to transfer the frame to a path to said egress node based on said forwarding information of said expansion tag.

**90.** In a network for transferring a data frame sent from a source on the network to a predetermined destination, a frame transfer program executed on a node in the network for controlling transfer of said data frame, comprising the function of:

receiving an expansion frame with an expansion tag including forwarding information of an ingress edge node which has received said frame added to applied said data frame to transfer the frame to a path to each node on said network based on said forwarding information of said expansion tag.

**91.** In a network for transferring a data frame sent from a source on the network to a predetermined destination, a frame transfer program executed on a node in the network for controlling transfer of said data frame, comprising the function of:

transferring the frame to a path to each node on said network based on information of a VLAN tag added to applied said data frame.

**92.** In a network for transferring a data frame sent from a source on the network to a predetermined destination, a frame transfer program executed on a node in the network for controlling transfer of said data frame, comprising the function of:

when receiving an expansion frame with an expansion tag including forwarding information of an ingress edge node which has received said frame added to applied said data frame, executing processing of transferring the frame to a path to each node on said network based on said forwarding information of said expansion tag and when receiving a data frame with said VLAN tag added, transferring the frame to a path to each node on said network based on information of the VLAN tag added to said data frame.

**93.** In a network for transferring a data frame sent from a source on the network to a predetermined destination, a frame transfer program executed on a node in the network for controlling transfer of said data frame, comprising the function of:

receiving an expansion frame with an expansion tag including information about forwarding to an egress edge node to said destination and customer information of said destination added to applied said data frame to transfer the frame to a path to said egress node based on said forwarding information of said expansion tag.

**94.** In a network for transferring a data frame sent from a source on the network to a predetermined destination, a frame transfer program executed on a node in the network for controlling transfer of said data frame, comprising the function of:

receiving an expansion frame with a plurality of expansion tags including information about forwarding to an egress edge node to said destination added to applied said data frame to transfer the frame to a path to said egress node based on said forwarding information of said expansion tag located at the top.

**95.** In a network for transferring a data frame sent from a source on the network to a predetermined destination, a frame transfer program executed on a node in the network for controlling transfer of said data frame, comprising the function of:

receiving an expansion frame with a plurality of expansion tags including forwarding information of an ingress edge node which has received said frame added to applied said data frame to transfer the frame to a path to each node on said network based on said forwarding information of said expansion tag located at the top.

**96.** In a network for transferring a data frame sent from a source on the network to a predetermined destination, a frame transfer program executed on a node in the network for controlling transfer of said data frame, comprising the function of:

receiving an expansion frame with a plurality of expansion tags including information about forwarding to an egress edge node to said destination added to applied said data frame to transfer the frame to a path to said egress node based on said forwarding information of said expansion tag located at the top and when said forwarding information of said top expansion tag indicates that a node at the next hop belongs to a different domain, transfer the frame to a path to a deletion circuit.

**97.** In a network for transferring a data frame sent from a source on the network to a predetermined destination, a frame transfer program executed on a node in the network for controlling transfer of said data frame, comprising the function of:

receiving an expansion frame with a plurality of expansion tags including information about forwarding to an egress edge node to said destination added to applied said data frame to transfer the frame to a path to said egress node based on said forwarding information of said expansion tag located at the top and when said forwarding information of said top expansion tag coincides with identification information of the node itself or of a domain to which the node itself belongs, transfer the frame to a path to a deletion circuit.

# FIG. 1

ETHERNET FRAME WITH VLAN TAG 2200

| FCS | PAYLOAD | ETHERNET ATTRIBUTE INFORMATION | VLAN TAG | SOURCE MAC ADDRESS | DESTINATION MAC ADDRESS |
|---|---|---|---|---|---|
| 2206 | 2205 | 2204 | 2203 | 2202 | 2201 |

# FIG. 2

EP 1 533 953 A1

ETHERNET FRAME WITH EXPANSION TAG 2300

| FCS | PAYLOAD | ETHERNET ATTRIBUTE INFORMATION | EXPANSION TAG STORAGE REGION | SOURCE MAC ADDRESS | DESTINATION MAC ADDRESS |
|---|---|---|---|---|---|
| 2206 | 2205 | 2204 | 2301 | 2202 | 2201 |

# FIG. 3

ETHERNET FRAME WITH EXPANSION TAG 2400

| FCS | PAYLOAD | ETHERNET ATTRIBUTE INFORMATION | VLAN TAG | EXPANSION TAG STORAGE REGION | SOURCE MAC ADDRESS | DESTINATION MAC ADDRESS |
|---|---|---|---|---|---|---|
| 2206 | 2205 | 2204 | 2203 | 2301 | 2202 | 2201 |

EP 1 533 953 A1

# FIG. 4

ETHERNET FRAME WITH EXPANSION TAG 2300

| FCS | PAYLOAD | ETHERNET ATTRIBUTE INFORMATION | EXPANSION TAG STORAGE REGION | SOURCE MAC ADDRESS | DESTINATION MAC ADDRESS |
|---|---|---|---|---|---|
| 2206 | 2205 | 2204 | 2301 | 2202 | 2201 |

2500

FORWARDING TAG

EXPANSION TAG

# FIG. 5

ETHERNET FRAME WITH EXPANSION TAG 2300

| FCS | PAYLOAD | ETHERNET ATTRIBUTE INFORMATION | EXPANSION TAG STORAGE REGION | SOURCE MAC ADDRESS | DESTINATION MAC ADDRESS |
|---|---|---|---|---|---|

2206  2205  2204  2301  2202  2201

2508  2507  2506  2505  2504  2503  2502  2501  2500

| BROADCAST FORWARDING TAG | USER EXPANSION TAG | SECURITY TAG | FRAME CONTROL TAG | QUALITY INFORMATION TAG | OAM & P TAG | PROTECTION TAG | CUSTOMER SEPARATION TAG | FORWARDING TAG |
|---|---|---|---|---|---|---|---|---|
| EXPANSION TAG | EXPANSION TAG | EXPANSION TAG | EXPANSION TAG | EXPANSION TAG | EXPANSION TAG | EXPANSION TAG | EXPANSION TAG | EXPANSION TAG |

# FIG. 6

EXPANSION TAG 2500-2508

| EXPANSION TAG INFORMATION REGION | EXPANSION TAG IDENTIFICATION REGION |
|---|---|

2602        2601

# FIG. 7

EXPANSION TAG 2500-2508

2602 — EXPANSION TAG INFORMATION REGION | EXPANSION TAG IDENTIFICATION REGION — 2601

FORWARDING TAG INDICATION BIT 2700

RESERVATION BIT 2702

2705

2704

FRAME CONTROL INFORMATION STORAGE REGION | TAG TYPE DISPLAY REGION

EXPANSION TAG IDENTIFICATION REGION 2601

2703
VLAN TAG/EXPANSION TAG INDICATION BIT

2701
REGION END POINT INDICATION BIT

EP 1 533 953 A1

FIG. 8 (PRIOR ART)

VLAN TAG2203

2801 2800

TCI TPID

| 0 | 0 | 0 | 0 | 0 | 0 | 0 | 0 | 1 | 0 | 0 | 0 | 0 | 0 | 0 | 1 |

TPID2800＝0×8100

RESERVATION FORWARDING TAG
BIT    INDICATION BIT
2702    2700

2705                          2704

| FRAME CONTROL INFORMATION STORAGE REGION | TAG TYPE DISPLAY REGION | 1 | | | |

EXPANSION TAG IDENTIFICATION REGION 2601

2703
VLAN TAG/EXPANSION TAG
INDICATION BIT

2701
REGION END POINT
INDICATION BIT

EP 1 533 953 A1

# FIG. 9

EXPANSION TAG 2500-2508

2602

| EXPANSION TAG INFORMATION REGION | EXPANSION TAG IDENTIFICATION REGION |
|---|---|

2601

2902

2901

| ADDRESS REGION | ADDRESS TYPE REGION |
|---|---|

EXPANSION TAG INFORMATION REGION 2602

# FIG.10

900

NODE

920

930

INPUT PORT
901-in

→

EXPANSION
TAG
PROCESSING
CIRCUIT

→

EXPANSION TAG FRAME
SWITCH

→

OUTPUT
PORT
901-out

921

INPUT PORT
902-in

→

EXPANSION
TAG
PROCESSING
CIRCUIT

→

→

OUTPUT
PORT
902-out

922

EXPANSION
TAG
PROCESSING
CIRCUIT

910

940

950

EXPANSION
TAG
GENERATION
CIRCUIT

EXPANSION
TAG
DELETION
CIRCUIT

FRAME
TRANSFER
PROGRAM

INPUT PORT
903-in

OUTPUT PORT
903-out

# FIG.11

# FIG.12

910,1010

EXPANSION TAG GENERATION CIRCUIT

1120

EXPANSION TAG
GENERATOR

1110                    1130                    1140

INPUT PORT →
903-in

| FRAME ATTRIBUTE EXTRACTOR | → | FRAME CONVERTER | → | FCS CALCULATOR | → |

922
EXPANSION TAG
PROCESSING
CIRCUIT

EP 1 533 953 A1

# FIG.13

1120

EXPANSION TAG GENERATOR

1210

FRAME ATTRIBUTE INFORMATION/NETWORK INFORMATION CORRESPONDENCE TABLE

1220

EXPANSION TAG GENERATION UNIT

FRAME ATTRIBUTE EXTRACTOR
1110

1211

1212

| FRAME ATTRIBUTE INFORMATION | NETWORK INFORMATION | | | |
|---|---|---|---|---|
| | NETWORK INFORMATION 1212-1 | NETWORK INFORMATION 1212-2 | · · · | NETWORK INFORMATION 1212-N |
| #A | NODE900-4 | #b | | #c |
| #B | NODE900-4 | | | |
| #C | NODE900-4 | | | |
| #D | NODE900-4 | #b | | #d |

FRAME CONVERTER
1130

EP 1 533 953 A1

# FIG.14

940,1040

EXPANSION TAG DELETION CIRCUIT

1310　　　　　1320　　　　　1330

EXPANSION
TAG FRAME → | EXPANSION<br>TAG<br>SEPARATOR | → | FRAME<br>CONVERTER | → | FCS<br>CALCULATOR | → OUTPUT
SWITCH                                                                              PORT
                                                                                    903-out

# FIG.15

EP 1 533 953 A1

# FIG.16

**EXPANSION TAG PROCESSOR** — 1420

1510 — **EXPANSION TAG INFORMATION TABLE**

1520 — **EXPANSION TAG RE-FORMING UNIT**

| INPUT NETWORK INFORMATION 1511 | COLLECTED INFORMATION 1512 | NETWORK PROCESSING INFORMATION 1513 | | |
|---|---|---|---|---|
| | | NETWORK INFORMATION TO BE DELETED 1513-1 | NETWORK INFORMATION TO BE REWRITTEN 1513-2 | NETWORK INFORMATION TO BE ADDED 1513-3 |
| #a | #d | OAM&P | QoS INFORMATION | OAM&P |
| | | | | |
| | | | | |

EXPANSION TAG SEPARATOR 1410

EXPANSION TAG FRAME FORMING UNIT 1430

# FIG.17

EXPANSION TAG FRAME SWITCH — 930

EXPANSION TAG FORWARDING UNIT — 1610
EXPANSION TAG FORWARDING UNIT — 1611
EXPANSION TAG FORWARDING UNIT — 1612

PACKET SWITCH — 1620

EXPANSION TAG PROCESSING CIRCUIT 920
EXPANSION TAG PROCESSING CIRCUIT 921
EXPANSION TAG PROCESSING CIRCUIT 922

OUTPUT PORT 901-out
OUTPUT PORT 902-out

EXPANSION TAG DELETION CIRCUIT 940

EP 1 533 953 A1

# FIG.18

1610,1611,1612

EXPANSION TAG FORWARDING UNIT

1720

EXPANSION TAG PATH
SEARCH UNIT

1710

EXPANSION TAG
PROCESSING CIRCUIT
920 TO 922

EXPANSION TAG
EXTRACTOR

PACKET SWITCH
1620

# FIG.19

1720

EXPANSION TAG PATH SEARCH UNIT

1810

1820

EXPANSION TAG CORRESPONDING FDB

1811                    1812

| INPUT FORWARDING INFORMATION | OUTPUT PORT INFORMATION |
|---|---|
| NODE IDENTIFIER | #3 |
|  |  |
|  |  |

FORWARDING PATH SEARCH UNIT

1710

EXPANSION TAG EXTRACTOR

# FIG.20

1610 TO 1612

EXPANSION TAG FORWARDING UNIT

EXPANSION TAG
FORWARDING PROCESSOR

2020

2010

EXPANSION TAG
PROCESSING
CIRCUIT
920 TO 922

EXPANSION TAG
EXTRACTOR

2030

EXPANSION TAG
FRAME FORMING UNIT

2040

FCS
CALCULATOR

PACKET
SWITCH
1620

EP 1 533 953 A1

# FIG.21

2020

EXPANSION TAG FORWARDING PROCESSOR

2110

2120

FORWARD/NETWORK INFORMATION TABLE

FORWARDING PROCESSOR

| INPUT FORWARDING INFORMATION 2111 | OUTPUT PORT INFORMATION 2112 | COLLECTED INFORMATION 2113 | NETWORK PROCESSING INFORMATION 2114 | | |
|---|---|---|---|---|---|
| | | | NETWORK INFORMATION TO BE DELETED 2114-1 | NETWORK INFORMATION TO BE REWRITTEN 2114-2 | NETWORK INFORMATION TO BE ADDED 2114-3 |
| NODE IDENTIFIER | #3 | | OAM&P | FORWARDING INFORMATION | OAM&P |
| | | | | | |
| | | | | | |

EXPANSION TAG EXTRACTOR 2010

EXPANSION TAG FRAME FORMING UNIT 2030

EP 1 533 953 A1

## FIG.22

3000

3001 FDB OF NODE200-1

| MAC ADDRESS | OUTPUT PORT |
|---|---|
| MAC_#A | #3 |
| MAC_#B | #3 |
| MAC_#C | #3 |
| MAC_#D | #3 |
| MAC_#X | #1 |

3002 FDB OF NODE200-2

| MAC ADDRESS | OUTPUT PORT |
|---|---|
| MAC_#A | #3 |
| MAC_#B | #3 |
| MAC_#C | #3 |
| MAC_#D | #3 |
| MAC_#X | #1 |

3003 FDB OF NODE200-3

| MAC ADDRESS | OUTPUT PORT |
|---|---|
| MAC_#A | #4 |
| MAC_#B | #4 |
| MAC_#C | #4 |
| MAC_#D | #4 |
| MAC_#X | #1 |

3004 FDB OF NODE200-4

| MAC ADDRESS | OUTPUT POTE |
|---|---|
| MAC_#A | #6 |
| MAC_#B | #5 |
| MAC_#C | #4 |
| MAC_#D | #3 |
| MAC_#X | #1 |

HOST X

200-1
NODE

200-8
NODE

200-2
NODE

200-9
NODE

200-5
NODE

200-7
NODE

200-3
NODE

200-6
NODE

200-4
NODE

HOST A    HOST B    HOST C    HOST D

74

# FIG.23

3101 ADDRESS RESOLUTION TABLE OF NODE900-1

| MAC ADDRESS | NODE IDENTIFIER |
|---|---|
| MAC_#A | 900-4 |
| MAC_#B | 900-4 |
| MAC_#C | 900-4 |
| MAC_#D | 900-4 |

(EQUIVALENT TO TABLE 1210)

3102 EXPANSION TAG CORRESPONDING FDB OF NODE900-1

| NODE IDENTIFIER | OUTPUT PORT |
|---|---|
| 900-4 | #3 |

(EQUIVALENT TO TABLE 1810)

3103 EXPANSION TAG CORRESPONDING FDB OF NODE900-2

| NODE IDENTIFIER | OUTPUT PORT |
|---|---|
| 900-4 | #3 |

(EQUIVALENT TO TABLE 1810)

3104 EXPANSION TAG CORRESPONDING FDB OF NODE900-3

| NODE IDENTIFIER | OUTPUT PORT |
|---|---|
| 900-4 | #4 |

(EQUIVALENT TO TABLE 1810)

3105 EXPANSION TAG CORRESPONDING FDB OF NODE900-4

| NODE IDENTIFIER | OUTPUT PORT |
|---|---|
| 900-4 | END |

3106 FDB OF NODE900-4

| MAC ADDRESS | OUTPUT PORT |
|---|---|
| MAC_#A | #6 |
| MAC_#B | #5 |
| MAC_#C | #4 |
| MAC_#D | #3 |

(EQUIVALENT TO TABLE 1810)

EP 1 533 953 A1

FIG.24

# FIG.25

| DESTINATION MAC ADDRESS | SOURCE MAC ADDRESS | EXPANSION TAG STORAGE REGION | ETHERNET ATTRIBUTE IDENTIFIER | PAYLOAD | FCS |
|---|---|---|---|---|---|
| 101 | 102 | 310 | 104 | 105 | 106 |

300

# FIG.26

| DESTINATION MAC ADDRESS | SOURCE MAC ADDRESS | EXPANSION TAG STORAGE REGION | NETWORK SEPARATION IDENTIFIER | ETHERNET ATTRIBUTE IDENTIFIER | PAYLOAD | FCS |
|---|---|---|---|---|---|---|
| 101 | 102 | 310 | 103 | 104 | 105 | 106 |

400

# FIG.27

501

501-2

501-1

| FRAME/PACKET | FRAME/PACKET |
|---|---|

| FRAME/PACKET | EXPANSION TAG STORAGE REGION | FRAME/PACKET |
|---|---|---|

501-2

310

501-1

500

# FIG.28

EXPANSION TAG STORAGE REGION 310

| CRC | EXPANSION TAG INFORMATION REGION | EXPANSION TAG STRUCTURE IDENTIFIER | EXPANSION TAG INFORMATION LENGTH IDENTIFIER | EXPANSION TAG IDENTIFIER |
|---|---|---|---|---|
| 614 | 613 | 612 | 611 | 610 |

620-N    620-1

| EXPANSION TAG | · · · · | EXPANSION TAG |
|---|---|---|

EP 1 533 953 A1

# FIG.29

EXPANSION TAG INFORMATION REGION 613

| 713-N | 712-N | 711-N | 710-N | | 713-1 | 712-1 | 711-1 | 710-1 |
|---|---|---|---|---|---|---|---|---|
| CRC | NETWORK INFORMATION REGION | NETWORK INFORMATION LENGTH IDENTIFIER | NETWORK INFORMATION IDENTIFIER | ・・・ | CRC | NETWORK INFORMATION REGION | NETWORK INFORMATION LENGTH IDENTIFIER | NETWORK INFORMATION IDENTIFIER |

EXPANSION TAG 620-N

EXPANSION TAG 620-1

EP 1 533 953 A1

# FIG.30

EP 1 533 953 A1

EXPANSION TAG INFORMATION REGION 613

| 812-N | 712-N | 811-N | 810-N | 710-N | | 812-1 | 712-1 | 811-1 | 810-1 | 710-1 |
|---|---|---|---|---|---|---|---|---|---|---|
| CRC | NETWORK INFORMATION REGION | NETWORK INFORMATION LENGTH IDENTIFIER | STACK INFORMATION | NETWORK INFORMATION IDENTIFIER | · · · | CRC | NETWORK INFORMATION REGION | NETWORK INFORMATION LENGTH IDENTIFIER | STACK INFORMATION | NETWORK INFORMATION IDENTIFIER |

EXPANSION TAG 820-N

EXPANSION TAG 820-1

# FIG.31

EP 1 533 953 A1

100

| FCS | PAYLOAD | ETHERNET ATTRIBUTE IDENTIFIER | NETWORK SEPARATION IDENTIFIER | SOURCE MAC ADDRESS | DESTINATION MAC ADDRESS |
|-----|---------|------|------|------|------|
| 106 | 105 | 104 | 103 | 102 | 101 |

# FIG.32 (PRIOR ART)

# FIG.33

INITIAL SETTING:
ADDRESS RESOLUTION OF DESTINATION MAC ADDRESS AND
DESTINATION NODE IDENTIFIER AND PROCESSING OF CORRELATING
DESTINATION NODE IDENTIFIER AND OUTPUT PORT

A-1

— ETHERNET FRAME ARRIVES

WITH REFERENCE TO ADDRESS RESOLUTION TABLE, TO OBTAIN
DESTINATION NODE IDENTIFIER CORRESPONDING
TO DESTINATION MAC ADDRESS OF RECEIVED FRAME

A-2

TO DESCRIBE DESTINATION NODE IDENTIFIER IN FORWARDING TAG

A-3

WITH REFERENCE TO EXPANSION TAG CORRESPONDING FDB, TO OBTAIN
OUTPUT PORT INFORMATION FOR DESTINATION NODE IDENTIFIER

A-4

TO TRANSFER FRAME TO OBTAINED OUTPUT PORT

A-5

# FIG.34

B-1

INITIAL SETTING:
PROCESSING OF CORRELATING DESTINATION NODE IDENTIFIER AND OUTPUT PORT

ETHERNET FRAME WITH
EXPANSION TAG ARRIVES

B-2

WITH REFERENCE TO EXPANSION TAG CORRESPONDING FDB,
TO OBTAIN OUTPUT PORT INFORMATION
FOR DESTINATION NODE IDENTIFIER

B-3

TO TRANSFER FRAME TO OBTAINED OUTPUT PORT

# FIG.35

C-1

INITIAL SETTING:
ADDRESS RESOLUTION OF DESTINATION MAC ADDRESS AND
DESTINATION NODE IDENTIFIER AND PROCESSING OF CORRELATING
DESTINATION NODE IDENTIFIER AND OUTPUT PORT

ETHERNET FRAME WITH
EXPANSION TAG ARRIVES

C-2

WITH REFERENCE TO EXPANSION TAG CORRESPONDING FDB,
TO RECOGNIZE THAT OUTPUT PORT FOR DESTINATION NODE
IDENTIFIER IS ITS OWN NODE

C-3

TO TRANSFER FRAME OF EXPANSION TAG DELETION CIRCUIT

C-4

EXPANSION TAG DELETION CIRCUIT DELETES FORWARDING TAG AND
OTHER EXPANSION TAG

C-5

WITH REFERENCE TO ORDINARY FDB, TO OBTAIN OUTPUT PORT
INFORMATION FOR DESTINATION MAC ADDRESS

C-6

TO TRANSFER FRAME TO OBTAINED OUTPUT PORT

# FIG.36

**3601** ADDRESS RESOLUTION TABLE OF NODE900-1

| MAC ADDRESS | CUSTOMER ID | NODE IDENTIFIER |
|---|---|---|
| MAC_#A | #a | 900-4 |
| MAC_#B | #a | 900-4 |
| MAC_#C | #a | 900-4 |
| MAC_#D | #a | 900-4 |

(EQUIVALENT TO TABLE 1210)

**3102** EXPANSION TAG CORRESPONDING FDB OF NODE900-1

| NODE IDENTIFIER | OUTPUT PORT |
|---|---|
| 900-4 | #3 |

(EQUIVALENT TO TABLE 1810)

**3103** EXPANSION TAG CORRESPONDING FDB OF NODE900-2

| NODE IDENTIFIER | OUTPUT PORT |
|---|---|
| 900-4 | #3 |

(EQUIVALENT TO TABLE 1810)

**3104** EXPANSION TAG CORRESPONDING FDB OF NODE900-3

| NODE IDENTIFIER | OUTPUT PORT |
|---|---|
| 900-4 | #4 |

(EQUIVALENT TO TABLE 1810)

**3105** EXPANSION TAG CORRESPONDING FDB OF NODE900-4

| NODE IDENTIFIER | OUTPUT PORT |
|---|---|
| 900-4 | END |

(EQUIVALENT TO TABLE 1810)

**3606** EXPANSION TAG CORRESPONDING FDB OF NODE900-4

| CUSTOMER ID | OUTPUT PORT |
|---|---|
| #a | #3 |

(EQUIVALENT TO TABLE 1810)

# FIG.37

INITIAL SETTING:
PROCESSING OF CORRELATING DESTINATION MAC ADDRESS
WITH CUSTOMER ID AND DESTINATION NODE IDENTIFIER AND
PROCESSING OF CORRELATING DESTINATION
NODE IDENTIFIER AND OUTPUT PORT

D-1

ETHERNET
FRAME ARRIVES

D-2

WITH REFERENCE TO ADDRESS RESOLUTION TABLE,
TO OBTAIN CUSTOMER ID AND DESTINATION NODE IDENTIFIER
CORRESPONDING TO DESTINATION MAC ADDRESS OF RECEIVED FRAME

D-3

TO DESCRIBE DESTINATION NODE IDENTIFIER IN FORWARDING TAG AND
CUSTOMER ID IN CUSTOMER SEPARATION TAG

D-4

WITH REFERENCE TO EXPANSION TAG CORRESPONDING FDB, TO OBTAIN
OUTPUT PORT INFORMATION FOR DESTINATION NODE IDENTIFIER

D-5

TO TRANSFER FRAME TO OBTAINED OUTPUT PORT

# FIG.38

INITIAL SETTING:
PROCESSING OF CORRELATING DESTINATION MAC ADDRESS
WITH CUSTOMER ID AND DESTINATION NODE IDENTIFIER AND
PROCESSING OF CORRELATING DESTINATION NODE
IDENTIFIER AND OUTPUT PORT

E-1

ETHERNET FRAME WITH
EXPANSION TAG ARRIVES

WITH REFERENCE TO EXPANSION TAG CORRESPONDING FDB, TO RECOGNIZE
THAT OUTPUT PORT FOR DESTINATION NODE IDENTIFIER IS ITS OWN NODE

E-2

WITH REFERENCE TO EXPANSION TAG CORRESPONDING FDB, TO OBTAIN
OUTPUT PORT FOR CUSTOMER ID TO TRANSFER FRAME AND OUTPUT PORT
INFORMATION TO EXPANSION TAG DELETION CIRCUIT

E-3

EXPANSION TAG DELETION CIRCUIT DELETES FORWARDING TAG AND
CUSTOMER SEPARATION TAG

E-4

TO TRANSFER FRAME TO OUTPUT PORT OBTAINED BY CUSTOMER ID

E-5

# FIG.39

3800 HIERARCHICAL NETWORK

3802

3830

3831  SECOND HIERARCHY NETWORK

3833

DOMAIN

DOMAIN

3832

DOMAIN

DOMAIN

3812

3816

3818

3820

3811

NODE

NODE

NODE

3810

NODE

3817

NODE

NODE

3821

NODE

NODE

3814

NODE

NODE

NODE

3801

3813

NODE

3819

3815

FIRST HIERARCHY NETWORK

EP 1 533 953 A1

# FIG.40

EP 1 533 953 A1

# FIG.41

ETHERNET FRAME WITH EXPANSION TAG 2400

| FCS | PAYLOAD | ETHERNET ATTRIBUTE INFORMATION | VLAN TAG | EXPANSION TAG STORAGE REGION | SOURCE MAC ADDRESS | DESTINATION MAC ADDRESS |
|---|---|---|---|---|---|---|
| 2206 | 2205 | 2204 | 2203 | 2301 | 2202 | 2201 |

| FORWARDING TAG | FORWARDING TAG |
|---|---|
| 2500-2 | 2500-1 |

EP 1 533 953 A1

# FIG.42

FORWARDING TAG 2500-2
↓
TO STORE NODE IDENTIFIER

FORWARDING TAG 2500-1
↓
TO STORE DOMAIN IDENTIFIER

EP 1 533 953 A1

# FIG.43

3800 HIERARCHICAL NETWORK

DOMAIN 3830 · 3810 · 3811 · 3812 · 3813 · 3814 · 3815 · 3816 · 3817 · 3818 · 3820 · 3821 · 3831 DOMAIN · 3832 DOMAIN · 3833 DOMAIN

HOST Y · HOST Z

**4200 ADDRESS RESOLUTION TABLE OF NODE3810**

| MAC ADDRESS | NODE IDENTIFIER | DOMAIN IDENTIFIER |
|---|---|---|
| MAC_#Z | 00.3821 | 01.3833 |

**4201 FDB OF NODE3821**

| MAC ADDRESS | OUTPUT PORT |
|---|---|
| MAC_#Z | #2 |

**4210 EXPANSION TAG CORRESPONDING FDB OF NODE3810**

| IDENTIFIER | OUTPUT PORT |
|---|---|
| 00.3810 | END |
| 01.3830 | #2,END |
| 01.3831 | #2 |
| 01.3832 | #2 |
| 01.3833 | #2 |

**4211 EXPANSION TAG CORRESPONDING FDB OF NODE3811**

| IDENTIFIER | OUTPUT PORT |
|---|---|
| 00.3810 | #1 |
| 01.3830 | #1,END |
| 01.3831 | #2 |
| 01.3832 | #2,NEXT |
| 01.3833 | #2 |

**4220 EXPANSION TAG CORRESPONDING FDB OF NODE3820**

| IDENTIFIER | OUTPUT PORT |
|---|---|
| 00.3821 | #5 |
| 01.3830 | #1 |
| 01.3831 | #1 |
| 01.3832 | #1,NEXT |
| 01.3833 | #5,END |

**4221 EXPANSION TAG CORRESPONDING FDB OF NODE3821**

| IDENTIFIER | OUTPUT PORT |
|---|---|
| 00.3821 | END |
| 01.3830 | #1 |
| 01.3831 | #1 |
| 01.3832 | #1 |
| 01.3833 | #1,END |

**4213 EXPANSION TAG CORRESPONDING FDB OF NODE3813**

| IDENTIFIER | OUTPUT PORT |
|---|---|
| 00.3830 | #1,NEXT |
| 01.3831 | #3,NEXT |
| 01.3832 | #2,END |
| 01.3833 | #2 |

**4214 EXPANSION TAG CORRESPONDING FDB OF NODE3814**

| IDENTIFIER | OUTPUT PORT |
|---|---|
| 00.3830 | #1 |
| 01.3831 | #1 |
| 01.3832 | #1,END |
| 01.3833 | #2 |

**4215 EXPANSION TAG CORRESPONDING FDB OF NODE3815**

| IDENTIFIER | OUTPUT PORT |
|---|---|
| 00.3830 | #1 |
| 01.3831 | #1 |
| 01.3832 | #1,END |
| 01.3833 | #3,NEXT |

EP 1 533 953 A1

FIG.44

3900 HIERARCHICAL NETWORK

DOMAIN 3930

DOMAIN 3931

3933 DOMAIN

3932 DOMAIN

NODE 3810, 3811, 3812, 3813, 3814, 3815, 3816, 3817, 3818, 3819, 3820, 3821

HOST Y

HOST Z

**4200 ADDRESS RESOLUTION TABLE OF NODE3810**

| MAC ADDRESS | NODE IDENTIFIER | DOMAIN IDENTIFIER |
|---|---|---|
| MAC_#Z | 00.3821 | 01.3933 |

**4201 FDB OF NODE3821**

| MAC ADDRESS | OUTPUT PORT |
|---|---|
| MAC_#Z | #2 |

**4310 EXPANSION TAG CORRESPONDING FDB OF NODE3810**

| IDENTIFIER | OUTPUT PORT |
|---|---|
| 00.3810 | END |
| 01.3930 | #2,END |
| 01.3931 | #2 |
| 01.3932 | #2 |
| 01.3933 | #2 |

**4311 EXPANSION TAG CORRESPONDING FDB OF NODE3811**

| IDENTIFIER | OUTPUT PORT |
|---|---|
| 00.3810 | #1 |
| 01.3930 | #1,END |
| 01.3931 | #2 |
| 01.3932 | #2 |
| 01.3933 | #2 |

**4320 EXPANSION TAG CORRESPONDING FDB OF NODE3820**

| IDENTIFIER | OUTPUT PORT |
|---|---|
| 00.3821 | #5 |
| 01.3930 | #1 |
| 01.3931 | #1 |
| 01.3932 | #1,NEXT |
| 01.3933 | #5,NEXT |

**4321 EXPANSION TAG CORRESPONDING FDB OF NODE3821**

| IDENTIFIER | OUTPUT PORT |
|---|---|
| 00.3821 | END |
| 01.3930 | #1 |
| 01.3931 | #1 |
| 01.3932 | #1 |
| 01.3933 | #1,END |

**4313 EXPANSION TAG CORRESPONDING FDB OF NODE3813**

| IDENTIFIER | OUTPUT PORT |
|---|---|
| 00.3810 | #1 |
| 01.3930 | #1,NEXT |
| 01.3931 | #3 |
| 01.3932 | #2,NEXT |
| 01.3933 | #2 |

**4314 EXPANSION TAG CORRESPONDING FDB OF NODE3814**

| IDENTIFIER | OUTPUT PORT |
|---|---|
| 00.3930 | #1 |
| 01.3931 | #1 |
| 01.3932 | #1,END |
| 01.3933 | #2 |

**4315 EXPANSION TAG CORRESPONDING FDB OF NODE3815**

| IDENTIFIER | OUTPUT PORT |
|---|---|
| 00.3930 | #1 |
| 01.3931 | #1 |
| 01.3932 | #1,END |
| 01.3933 | #3 |

EP 1 533 953 A1

# FIG.45

```
┌─────────────────────────────────────────────────────────┐   F-1
│                    INITIAL SETTING:                      │
│   ADDRESS RESOLUTION OF DESTINATION MAC ADDRESS AND      │
│   DESTINATION NODE IDENTIFIER/DOMAIN IDENTIFIER AND      │
│        PROCESSING OF CORRELATING DESTINATION NODE        │
│     IDENTIFIER/DOMAIN IDENTIFIER AND OUTPUT PORT         │
└─────────────────────────────────────────────────────────┘
                           │
                           │  ◀──────── ETHERNET FRAME ARRIVES
                           ▼
┌─────────────────────────────────────────────────────────┐   F-2
│     WITH REFERENCE TO ADDRESS RESOLUTION TABLE, TO OBTAIN│
│  DESTINATION NODE IDENTIFIER/DOMAIN IDENTIFIER CORRESPONDING│
│        TO DESTINATION MAC ADDRESS OF RECEIVED FRAME      │
└─────────────────────────────────────────────────────────┘
                           │
                           ▼
┌─────────────────────────────────────────────────────────┐   F-3
│  TO DESCRIBE DESTINATION NODE IDENTIFIER/DOMAIN IDENTIFIER│
│                   IN FORWARDING TAG                      │
└─────────────────────────────────────────────────────────┘
                           │
                           ▼
┌─────────────────────────────────────────────────────────┐   F-4
│      WITH REFERENCE TO EXPANSION TAG CORRESPONDING FDB,  │
│  TO OBTAIN OUTPUT PORT INFORMATION FOR DOMAIN IDENTIFIER OF│
│       DESTINATION STORED IN TOP FORWARDING TAG          │
└─────────────────────────────────────────────────────────┘
                           │
                           ▼
┌─────────────────────────────────────────────────────────┐   F-5
│                                                         │
│        TO TRANSFER FRAME TO OBTAINED OUTPUT PORT        │
│                                                         │
└─────────────────────────────────────────────────────────┘
```

# FIG.46

```
                                                                    G-1
┌─────────────────────────────────────────────────────────┐  ⌇
│                   INITIAL SETTING:                       │
│       PROCESSING OF CORRELATING DESTINATION NODE         │
│        IDENTIFIER/DOMAIN IDENTIFIER AND OUTPUT PORT      │
└─────────────────────────────────────────────────────────┘
                            │
                            │         ETHERNET FRAME WITH
                            ◄─────────  EXPANSION TAG ARRIVES
                            │
                            ▼
┌─────────────────────────────────────────────────────────┐
│                                                          │
│       WITH REFERENCE TO EXPANSION TAG CORRESPONDING FDB, │
│       TO OBTAIN OUTPUT PORT FOR DOMAIN IDENTIFIER OR NODE│     G-2
│            IDENTIFIER STORED IN TOP FORWARDING TAG,      │  ⌇
│          AS WELL AS OBTAINING NEXT WHEN DESTINATION DOMAIN│
│     STARTS AT NEXT HOP, AND WHEN ITS OWN NODE MATCHES DOMAIN│
│         IDENTIFIER OR NODE IDENTIFIER, OBTAINING END     │
└─────────────────────────────────────────────────────────┘
```

G-3

OBTAINED OUTPUT PORT
INFORMATION INCLUDES NEXT OR END?   NO

YES

G-4

TO TRANSFER FRAME AND OUTPUT PORT
TO EXPANSION TAG DELETION CIRCUIT

G-5

EXPANSION TAG DELETION CIRCUIT DELETES TOP FORWARDING TAG

G-6

TO TRANSFER FRAME TO OBTAINED OUTPUT PORT

# FIG.47

```
┌─────────────────────────────────────────────────────────┐   H-1
│  INITIAL SETTING:                                         │
│  ADDRESS RESOLUTION OF DESTINATION MAC ADDRESS AND        │
│  DESTINATION NODE IDENTIFIER/DOMAIN IDENTIFIER AND        │
│  PROCESSING OF CORRELATING DESTINATION NODE               │
│  IDENTIFIER/DOMAIN IDENTIFIER AND OUTPUT PORT             │
└─────────────────────────────────────────────────────────┘
                          │
                          │◄──── ETHERNET FRAME WITH
                          │      EXPANSION TAG ARRIVES
                          ▼
┌─────────────────────────────────────────────────────────┐   H-2
│  WITH REFERENCE TO EXPANSION TAG CORRESPONDING FDB,       │
│  TO OBTAIN END INDICATING THAT OUTPUT PORT                │
│  FOR NODE IDENTIFIER OF DESTINATION STORED                │
│  IN TOP FORWARDING TAG IS ITS OWN NODE                    │
└─────────────────────────────────────────────────────────┘
                          │
                          ▼
┌─────────────────────────────────────────────────────────┐   H-3
│  TO TRANSFER FRAME OF EXPANSION TAG DELETION CIRCUIT      │
└─────────────────────────────────────────────────────────┘
                          │
                          ▼
┌─────────────────────────────────────────────────────────┐   H-4
│  EXPANSION TAG DELETION CIRCUIT DELETES FORWARDING TAG    │
│  AND OTHER EXPANSION TAG                                  │
└─────────────────────────────────────────────────────────┘
                          │
                          ▼
┌─────────────────────────────────────────────────────────┐   H-5
│  WITH REFERENCE TO ORDINARY FDB, TO OBTAIN OUTPUT PORT    │
│  INFORMATION FOR DESTINATION MAC ADDRESS                  │
└─────────────────────────────────────────────────────────┘
                          │
                          ▼
┌─────────────────────────────────────────────────────────┐   H-6
│  TO TRANSFER FRAME TO OBTAINED OUTPUT PORT                │
└─────────────────────────────────────────────────────────┘
```

FIG.48

EP 1 533 953 A1

# FIG.49

ETHERNET FRAME WITH EXPANSION TAG 2400

| FCS | PAYLOAD | ETHERNET ATTRIBUTE INFORMATION | EXPANSION TAG STORAGE REGION | SOURCE MAC ADDRESS | DESTINATION MAC ADDRESS |
|---|---|---|---|---|---|

2206　　　　2205　　　　　　　　　2204　　　2301　　　2202　　2201

2500-N

2500-(N-1)

2500-2

2500-1

| FORWARDING TAG | FORWARDING TAG | . . . . | FORWARDING TAG | FORWARDING TAG |
|---|---|---|---|---|

← NODE ADDRESS (FIRST HIERARCHY) →

← SECOND DOMAIN ADDRESS (SECOND HIERARCHY) →

← (N-1)-th DOMAIN ADDRESS ((N-1)-th HIERARCHY) →

← N-th DOMAIN ADDRESS (N-th HIERARCHY) →

EP 1 533 953 A1

# FIG.50

VLAN TAG 2203

(a)

| TCI 2801 | | | TPID 2800 |
|---|---|---|---|
| VLAN-ID | CFI | Priority | TPID = 0x8100 |

2804  2803  2802

EXPANSION TAG 2500~2508

(b)

| EXPANSION TAG INFORMATION REGION 5002 | | | EXPANSION TAG IDENTIFICATION REGION 5001 |
|---|---|---|---|
| EXPANSION TAG INFORMATION FIELD | CFI | Priority/ TAG Type FIELD | TPID=0x8100 |

5004  2803  5003

EP 1 533 953 A1

# FIG.51

3000

**3001** FDB OF NODE200-1

| MAC ADDRESS | OUTPUT PORT |
|---|---|
| MAC_#A | #3 |
| MAC_#B | #3 |
| MAC_#C | #3 |
| MAC_#D | #3 |
| MAC_#X | #1 |

**3002** FDB OF NODE200-2

| MAC ADDRESS | OUTPUT PORT |
|---|---|
| MAC_#A | #3 |
| MAC_#B | #3 |
| MAC_#C | #3 |
| MAC_#D | #3 |
| MAC_#X | #1 |

**3003** FDB OF NODE200-3

| MAC ADDRESS | OUTPUT PORT |
|---|---|
| MAC_#A | #4 |
| MAC_#B | #4 |
| MAC_#C | #4 |
| MAC_#D | #4 |
| MAC_#X | #1 |

**3004** FDB OF NODE200-4

| MAC ADDRESS | OUTPUT PORT |
|---|---|
| MAC_#A | #6 |
| MAC_#B | #5 |
| MAC_#C | #4 |
| MAC_#D | #3 |
| MAC_#X | #1 |

HOST X

200-1, 200-2, 200-3, 200-4, 200-5, 200-6, 200-7, 200-8, 200-9

HOST Y   HOST A   HOST B   HOST C   HOST D

## FIG.52

3100

**3101** ADDRESS RESOLUTION TABLE OF NODE900-1

| MAC ADDRESS | NODE IDENTIFIER |
|---|---|
| MAC_#A | 900-4 |
| MAC_#B | 900-4 |
| MAC_#C | 900-4 |
| MAC_#D | 900-4 |

(EQUIVALENT TO TABLE 1210)

**5202** EXPANSION TAG CORRESPONDING BROADCAST FDB OF NODE900-1

| NODE IDENTIFIER | OUTPUT PORT |
|---|---|
| 900-1 | #2, #3 |

(EQUIVALENT TO TABLE 1810)

**5203** EXPANSION TAG CORRESPONDING BROADCAST FDB OF NODE900-2

| NODE IDENTIFIER | OUTPUT PORT |
|---|---|
| 900-1 | #2, #3, #4 |

(EQUIVALENT TO TABLE 1810)

**5204** EXPANSION TAG CORRESPONDING BROADCAST FDB OF NODE900-3

| NODE IDENTIFIER | OUTPUT PORT |
|---|---|
| 900-1 | #4 |

(EQUIVALENT TO TABLE 1810)

**5205** EXPANSION TAG CORRESPONDING BROADCAST FDB OF NODE900-4

| NODE IDENTIFIER | OUTPUT PORT |
|---|---|
| 900-1 | END |

(EQUIVALENT TO TABLE 1810)

**3106** FDB OF NODE900-4

| MAC ADDRESS | OUTPUT PORT |
|---|---|
| MAC_#A | #6 |
| MAC_#B | #5 |
| MAC_#C | #4 |
| MAC_#D | #3 |

(EQUIVALENT TO FDB 220)

EP 1 533 953 A1

# FIG.53

| | |
|---|---|
| INITIAL SETTING:<br>ADDRESS RESOLUTION PROCESSING OF DESTINATION MAC ADDRESS AND<br>DESTINATION NODE IDENTIFIER AND PROCESSING OF CORRELATING<br>DESTINATION OR SOURCE NODE IDENTIFIER<br>WITH OUTPUT PORT | I-1 |

← ETHERNET FRAME ARRIVES

| | |
|---|---|
| TO RECOGNIZE THAT FRAME IS BROADCAST FRAME<br>BECAUSE MAC__DA = 0xFFFF OR WITH REFERENCE<br>TO ADDRESS RESOLUTION TABLE, TO RECOGNIZE THAT FRAME IS<br>UNKNOWN UNICAST FRAME BECAUSE NO ENTRY EXITS | I-2 |

| | |
|---|---|
| TO DESCRIBE NODE IDENTIFIER OF ITS OWN NODE<br>IN BROADCAST FORWARDING TAG | I-3 |

| | |
|---|---|
| WITH REFERENCE TO EXPANSION TAG CORRESPONDING BROADCAST FDB,<br>TO OBTAIN OUTPUT PORT INFORMATION FOR DESTINATION NODE IDENTIFIER | I-4 |

| | |
|---|---|
| TO TRANSFER FRAME TO OBTAINED OUTPUT PORT | I-5 |

# FIG.54

J-1

INITIAL SETTING:
PROCESSING OF CORRELATING DESTINATION OR
SOURCE NODE IDENTIFIER WITH OUTPUT PORT

ETHERNET FRAME WITH
EXPANSION TAG ARRIVES

J-2

WITH REFERENCE TO EXPANSION TAG CORRESPONDING BROADCAST FDB,
TO OBTAIN OUTPUT PORT INFORMATION
FOR SOURCE NODE IDENTIFIER

J-3

TO TRANSFER FRAME TO OBTAINED OUTPUT PORT

# FIG.55

INITIAL SETTING:
ADDRESS RESOLUTION PROCESSING OF DESTINATION MAC ADDRESS AND
DESTINATION NODE IDENTIFIER AND
PROCESSING OF CORRELATING DESTINATION OR
SOURCE NODE IDENTIFIER WITH OUTPUT PORT

K-1

ETHERNET FRAME WITH
EXPANSION TAG ARRIVES

K-2

WITH REFERENCE TO EXPANSION TAG CORRESPONDING BROADCAST FDB,
TO RECOGNIZE THAT OUTPUT PORT
FOR SOURCE NODE IDENTIFIER IS ITS OWN NODE

K-3

TO TRANSFER FRAME TO EXPANSION TAG DELETION CIRCUIT

K-4

EXPANSION TAG DELETION CIRCUIT DELETES
BROADCAST FORWARDING TAG AND OTHER EXPANSION TAG

K-5

TO TRANSFER FRAME TO PORT OTHER THAN INPUT PORT

# FIG.56

3001 FDB OF NODE200-1

| MAC ADDRESS | VLAN TAG | OUTPUT PORT |
|---|---|---|
| MAC_#A | | #3 |
| MAC_#B | | #3 |
| MAC_#C | | #3 |
| MAC_#D | | #3 |
| MAC_#X | #z | #1 |
| MAC_#Y | #z | #3 |

(EQUIVALENT TO FDB220)

5203 EXPANSION TAG CORRESPONDING BROADCAST FDB OF NODE900-2

| NODE IDENTIFIER | OUTPUT PORT |
|---|---|
| 0 | #1,#2,#3,#4 |

(EQUIVALENT TO TABLE 1810)

5204 EXPANSION TAG CORRESPONDING BROADCAST FDB OF NODE900-3

| NODE IDENTIFIER | OUTPUT PORT |
|---|---|
| 0 | #1,#4 |

(EQUIVALENT TO TABLE 1810)

5205 EXPANSION TAG CORRESPONDING BROADCAST FDB OF NODE900-4

| NODE IDENTIFIER | OUTPUT PORT |
|---|---|
| 0 | #1 |

(EQUIVALENT TO TABLE 1810)

3106 FDB OF NODE900-4

| MAC ADDRESS | VLAN TAG | OUTPUT PORT |
|---|---|---|
| MAC_#A | | #6 |
| MAC_#B | | #5 |
| MAC_#C | | #4 |
| MAC_#D | | #3 |
| MAC_#X | #z | #1 |
| MAC_#Y | #z | #7 |

(EQUIVALENT TO FDB220)

EP 1 533 953 A1

108

## INTERNATIONAL SEARCH REPORT

| International application No. |
| --- |
| PCT/JP03/08918 |

**A. CLASSIFICATION OF SUBJECT MATTER**
Int.Cl⁷ H04L12/56

According to International Patent Classification (IPC) or to both national classification and IPC

**B. FIELDS SEARCHED**

Minimum documentation searched (classification system followed by classification symbols)
Int.Cl⁷ H04L12/56

Documentation searched other than minimum documentation to the extent that such documents are included in the fields searched
| | | | |
| --- | --- | --- | --- |
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-164937 A (Fujitsu Ltd.), 07 June, 2002 (07.06.02), Par. Nos. [0028] to [0052]; Figs. 1 to 17, 22 to 27 | 1-9,11-13, 18-22,49-53, 56-62,65-75, 77-86,89-95 |
| Y | (Family: none) | 14-17,27-48, 54,55,63,64, 76,87,88,96, 97 |
| X | JP 2001-320420 A (Fujitsu Ltd.), 16 November, 2001 (16.11.01), Par. Nos. [0021] to [0025]; Figs. 2, 3 & US 2001/0037401 A1    & EP 1130849 A2 | 10,23-26 |
| Y | | 27-48,54,55, 63,64,76,87, 88,96,97 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 September, 2003 (26.09.03) | 07 October, 2003 (07.10.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**EP 1 533 953 A1**

| | INTERNATIONAL SEARCH REPORT | International application No. |
|---|---|---|
| | | PCT/JP03/08918 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Yoshinobu KATO, 'VLAN Junansei ya Moshinraido ni Kufu Vender Dokuji Gijutsu mo Kage de Katsuyaku', Nikkei Communications, Vol.377, 04 November, 2002 (04.11.02), pages 88 to 97 | 14-17 |

Form PCT/ISA/210 (continuation of second sheet) (July 1998)

110